# EUROPEAN PATENT APPLICATION

(11) **EP 4 742 793 A1**
(43) Date of publication of application: **13.05.2026**
(21) Application number: 24916137.3
(22) Date of filing: 14.01.2024
(51) Int. Cl.: H04W 72/0446

(54) **UPLINK CHANNEL RESOURCE DETERMINATION METHOD AND APPARATUS, DEVICE, MEDIUM, AND PROGRAM PRODUCT**

(71) Applicant: GUANGDONG OPPO MOBILE TELECOMMUNICATIONS CORP., LTD., Dongguan, Guangdong 523860 (CN)
(72) Inventor: ZHANG, Yi, Dongguan, Guangdong 523860 (CN); XU, Jing, Dongguan, Guangdong 523860 (CN)
(74) Representative: Taor, Simon Edward William
(86) International application number: PCT/CN2024/072205
(87) International publication number: WO 2025/148073

(57) **Abstract**

Provided are methods, apparatuses, devices, a medium and a program product for determining an uplink channel resource, which belongs to the technical field of communication. The method is implemented by a terminal device and includes: determining a target uplink channel resource from uplink channel resources configured by a first configuration or a second configuration, the first configuration and the second configuration being used to configure related parameters of the uplink channel resources, the first configuration corresponding to a first type of time domain resources, and the second configuration corresponding to a second type of time domain resources, so that the terminal device can determine the uplink channel resource to be used by adopting different configurations for different types of time domain resources.

## Description

### TECHNICAL FIELD

The present disclosure relates to the technical field of communication, and more particularly to a method, apparatus, device, medium and program product for determining an uplink channel resource.

### BACKGROUND

A slot may include both SubBand non-overlapping Full Duplex (SBFD) symbols and non-SBFD symbols, and this type of slot is referred to as a mixed symbol slot.

However, for a terminal device, how to determine an uplink channel to be used in a mixed symbol slot is an urgent technical problem to be solved.

### SUMMARY

The present disclosure provides a method, apparatus, device, medium, and program product for determining an uplink channel resource. The technical solution includes the following contents.

According to an aspect of the embodiments of the present disclosure, a method of determining an uplink channel resource is provided, which is implemented by a terminal device and includes: determining a target uplink channel resource among uplink channel resources configured by a first configuration or a second configuration.

The first configuration and the second configuration are used to configure related parameters of the uplink channel resources, the first configuration corresponds to a first type of time domain resources, and the second configuration corresponds to a second type of time domain resources.

According to another aspect of the embodiments of the present disclosure, a method of determining an uplink channel resource is provided, which is implemented by a terminal device and includes: determining a target uplink channel resource from uplink channel resources configured by at least one of a first configuration, a second configuration, and a third configuration. The third configuration is used to configure related parameters of uplink channel resources in a time unit having a first type of time domain resources and a second type of time domain resources, the first configuration is used to configure related parameters of uplink channel resources in a time unit having (only) the first type of time domain resources, and the second configuration is used to configure related parameters of uplink channel resources in a time unit having (only) the second type of time domain resources.

According to another aspect of the embodiments of the present disclosure, a method of transmitting a resource configuration is provided, which is implemented by a network device and includes: transmitting a first configuration and a second configuration. The first configuration and the second configuration are used to configure related parameters of uplink channel resources, the first configuration corresponds to a first type of time domain resources, and the second configuration corresponds to a second type of time domain resources.

According to another aspect of the embodiments of the present disclosure, a method of transmitting a resource configuration is provided, which is implemented by a network device and includes: transmitting a third configuration. The third configuration is used to configure related parameters of uplink channel resources in a time unit having a first type of time domain resources and a second type of time domain resources.

According to another aspect of the embodiments of the present disclosure, an apparatus of determining an uplink channel resource is provided, which includes:
a determining module, configured to determine a target uplink channel resource from uplink channel resources configured by a first configuration or a second configuration, the first configuration and the second configuration being used to configure related parameters of the uplink channel resources, the first configuration corresponding to a first type of time domain resources, and the second configuration corresponding to a second type of time domain resources.

According to another aspect of the embodiments of the present disclosure, an apparatus of determining an uplink channel resource is provided, which includes:
a determining module, configured to determine a target uplink channel resource from uplink channel resources configured by at least one of a first configuration, a second configuration, and a third configuration, the third configuration being used to configure related parameters of uplink channel resources in a time unit having a first type of time domain resources and a second type of time domain resources, the first configuration being used to configure related parameters of uplink channel resources in a time unit having (only) the first type of time domain resources, and the second configuration being used to configure related parameters of uplink channel resources in a time unit having (only) the second type of time domain resources.

According to another aspect of the embodiments of the present disclosure, an apparatus of transmitting a resource configuration is provided, which includes:
a transmitting module, configured to transmit a first configuration and a second configuration, the first configuration and the second configuration being used to configure related parameters of uplink channel resources, the first configuration corresponding to a first type of time domain resources, and the second configuration corresponding to a second type of time domain resources.

According to another aspect of the embodiments of the present disclosure, an apparatus of transmitting a resource configuration is provided, which includes:
a transmitting module, configured to transmit a third configuration, the third configuration being used to configure related parameters of uplink channel resources in a time unit having a first type of time domain resources and a second type of time domain resources.

According to another aspect of the embodiment of the present disclosure, there is provided a terminal device, which includes:
a processor; a transceiver coupled to the processor; and a memory for storing executable instructions of the processor.

The processor is configured to load and execute the executable instructions to implement the method of determining an uplink channel resource as described above.

According to another aspect of the embodiments of the present disclosure, there is provided a network device, which includes:
a processor; a transceiver coupled to the processor; and a memory for storing executable instructions of the processor.

The processor is configured to load and execute the executable instructions to implement the method of transmitting a resource configuration as described in various aspects above.

According to another aspect of the embodiments of the present disclosure, there is provided a computer-readable storage medium which has stored at least one program that is loaded and executed by a processor to implement the method of determining an uplink channel resource or the method of transmitting a resource configuration as described in the above aspects.

According to another aspect of the embodiments of the present disclosure, there is provided a chip which includes a programmable logic circuit and/or program instructions for implementing the method of determining an uplink channel resource or the method of transmitting a resource configuration as described in the above aspects when the chip is run on a terminal device or a network device.

According to another aspect of the embodiments of the present disclosure, there is provided a computer program product or a computer program that includes computer instructions stored in a computer-readable storage medium from which the computer instructions are obtained by a processor and executed to implement the method of determining an uplink channel resource or the method of transmitting a resource configuration as described in the above aspects.

The technical solution provided by the embodiments of the present disclosure may include the following beneficial effects:
a target uplink channel resource may be determined from uplink channel resources configured by a first configuration or a second configuration, the first configuration and the second configuration are used to configure related parameters of the uplink channel resources, the first configuration corresponds to a first type of time domain resources, and the second configuration corresponds to a second type of time domain resources, so that a terminal device may adopt different configurations for different types of time domain resources to determine the uplink channel resource to be used.

### BRIEF DESCRIPTION OF THE DRAWINGS

In order to more clearly describe the technical solution in the embodiments of the present disclosure, the accompanying drawings needed in the description of the embodiments will be briefly introduced below. The accompanying drawings in the following description illustrate only some embodiments of the present disclosure, and for those skilled in the art, other accompanying drawings may be obtained from these accompanying drawings without creative work.
FIG. 1 shows a schematic diagram of subband non-overlapping full duplex according to the related art;
FIG. 2 shows a schematic diagram of a slot according to the related art;
FIG. 3 shows a schematic diagram of a method of determining a Physical Uplink Control Channel (PUCCH) resource according to the related art;
FIG. 4 shows a schematic diagram of a mobile communication system according to an exemplary embodiment of the present disclosure;
FIG. 5 shows a schematic diagram of determining a PUCCH resource according to an exemplary embodiment of the present disclosure;
FIG. 6 shows a flowchart of a method of determining an uplink channel resource according to an exemplary embodiment of the present disclosure;
FIG. 7 shows a schematic diagram of a PUCCH resource according to an exemplary embodiment of the present disclosure;
FIG. 8 shows a schematic diagram of configuration parameters according to an exemplary embodiment of the present disclosure;
FIG. 9 shows a schematic diagram of a PUCCH resource according to an exemplary embodiment of the present disclosure;
FIG. 10 shows a schematic diagram of configuration parameters according to an exemplary embodiment of the present disclosure;
FIG. 11 shows a schematic diagram of determining a target PUCCH resource according to an exemplary embodiment of the present disclosure;
FIG. 12 shows a schematic diagram of determining a target PUCCH resource according to an exemplary embodiment of the present disclosure;
FIG. 13 shows a schematic diagram of a PUCCH resource according to an exemplary embodiment of the present disclosure;
FIG. 14 shows a schematic diagram of a PUCCH Resource Indicator (PRI) indication field according to an exemplary embodiment of the present disclosure;
FIG. 15 shows a schematic diagram of a higher layer signaling indication according to an exemplary embodiment of the present disclosure;
FIG. 16 shows a schematic diagram of a PUCCH resource offset according to an exemplary embodiment of the present disclosure;
FIG. 17 shows a schematic diagram of a PUCCH resource offset according to an exemplary embodiment of the present disclosure;
FIG. 18 shows a schematic diagram of configuring PUCCH resources according to an exemplary embodiment of the present disclosure;
FIG. 19 shows a schematic diagram of determining a PUCCH resource according to an exemplary embodiment of the present disclosure;
FIG. 20 shows a schematic diagram of determining a PUCCH resource according to an exemplary embodiment of the present disclosure;
FIG. 21 shows a schematic diagram of determining PUCCH resources according to an exemplary embodiment of the present disclosure;
FIG. 22 shows a schematic diagram of determining a PUCCH resource according to an exemplary embodiment of the present disclosure;
FIG. 23 shows a schematic diagram of a Hybrid Automatic Repeat reQuest ACKnowledgment (HARQ-ACK) codebook according to an exemplary embodiment of the present disclosure;
FIG. 24 shows a flowchart of a method of determining an uplink channel resource according to an exemplary embodiment of the present disclosure;
FIG. 25 is a flowchart of a method of transmitting a resource configuration according to an exemplary embodiment of the present disclosure;
FIG. 26 shows a flowchart of a method of transmitting a resource configuration according to an exemplary embodiment of the present disclosure;
FIG. 27 shows a block diagram of an apparatus of determining an uplink channel resource according to an exemplary embodiment of the present disclosure;
FIG. 28 shows a block diagram of an apparatus of determining an uplink channel resource according to an exemplary embodiment of the present disclosure;
FIG. 29 shows a block diagram of an apparatus of transmitting a resource configuration according to an exemplary embodiment of the present disclosure;
FIG. 30 shows a block diagram of an apparatus of transmitting a resource configuration according to an exemplary embodiment of the present disclosure;
FIG. 31 is a schematic structural diagram of a terminal device according to an exemplary embodiment of the present disclosure; and
FIG. 32 shows a schematic structural diagram of a network device according to an exemplary embodiment of the present disclosure.

### DETAILED DESCRIPTION

In order to clarify the objective, technical solution, and advantages of the present disclosure, embodiments of the present disclosure will be described in further detail below with reference to the accompanying drawings. Exemplary embodiments will be described in detail herein, and the examples of these embodiments are shown in the accompanying drawings. When the drawings are described, the same numerals in different drawings denote the same or similar elements unless otherwise indicated. The implementations described in the following exemplary embodiments do not represent all the implementations matching the present disclosure. Instead, they are merely examples of the apparatuses and methods matching some aspects of the present disclosure as described in the appended claims.

The terminology used in the present disclosure is only for describing particular embodiments and is not intended to limit the present disclosure. As used in the present disclosure and the appended claims, the singular forms "a", "the", and "said" are also intended to include the plurality of forms unless the context clearly indicates otherwise. It should also be understood that the term "and/or" as used herein refers to and includes any or all possible combinations of one or more associated listed items.

It should be understood that although the terms "first", "second", "third", etc. may be employed in the present disclosure to describe various pieces of information, such information should not be limited to these terms. These terms are only used to distinguish the same type of information from each other. For example, first information may also be referred to as second information, and similarly, the second information may also be referred to as the first information without departing from the scope of the present disclosure. Depending on the context, the word "if" as used herein may be interpreted as "upon" or "when" or "in response to determining."

The technical solution described in some embodiments of the present disclosure may be applied to various communication systems, such as: a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolved NR system, an LTE (LTE-based access to unlicensed spectrum, LTE-U) system, an NR (NR-based access to unlicensed spectrum, NR-U) system, a Non-Terrestrial Networks (NTN) system, a Universal Mobile Telecommunication System (UMTS), Wireless Local Area Networks (WLAN), Wireless Fidelity (WiFi), a 5th-Generation communication (5G) system, a cellular Internet of Things (IoT) system, and a cellular passive IoT system, and may also be applied to a subsequent evolution system of the 5G NR system, and to 6G and subsequent evolution systems.

It should be understood that "5G" may also be referred to as "5G NR" or "NR" in some embodiments of the present disclosure.

It should be understood that in the description of the embodiments of the present disclosure, the term "correspond" may mean that there is a direct correspondence or indirect correspondence between the two, or may mean that there is an association relationship between the two, or may mean a relationship between indicating and being indicated, configuring and being configured, or the like.

In the embodiments of the present disclosure, "predefined" may be may be implemented by storing corresponding codes, tables in advance in devices (e.g., terminal devices and network devices), or other methods that can be used to indicate relevant information, and the present disclosure does not limit specific implementations thereof. For example, "predefined" may refer to defined in a protocol.

In the embodiments of the present disclosure, the "protocol" may refer to a standard protocol in the field of communication, and may include, for example, an LTE protocol, an NR protocol, and related protocols to be applied in a future communication system, which is not limited in the present disclosure.

### SubBand non-overlapping Full Duplex (SBFD) is introduced below:

In order to overcome the problems such as weak uplink (UL) coverage, large uplink delay and insufficient uplink capacity caused by less allocation of uplink resources in Time Division Duplexing (TDD) technology, SBFD technology is proposed. The SBFD technology is a technology by which data can be simultaneously transmitted and received on different subbands of a same subframe or a same slot or a same symbol. The SBFD technology is mainly used on a network device side, and a current state is still maintained on a user equipment (UE) side, that is, data is only transmitted or received in a same subframe/slot/symbol. The SBFD technology may also be referred to as a Cross Division Duplex (XDD) technology.

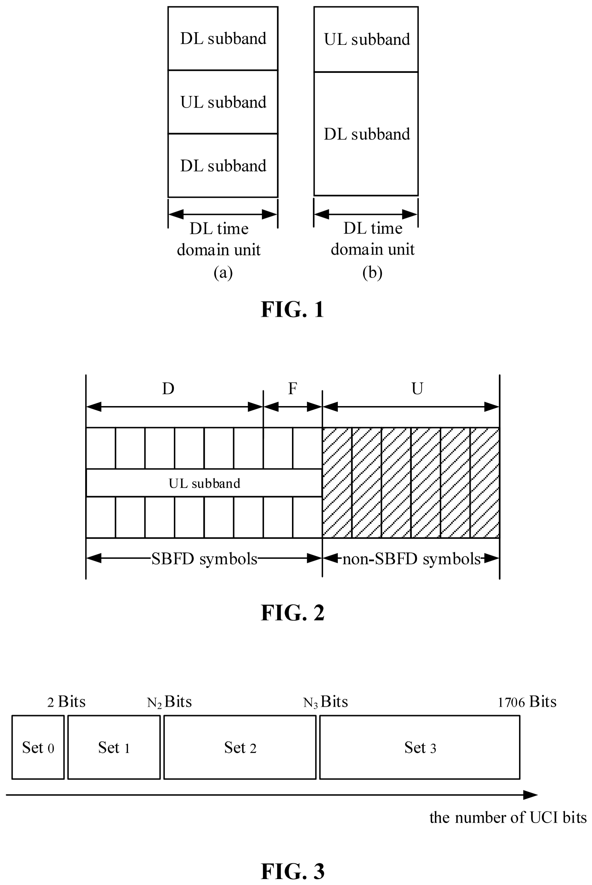

As an example, the SBFD technology is shown in FIG. 1, in which a part of a frequency domain resource corresponding to a downlink (DL) time domain unit is configured as an UL subband. As illustrated in FIG. 1 (a), an intermediate subband of a frequency domain resource corresponding to a downlink time domain unit is configured as an UL subband, or as illustrated in FIG. 1 (b), an upper subband of a frequency domain resource corresponding to a downlink time domain unit is configured as an UL subband.

In general, SBFD operations satisfy the following points:
- The SBFD operates within a TDD carrier;
- The SBFD scheme is designed within a single UL/DL BWP pair with aligned center frequency points;
- Within a TDD carrier, there is up to one UL subband in an SBFD symbol (including a legacy uplink symbol). This UL subband may be located in the middle of the TDD carrier, or may be located on one of two sides of the TDD carrier.

Furthermore, in order to be compatible with the TDD UL/DL configuration at the symbol level, a slot is allowed to include SBFD symbols and non-SBFD symbols. FIG. 2 shows a schematic diagram of a slot according to the related art. A part of the frequency domain resources corresponding to the downlink symbols (D) and the flexible symbols (F) of one slot shown in FIG. 2 is configured as an UL subband.

Since frequent switching between SBFD symbols and non-SBFD symbols may increase implementation complexity and transmission interruption, in order to avoid frequent switching of SBFD symbols, it is stipulated that a TDD period includes at most two transition points, one of which is from non-SBFD symbols to SBFD symbols and the other is from SBFD symbols to non-SBFD symbols. For example, a transition point is between the 8th symbol and the 9th symbol in FIG. 2. The transition point may be at the boundary of the slot or within the slot.

PUCCH resources are generally configured at the upper and lower edges of a channel bandwidth, so that fragmentation of uplink resources can be avoided, and other resources can be used to transmit a PUSCH. Therefore, if still according to the above configuration rule, the position of PUCCH resource configuration may be different for an SBFD slot (which includes SBFD symbols only) and a non-SBFD slot (which includes non-SBFD symbols only). In addition, for SBFD symbols and non-SBFD symbols, the interference encountered by the uplink is different, so the uplink quality varies. Additionally, the number and direction of transmit-receive antennas/panels may also differ. This also results in the need for different resources, power control parameters, and other such parameters for PUCCH transmissions on SBFD symbols and non-SBFD symbols. Consequently, whether separate configuration of resources, frequency hopping parameters, power control parameters, and spatial beam parameters for SBFD symbols and non-SBFD symbols is required, and how to implement such configuration, constitutes an urgent problem to be solved.

### Physical Uplink Control Channel (PUCCH) is introduced below.

PUCCH related parameters are configured by a PUCCH configuration (PUCCH-Config), and the PUCCH related parameters include at least one of the following:
- PUCCH resource set and PUCCH resources, including time domain resources (startingSymbolIndex, nrofSymbols), frequency domain resources (startingPRB, secondHopPRB), maximum code rate (maxCodeRate), Orthogonal Cover Code (OCC) parameters, etc.;
- Time domain offset configuration between a Physical Downlink Shared CHannel (PDSCH) to a HARQ-ACK: dl-DataToUL-ACK;
- Scheduling request configuration: SchedulingRequestResourceConfig;
- PUCCH spatial parameter configuration: PUCCH-SpatialRelationInfo;
- PUCCH power control configuration: PUCCH-PowerControl.

The method of determining a time domain position of a PUCCH is to determine the time domain position of the PUCCH based on a time domain position of a PDSCH and a time domain offset between the PDSCH and a HARQ-ACK.

FIG. 3 shows a schematic diagram of a method of determining a PUCCH resource according to the related art. K PUCCH resource sets are configured, K is a positive integer, and the range of the number of Uplink Control Information (UCI) bits carried by each PUCCH resource set is different. Taking K = 4 as an example, four PUCCH resource sets are configured: set 0, set 1, set 2, and set 3, and each set may include the same or different PUCCH formats. As shown in FIG. 3, the number of UCI bits carried by set 0 is 2 bits, the number of UCI bits carried by set 1 is N₂-2 bits, the number of UCI bits carried by set 2 is N₃-N₂ bits, the number of UCI bits carried by set 3 is 1706-N₃ bits, and N₂ and N₃ are preconfigured values. A PUCCH resource set may be determined from the K PUCCH resource sets according to the number of UCI bits to be transmitted, and then a PUCCH resource may be determined from the set according to a PUCCH Resource Indicator (PRI) indication in DCI.

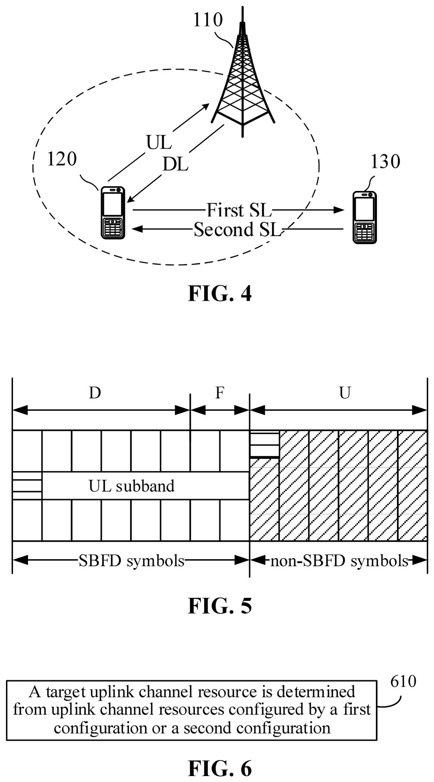

FIG. 4 is a schematic diagram of a mobile communication system according to an exemplary embodiment of the present disclosure. The mobile communication system includes a network device 110 and a terminal device 120, or may or may not include a terminal device 130, which is not limited in the present disclosure.

The network device 110 in the present disclosure provides wireless communication functions. The network device 110 includes but is not limited to: an Evolved Node B (eNB), a Radio Network Controller (RNC), a Node B (NB), a Base Station Controller (BSC), a Base Transceiver Station (BTS), a home base station (e.g., a Home Evolved Node B, or a Home Node B (HNB)), a baseband unit (BBU), an Access Point (AP) in a Wireless Fidelity (Wi-Fi) system, a wireless relay node, a wireless Backhaul node, a Transmission Point (TP), or a Transmission and Reception Point (TRP), or the like. The network device 110 may also be a Next Generation Node B (gNB) or Transmission Point (TRP or TP) in a 5th Generation (5G) mobile communication system; alternatively, one or a group of antenna panels (including multiple antenna panels) of a base station in a 5G system; alternatively, a network node constituting a gNB or TP, such as a BaseBand Unit (BBU) or Distributed Unit (DU), etc.; alternatively, a base station in a Beyond Fifth Generation (B5G) or 6th Generation (6G) mobile communication system, etc.; or a Core Network (CN), fronthaul, backhaul, Radio Access Network (RAN), network slice, etc.; or a serving cell, Primary Cell (PCell), Primary Secondary Cell (PSCell), Special Cell (SpCell), Secondary Cell (SCell), neighboring cell, etc., of a terminal device.

The terminal device 120 in the present disclosure is also referred to as a User Equipment (UE), an access terminal, a subscriber unit, a subscriber station, a mobile station, a mobile station, a remote station, a remote terminal, a mobile device, a user terminal, a terminal, a wireless communication device, a user agent, and a user apparatus. The terminal includes, but is not limited to, handheld devices, wearable devices, vehicle-mounted devices, and Internet of Things devices, such as mobile phones, tablets, electronic book readers, laptop computers, desktop computers, televisions, game consoles, Mobile Internet Devices (MID), Augmented Reality (AR) terminals, Virtual Reality (VR) terminals, Mixed Reality (MR) terminals, Extended Reality (XR) terminals, Baffle Reality (BR) terminals, Cinematic Reality (CR) terminals, Deceive Reality (DR) terminals, wearable devices, controllers, electronic tags, wireless terminals in Industrial Control, wireless terminals in Self-Driving, wireless terminals in Remote Medical Services, wireless terminals in the Smart Grid, wireless terminals in Transportation Safety, wireless terminals in Smart Cities, wireless terminals in Smart Homes, wireless terminals in Remote Medical Surgeries, cellular phones, cordless phones, Session Initiation Protocol (SIP) phones, Wireless Local Loop (WLL) stations, Personal Digital Assistants (PDA), Set-Top Boxes (STB), Customer Premise Equipment (CPE), etc.

In some embodiments, the network device 110 and the terminal device 120 may communicate with each other through air interface technology, such as a Uu interface.

For example, there are two communication scenarios between the network device 110 and the terminal device 120: an uplink communication scenario and a downlink communication scenario. The uplink communication, or called uplink transmission, is to send signals or data to the network device 110; and the downlink communication, or called downlink transmission, is to send signals or data to the terminal device 120.

In some embodiments, the terminal device 120 and the terminal device 130 may communicate with each other through air interface technology, such as a PC5 interface.

For example, there are two communication scenarios between the terminal device 120 and the terminal device 130: a first sidelink (SL) communication scenario and a second sidelink communication scenario. The first sidelink communication means that the terminal device 120 transmits a signal to the terminal device 130. The second side communication means that the terminal device 130 transmits a signal to the terminal device 120.

In some embodiments, the terminal device 120 and the terminal device 130 are both within the network coverage and located in the same cell, or the terminal device 120 and the terminal device 130 are both within the network coverage but located in different cells, or the terminal device 120 is within the network coverage but the terminal device 130 is outside the network coverage.

In some embodiments of the present disclosure, "NR" may also be referred to as a 5G NR system or a 5G system. The 5G mobile communication system may include Non-StandAlone (NSA) and/or StandAlone (SA) architectures.

The technical solution provided by the embodiments of the present disclosure may also be applied to Machine Type Communication (MTC), Long Term Evolution-Machine (LTE-M), Device to Device (D2D) network, Machine to Machine (M2M) network, Internet of Things (IoT) network, or other networks. The IoT network may include, for example, Internet of Vehicles. The communication modes in the Internet of Vehicles system are collectively referred to as vehicle to other devices (Vehicle to X (V2X), where X may represent anything), for example, the V2X may include: Vehicle to Vehicle (V2V) communication, Vehicle to Infrastructure (V2I) communication, Vehicle to Pedestrian (V2P) communication, Vehicle to Network (V2N) communication, and the like.

The mobile communication system provided by the embodiments of the present disclosure may be applied to, but is not limited to, at least one of the following communication scenarios: an uplink communication scenario, a downlink communication scenario, and a sidelink communication scenario.

For a slot including SBFD symbols and non-SBFD symbols, there are the following problems for determining an uplink channel resource, which is explained by taking the uplink channel resource as a PUCCH resource as an example.

Problem 1: a PUCCH resource is determined by first determining a slot in which a HARQ-ACK is located based on a indication of a time domain offset configuration between a PDSCH and the HARQ-ACK in DCI and then indicating a PUCCH resource in the slot through PRI in the DCI, therefore, when there are both SBFD symbols and non-SBFD symbols in the slot, it is not known whether the indicated PUCCH resource is located in the SBFD symbols or the non-SBFD symbols before reading the PRI in the DCI. FIG. 5 is a schematic diagram of determining a PUCCH resource according to an exemplary embodiment of the present disclosure. Assuming that PUCCH resource set 1 is configured for SBFD symbols and PUCCH resource set 2 is configured for non-SBFD symbols, the first horizontally filled square in FIG. 5 is the first PUCCH resource in PUCCH resource set 1, and the second horizontally filled square is the first PUCCH resource in PUCCH resource set 2. For a terminal device, if the value of the PRI in the received DCI is 000, which is used to indicate the first PUCCH resource, the terminal device cannot determine whether the first PUCCH resource belongs to PUCCH resource set 1 or PUCCH resource set 2. That is, both the PUCCH resource located in SBFD symbols and the PUCCH resource located in non-SBFD symbols may be the PUCCH resource intended to be indicated by the network device.

Problem 2: in a slot having both SBFD symbols and non-SBFD symbols, if only one PUCCH resource is supported for transmission, or at least two PUCCH resources overlap, and the terminal device multiplexes Uplink Control Information (UCI) carried in at least two PUCCH resources in the slot to one PUCCH for transmission, whether the multiplexed PUCCH is determined from the PUCCH resources corresponding to the SBFD symbols or from the PUCCH resources corresponding to the non-SBFD symbols is also a problem to be solved.

An embodiment of the present disclosure provides a method of determining an uplink channel resource. FIG. 6 is a flowchart of a method of determining an uplink channel resource according to an exemplary embodiment of the present disclosure, and the method is implemented by a terminal device and includes:
**Step 610:** a target uplink channel resource is determined from uplink channel resources configured by a first configuration or a second configuration.

The first configuration and the second configuration are used to configure related parameters of the uplink channel resources, the first configuration corresponds to a first type of time domain resources, and the second configuration corresponds to a second type of time domain resources.

In some embodiments, the uplink channel resources include at least one of followings: PUCCH resources, Physical Uplink Shared CHannel (PUSCH) resources, Physical Random Access Channel (PRACH) resources, and the like. This is not limited in the embodiments of the present application. Taking PUCCH resources as an example for illustration, the PUCCH resources in the embodiments of the present application are all exemplary examples and can be generalized to uplink channel resources.

In some embodiments, the time domain resources include at least one of the followings: symbols, symbol groups, slots, sub-slots, frames, and sub-frames. In the embodiments of the present disclosure, the specific type of the time domain resources is not limited, and generally, the first configuration corresponds to the first type of symbols, and the second configuration corresponds to the second type of symbols. For example, the first configuration corresponds to SBFD symbols, and the second configuration corresponds to non-SBFD symbols. The SBFD symbol is a symbol including at least one of an UL subband, a DL subband, and a guard band, and the non-SBFD symbol is a symbol excluding the above subbands.

In some embodiments, the method is applicable in a time unit including the first type of time domain resources and the second type of time domain resources. Exemplarily, the first type of time domain resources are SBFD symbols, the second type of time domain resources are non-SBFD symbols, and the time unit is a mixed symbol slot having both the SBFD symbols and the non-SBFD symbols.

In some embodiments, the first configuration is applicable to a slot in which all symbols are SBFD symbols, and also applicable to a slot in which some symbols are SBFD symbols. The second configuration is applicable to a slot in which all symbols are non-SBFD symbols, and also to a slot in which some symbols are non-SBFD symbols.

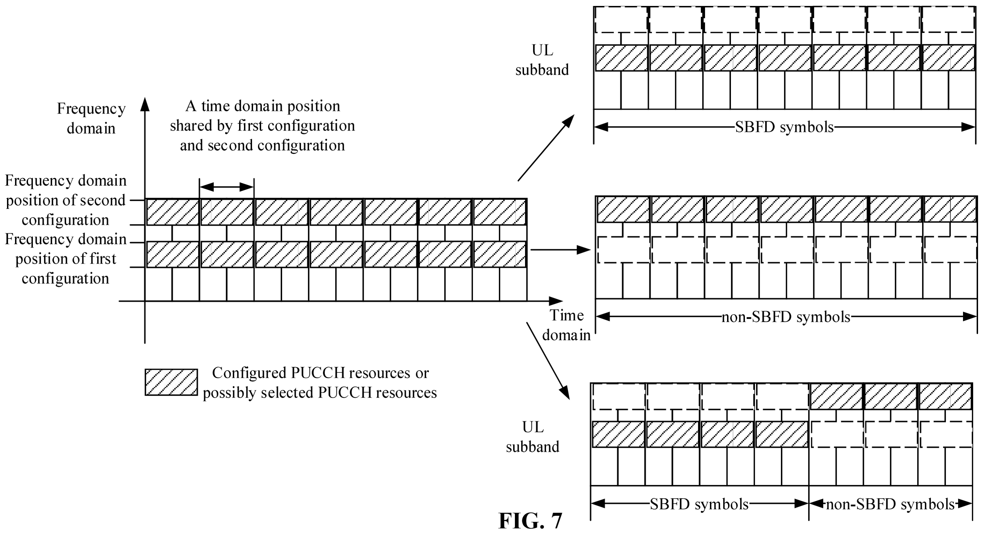

Taking the uplink channel resource as a PUCCH resource as an example, FIG. 7 shows a schematic diagram of a PUCCH resource according to an exemplary embodiment of the present disclosure. Taking a PUCCH resource in a slot as an example, seven PUCCH resources are configured in a frequency domain position of the first configuration, and each PUCCH resource occupies two symbols. Seven PUCCH resources are configured in a frequency domain position of the second configuration, and each PUCCH resource occupies two symbols. The first configuration and the second configuration share the same time domain resource parameters, and the first configuration and the second configuration may be applicable to a slot having different types of symbols. For example, when the slot includes only SBFD symbols, a target PUCCH resource is determined from the seven PUCCH resources located in the middle position configured by the first configuration; when the slot includes only non-SBFD symbols, the target PUCCH resource is determined from the seven PUCCH resources located at an upper position configured by the second configuration; and when the slot includes SBFD symbols and non-SBFD symbols, for example, the SBFD symbols occupy 8 symbols and the non-SBFD symbols occupy 6 symbols, the target PUCCH resource (one of the first 4 shaded blocks in the figure) is determined using the first configuration from the SBFD symbols; the target PUCCH resource (one of the last 3 shaded blocks in the figure) is determined using the second configuration from the non-SBFD symbols.

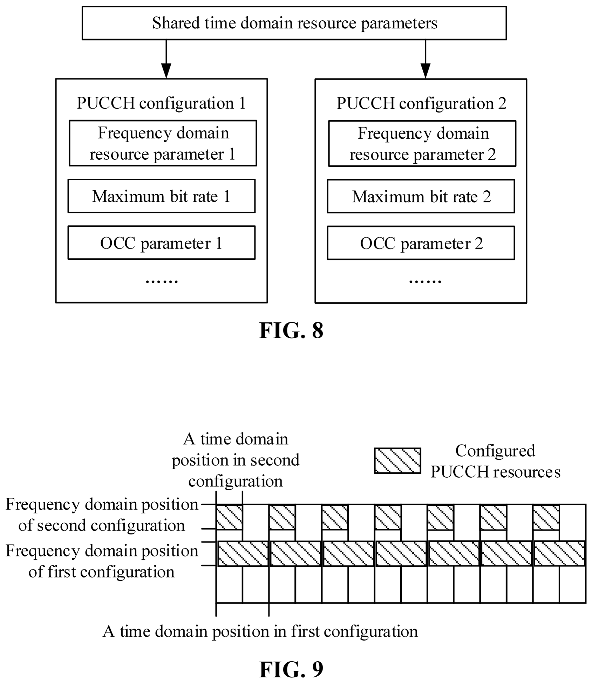

In some embodiments, the first configuration and the second configuration share time domain resource parameters. As illustrated in FIG. 8, the first configuration (PUCCH configuration 1) includes at least one of the following: frequency domain resource parameter 1, maximum code rate 1, OCC parameter 1, etc.; the second configuration (PUCCH configuration 2) includes at least one of the following: frequency domain resource parameter 2, maximum code rate 2, OCC parameter 2, and the like. In the embodiments of the present disclosure, as an example, the first configuration and the second configuration share time domain parameters as an example. The frequency domain resource parameter 1 and the frequency domain resource parameter 2 are generally different, the maximum code rate 1 and the maximum code rate 2 may be the same or different, and the OCC parameter 1 and the OCC parameter 2 may be the same or different. The shared time domain resource parameters may be additionally configured by a network device or specified by the communication protocol.

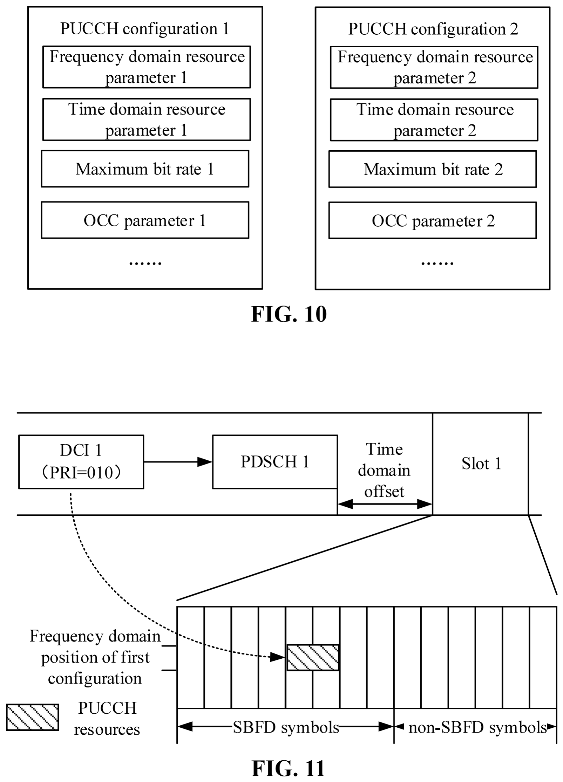

In some embodiments, the first configuration and the second configuration do not share time domain resource parameters. As illustrated in FIG. 9, there are 7 PUCCH resources in the frequency domain position of the first configuration, and each PUCCH resource occupies 2 symbols; and there are 7 PUCCH resources in the frequency domain position of the second configuation, and each PUCCH resource occupies one symbol. As shown in FIG. 10, the first configuration (PUCCH configuration 1) includes at least one of the following: frequency domain resource parameter 1, time domain resource parameter 1, maximum code rate 1, OCC parameter 1, and the like; and the second configuration (PUCCH configuration 2) includes at least one of frequency domain resource parameter 2, time domain resource parameter 2, maximum code rate 2, OCC parameter 2, and the like. Here, the time domain resource parameter 1 and the time domain resource parameter 2 are different. The first configuration or the second configuration may be a PUCCH configuration (PUCCH-Config), a PUCCH resource set (PUCCH-ResourceSet), or a PUCCH resource (PUCCH-resource).

In some embodiments, the target uplink channel resource is a resource for transmitting Uplink Control Information (UCI). In some embodiments, the target uplink channel resource is a resource for feeding back a HARQ-ACK or a HARQ-ACK codebook. In some embodiments, the target uplink channel resource is a resource for multiplexing at least two UCIs.

In some embodiments, at least one of the following methods may be used for determining a target uplink channel resource.

### Method 1: Determining a configuration (first configuration or second configuration) corresponding to the target uplink channel resource according to the time domain resource occupied by the target uplink channel resource.

For example, when the target uplink channel resource is a resource for feeding back a HARQ-ACK or a HARQ-ACK codebook, the resource index and/or the time domain resource of the target uplink channel resource are/is indicated by DCI, for example, by the PRI field of the DCI. After the time domain resource occupied by the target uplink channel resource is determined based on the DCI, the first configuration or the second configuration is selected and used according to the time domain resource occupied by the target uplink channel resource to determine other configuration parameters of the target uplink channel resource other than the time domain resource parameters.

In some embodiments, when the time domain resource occupied by the target uplink channel resource is the first type of time domain resource, the target uplink channel resource is determined from the uplink channel resources configured by the first configuration; and when the time domain resource occupied by the target uplink channel resource is the second type of time domain resource, the target uplink channel resource is determined from the uplink channel resources configured by the second configuration.

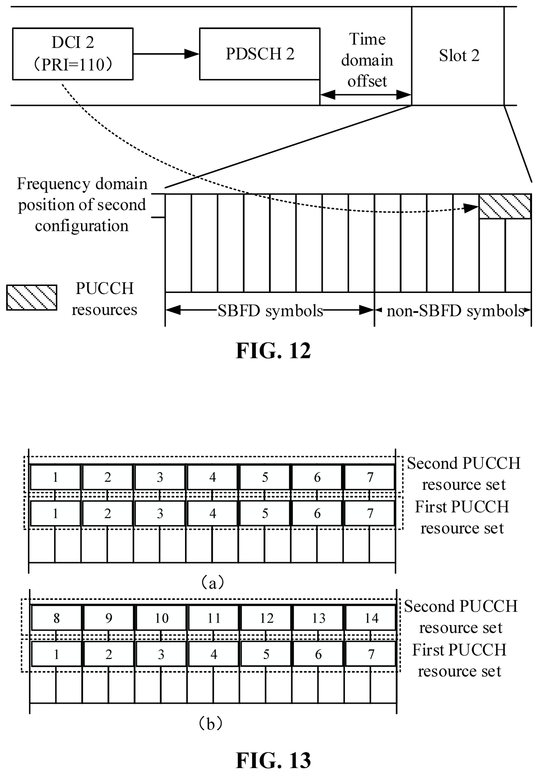

Taking the uplink channel resource as a PUCCH resource as an example, FIG. 11 shows a schematic diagram of determining a target PUCCH resource according to an exemplary embodiment of the present disclosure. Referring to FIG. 11, when the terminal device receives DCI 1, the DCI 1 schedules transmission of PDSCH 1. Based on the time domain offset from PDSCH to HARQ-ACK, slot 1 is determined after PDSCH 1. It is assumed that the value of PRI in DCI 1 is 010 which is used to indicate the third PUCCH resource, and the symbol occupied by the third PUCCH resource is an SBFD symbol which is associated with the first configuration, the terminal device determines the frequency domain parameter and other parameters (transmission power, maximum code rate, OCC parameters, etc.) of the third PUCCH resource based on the first configuration. Since the third PUCCH resource included among the PUCCH resources regardless of being configured by the first configuration or the second configuration occupies the same time domain symbol, the time domain type of symbols in which the target PUCCH resource is located is determined first, and then the first configuration or the second configuration is determined based on the time domain type of symbols. FIG. 12 is a schematic diagram of determining a target PUCCH resource according to an exemplary embodiment of the present disclosure. Referring to FIG. 12, when the terminal device receives DCI 2, the DCI 2 schedules transmission of PDSCH 2. Based on the time domain offset from PDSCH to HARQ-ACK, slot 2 is determined after PDSCH 2. It is assumed that the value of PRI in DCI 2 is 110 which is used to indicate the 7th PUCCH resource, and the symbol occupied by the 7th PUCCH resource is a non-SBFD symbol which is associated with the second configuration, the terminal device determines the frequency domain parameter and other parameters (transmission power, maximum code rate, OCC parameters, etc.) of the 7th PUCCH resource based on the second configuration.

The target uplink channel resource is determined from the first configuration or the second configuration based on the time domain resource occupied by the target uplink channel resource. This method is simple for implementation, which can reduce the calculation amount and the power consumption of the terminal device, and improve the efficiency of determining the target uplink channel resource.

In some embodiments, the related parameters of the target uplink channel resource which is determined based on the time domain resource occupied by the target uplink channel resource are determined according to the first configuration or the second configuration.

For example, if the target PUCCH resource occupies an SBFD symbol, all or part of the related parameters of the target PUCCH resource are determined according to the first configuration; and if the target PUCCH resource occupies a non-SBFD symbol, all or part of the related parameters of the target PUCCH resource are determined according to the second configuration.

In some embodiments, the related parameters include at least one of the following: frequency domain resource parameters (e.g., starting physical resource block (startingPRB), second hop physical resource block (secondHopPRB)), maximum code rate (maxCodeRate), Orthogonal Cover Code (OCC) parameters, and time domain resource parameters (e.g., starting symbol index (startingSymbolIndex), the number of symbols (nrofSymbols)).

In some embodiments, the associated uplink channel resources correspond to the same time domain resource configuration in the first configuration and the second configuration. In this case, the time domain resource parameters are not included in the related parameters determined according to the first configuration or the second configuration for the target uplink channel resource.

In some embodiments, the terminal device expects that the associated uplink channel resources correspond to the same time domain resource configuration in the first configuration and the second configuration; and/or the terminal device does not expect that the associated uplink channel resources correspond to different time domain resource configurations in the first configuration and the second configuration. That is, the time domain resource parameters are carried in the first configuration and the second configuration, and are identical in both the configurations.

In some embodiments, the time domain resource configurations corresponding to the associated uplink channel resource are not required to be configured separately, so that the corresponding time domain resources are the same regardless of which configuration is used by the terminal device for determining the uplink channel resources. In some embodiments, the time domain resource parameters shared by the first configuration and the second configuration are additionally configured by the network device, or specified in a communication protocol. In this case, the time domain resource parameters are not included in the first configuration and the second configuration.

In some embodiments, the associated uplink channel resources correspond to the same uplink channel resource ID; or, the associated uplink channel resources correspond to two uplink channel resource IDs having a pre-agreed correspondence relationship.

In some embodiments, as an example in which the uplink channel resources are PUCCH resources, the first PUCCH resource set is configured by the first configuration, and the second PUCCH resource set is configured by the second configuration. The first PUCCH resource set and the second PUCCH resource set are from different configurations, but there are associated PUCCH resources in the two PUCCH resource sets.

In some embodiments, uplink channel resources corresponding to the same uplink channel resource Identification (ID) are associated, and the uplink channel resources are described as PUCCH resources. As shown in part (a) of Figure 13, for example, among 7 PUCCH resources with PUCCH resource IDs 1, 2, 3, 4, 5, 6 and 7 in the first PUCCH resource set and 7 PUCCH resources with PUCCH resource IDs 1, 2, 3, 4, 5, 6 and 7 respectively in the second PUCCH resource set, both the PUCCH resources corresponding to the PUCCH resource ID 1 are associated PUCCH resources, and both the PUCCH resources corresponding to the PUCCH resource ID 2 are associated PUCCH resources, and so on.

Alternatively, uplink channel resources which correspond to two uplink channel resource IDs with a pre-agreed correspondence relationship are associated, and the uplink channel resources are described as PUCCH resources. As shown in part (b) of Figure 13, for example, for 7 PUCCH resources with PUCCH resource IDs 1, 2, 3, 4, 5, 6 and 7 in the first PUCCH resource set and 7 PUCCH resources with PUCCH resource IDs 8, 9, 10, 11, 12, 13 and 14 in the second PUCCH resource set, it is agreed in advance that the PUCCH resource with PUCCH resource ID 1 is associated with the PUCCH resource with PUCCH resource ID 8, the PUCCH resource with PUCCH resource ID 2 is associated with the PUCCH resource with PUCCH resource ID 9, the PUCCH resource with PUCCH resource ID 3 is associated with the PUCCH resource with PUCCH resource ID 10, the PUCCH resource with PUCCH resource ID 4 is associated with the PUCCH resource with PUCCH resource ID 11, the PUCCH resource with PUCCH resource ID 5 is associated with the PUCCH resource with PUCCH resource ID 12, the PUCCH resource with PUCCH resource ID 6 is associated with the PUCCH resource with PUCCH resource ID of 13, and the PUCCH resource with PUCCH resource ID of 7 is associated with the PUCCH resource with PUCCH resource ID 14.

In some embodiments, a candidate PUCCH resource (which is further selected according to the first configuration or the second configuration) of the target PUCCH resource is indicated by a PUCCH Resource Indicator (PRI). For example, when the PRI value is 000, it indicates that the target PUCCH resource a PUCCH resource with PUCCH resource ID 1 or a PUCCH resource with PUCCH resource ID 8; when the PRI value is 001, it indicates that the target PUCCH resource is a PUCCH resource with PUCCH resource ID 2 or a PUCCH resource with PUCCH resource ID 9; when the PRI value is 010, it indicates that the target PUCCH resource is a PUCCH resource with PUCCH resource ID 3 or a PUCCH resource with PUCCH resource ID 10; when the PRI value is 011, it indicates that the target PUCCH resource is a PUCCH resource with PUCCH resource ID 4 or a PUCCH resource with PUCCH resource ID 11; when the PRI value is 100, it indicates that the target PUCCH resource is a PUCCH resource with PUCCH resource ID 5 or a PUCCH resource with PUCCH resource ID 12; when the PRI value is 101, it indicates that the target PUCCH resource is a PUCCH resource with PUCCH resource ID 6 or a PUCCH resource with PUCCH resource ID 13; and when the PRI value is 110, it indicates that the target PUCCH resource is a PUCCH resource with PUCCH resource ID 7 or a PUCCH resource with PUCCH resource ID 14.

The associated uplink channel resources may correspond to the same uplink channel resource ID, or may correspond to two uplink channel resource IDs having a pre-agreed correspondence relationship, which can adapt to the association requirements of uplink channel resources in different situations.

In some embodiments, the related parameters include at least one of the following: frequency domain resource parameters (e.g., starting physical resource block (startingPRB), second hop physical resource block (secondHopPRB)), maximum code rate (maxCodeRate), and Orthogonal Cover Code (OCC) parameters. The related parameters exclude time domain resource parameters, such as starting symbol index (startingSymbolIndex) and the number of symbols (nrofSymbols). The time domain resource parameters are configured by other configurations, and are not configured by the first configuration or the second configuration.

When the related parameters exclude time domain resource parameters, the time domain resource parameters may be configured through other configurations, which is more flexible.

In some embodiments, the PUCCH resource used by at least one type of signal among a Scheduling Request (SR), a Channel-State Information (CSI) report, and a Semi-Persistent Scheduling Hybrid Automatic Repeat reQuest ACKnowledgment (SPS HARQ-ACK) corresponding to the first configuration is the PUCCH resource configured by the first configuration; and the PUCCH resource used for at least one type of signal among a SR, a CSI report and a SPS HARQ-ACK corresponding to the second configuration is the PUCCH resource configured by the second configuration.

In some embodiments, the related parameters of the SR, CSI report, and SPS HARQ-ACK are configured in respective corresponding configurations (the first configuration or the second configuration), for example, in respective corresponding PUCCH configurations (PUCCH-Config).

### Method 2: Determining the target uplink channel resource according to an indication of first DCI.

In some embodiments, the target uplink channel resource is a PUCCH resource for feeding back a HARQ-ACK which is the HARQ-ACK of a PDSCH scheduled by the first DCI.

In some embodiments, the terminal device may receive the first DCI. The first DCI is used not only for scheduling a PDSCH, but also for indicating the first configuration or the second configuration used by the target PUCCH resource, and indicating a PRI corresponding to the target PUCCH resource.

In some embodiments, determining the target uplink channel resource from the uplink channel resources configured by the first configuration or the second configuration, includes at least one of the following:
when the first DCI indicates the first configuration, determining the target uplink channel resource from the uplink channel resources configured by the first configuration; and when the first DCI indicates the second configuration, determining the target uplink channel resource from the uplink channel resources configured by the second configuration; the first DCI is used to indicate the target uplink channel resource. For example, the first DCI is further used to indicate the PRI corresponding to the target PUCCH resource.

According to the indication of the first DCI, the target uplink channel resource is determined, and the flexibility and accuracy of indicating the target uplink channel resource can be improved.

In some embodiments, the related parameters of the first configuration or the second configuration include at least one of: frequency domain resource parameters (e.g., starting physical resource block (startingPRB), second hop physical resource block (secondHopPRB)), maximum code rate (maxCodeRate), OCC parameters, time domain resource parameters (e.g., starting symbol index (startingSymbolIndex), the number of symbols (nrofSymbols)).

The first configuration or the second configuration may be a PUCCH configuration (PUCCH-Config), a PUCCH resource set (PUCCH-ResourceSet), or a PUCCH resource (PUCCH-resource).

In some embodiments, the related parameters include at least one of: frequency domain resource parameters (e.g., starting physical resource block (startingPRB), second hop physical resource block (secondHopPRB)), maximum code rate (maxCodeRate), and OCC parameters. The related parameters exclude time domain resource parameters, such as starting symbol index (startingSymbolIndex) and the number of symbols (nrofSymbols). The time domain resource parameters are configured by other configurations, and are not configured by the first configuration or the second configuration.

In some embodiments, the manner in which the first DCI indicates the first configuration or the second configuration includes explicit indication and implicit indication.

### Explicit indication:

In some embodiments, the first DCI includes a first indication field for indicating the first configuration or the second configuration.

In some embodiments, the first indication field is a newly added indication field or is part of bits of a known indication field, based on a DCI format known before the filing date.

In some embodiments, the first indication field is an indication field newly added in addition to an uplink channel resource indication field, or the first indication field is part of bits of the uplink channel resource indication field.

When the first indication field is an indication field newly added in addition to the uplink channel resource indication field, the first configuration or the second configuration may be more flexibly indicated; and when the first indication field is part of bits of the uplink channel resource indication field, such as the highest bit or the lowest bit of a PRI indication field, no additional DCI overhead is added.

In some embodiments, the first indication field is part of bits of the uplink channel resource indication field, including: the first indication field is the highest bit or the lowest bit of the PRI indication field.

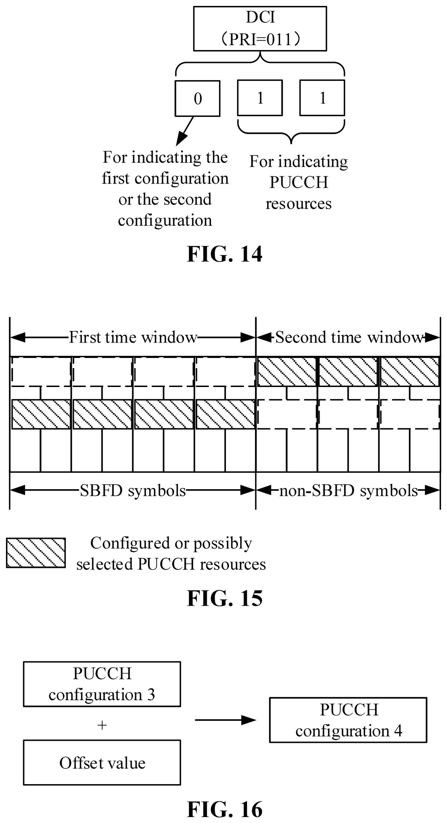

The highest bit or lowest bit of the PRI indication field is used to indicate the first configuration or the second configuration, and the remaining bits in the PRI indication field are used to indicate the PUCCH resources in the first configuration or the second configuration. FIG. 14 is a schematic diagram of a PRI indication field according to an exemplary embodiment of the present disclosure, in which when the value of the PRI indication field is 011, the highest bit value of 0 is used to indicate the first configuration, and the remaining bit value of 11 is used to indicate the fourth PUCCH resource in the first configuration.

In some embodiments, when the time domain resource includes a sub-time domain resource type, the sub-time domain resource type is used to indicate the first configuration or the second configuration; and when the time domain resource includes at least two sub-time domain resource types, the first DCI includes the first indication field for indicating the first configuration or the second configuration.

Exemplarily, when one slot includes only one symbol type, the first configuration or the second configuration is determined by the symbol type, and all bits of the first indication field (the PRI indication field) are used to indicate PUCCH resources; and when one slot includes at least two symbol types, some bits in the first indication field are used to indicate the first configuration or the second configuration, and the remaining bits are used to indicate the target PUCCH resource. As shown in FIG. 7, when only SBFD symbols are included in a slot, the first configuration is determined by this symbol type; when only non-SBFD symbols are included in a slot, the second configuration is determined by this symbol type; and when SBFD symbols and non-SBFD symbols are included in a slot, the highest bit in the first indication field is used to indicate the first configuration or the second configuration, and the remaining bit is used to indicate the target PUCCH resource.

### Implicit indication:

In some embodiments, the DCI format of the first DCI is used to indicate the first configuration or the second configuration; or, the DCI format of the first DCI is associated with the first configuration or the second configuration; or a Radio Network Temporary Identifier sequence (RNTI) for scrambling the first DCI is used to indicate the first configuration or the second configuration; or, the RNTI for scrambling the first DCI is associated with the first configuration or the second configuration; or a resource location or resource index of a downlink control resource carrying the first DCI is used to indicate the first configuration or the second configuration; or, a resource location or resource index of a downlink control resource carrying the first DCI is associated with the first configuration or the second configuration.

Exemplarily, when the DCI format of the first DCI is Format A, it is used to indicate the first configuration; and when the DCI format of the first DCI is Format B, it is used to indicate the second configuration. When the RNTI is a first RNTI, it is used to indicate the first configuration; and when the RNTI is the second RNTI, it is used to indicate the second configuration.

For example, in a case where the resource index is a Control Channel Element (CCE) index, when the CCE index number is 1, it is used to indicate the first configuration; and when the CCE index number is 2, it is used to indicate the second configuration. In an implementation, the CCE index number may refer to the lowest CCE index number where the PDCCH is located or the highest CCE index number where the PDCCH is located.

By indicating the first configuration or the second configuration in different ways, the requirements in different scenarios can be met, and additional DCI overhead is not needed.

### Method 3: Determining the target uplink channel resource according to an indication of higher layer signaling.

In some embodiments, the terminal device may receive higher layer signaling which is for indicating the first configuration or the second configuration corresponding to the target uplink channel resource.

In some embodiments, in a case where the higher layer signaling indicates the first configuration, the target uplink channel resource is determined from the uplink channel resources configured by the first configuration; and/or, in a case where the second configuration is indicated by the higher layer signaling, the target uplink channel resource is determined from the uplink channel resources configured by the second configuration.

In some embodiments, the first configuration or the second configuration is used in a time unit including at least two types of time domain resources based on the configuration of the higher layer signaling. The time unit including at least two types of time domain resources may be a slot including at least two types of symbols, referred to as a mixed type slot for short.

Here, the higher layer refers to the protocol layer above the physical layer, such as System Information Block (SIB), Radio Resource Control (RRC), and Media Access Control (MAC).

In some embodiments, related parameters of the first configuration or the second configuration include at least one of: frequency domain resource parameters (e.g., starting physical resource block (startingPRB), second hop physical resource block (secondHopPRB)), maximum code rate (maxCodeRate), OCC parameters, and time domain resource parameters (e.g., starting symbol index (startingSymbolIndex), the number of symbols (nrofSymbols)).

The first configuration or the second configuration may be a PUCCH configuration (PUCCH-Config), a PUCCH resource set (PUCCH-ResourceSet), or a PUCCH resource (PUCCH-resource).

In some embodiments, the related parameters include at least one of: frequency domain resource parameters (e.g., starting physical resource block (startingPRB), second hop physical resource block (secondHopPRB)), maximum code rate (maxCodeRate), and OCC parameters. The related parameters exclude time domain resource parameters, such as starting symbol index (startingSymbolIndex) and the number of symbols (nrofSymbols). The time domain resource parameters are configured by other configurations, and are not configured by the first configuration or the second configuration.

Configuring higher layer signaling by network devices may support diversified configuration modes. Such confiuration may be implemented according to actual requirements, and does not require additional DCI overhead. Taking the uplink channel resource as a PUCCH resource as an example, the advantage of agreeing to use the first configuration is to ensure that the PUCCH resource falls within a valid UL resource, and the advantage of agreeing to use the second configuration is to avoid fragmentation of the uplink resource and reduce link interference. For example, a slot in a period of time includes only SBFD symbols, and the network device instructs the terminal device through the higher layer signaling to use the first configuration. For another example, a slot in another period of time includes only non-SBFD symbols, and the network device instructs the terminal device through the higher layer signaling to use the second configuration. For another example, the higher layer signaling carries the window parameter of at least one time window and the correspondence relationship between each time window and the first configuration or the second configuration, and the terminal device may determine the first configuration or the second configuration used in the current time window according to the correspondence relationship. The window parameter of the time window includes at least one of: start position, end position, length, cycle start point, and cycle length.

FIG. 15 shows a schematic diagram of a higher layer signaling indication according to an exemplary embodiment of the present disclosure. The higher layer signaling carries window parameters of the first time window and the second time window, and the first time window corresponds to the first configuration, and the second time window corresponds to the second configuration. The start position of the first time window is the start position of the first symbol, and the length of the first time window is 8 symbols. The start position of the second time window is the start position of the 9th symbol, and the length of the second time window is 6 symbols. Taking the SBFD symbols occupying 8 symbols and the non-SBFD symbols occupying 6 symbols as an example, the target PUCCH resource (one of the first 4 shaded blocks in the figure) is determined using the first configuration from the SBFD symbols; and the target PUCCH resource (one of the last 3 shaded blocks in the figure) is determined using the second configuration from the non-SBFD symbols.

### Method 4: Determining the target uplink channel resource according to the provisions of a communication protocol.

In some embodiments, in a case where the first configuration is used according to provisions of a communication protocol, the target uplink channel resource is determined from the uplink channel resources configured by the first configuration; and in a case where the second configuration is used according to the provisions of the communication protocol, the target uplink channel resource is determined from the uplink channel resources configured by the second configuration.

In some embodiments, the first configuration or the second configuration is used in a time unit including at least two types of time domain resources according to the provisions of the communication protocol. The time unit including at least two types of time domain resources may be a slot including at least two types of symbols, referred to as a mixed type slot for short.

In some embodiments, related parameters of the first configuration or the second configuration include at least one of: frequency domain resource parameters (e.g., starting physical resource block (startingPRB), second hop physical resource block (secondHopPRB)), maximum code rate (maxCodeRate), OCC parameters, and time domain resource parameters (e.g., starting symbol index (startingSymbolIndex), the number of symbols (nrofSymbols)).

The first configuration or the second configuration may be a PUCCH configuration (PUCCH-Config), a PUCCH resource set (PUCCH-ResourceSet), or a PUCCH resource (PUCCH-resource).

In some embodiments, the related parameters include at least one of: frequency domain resource parameters (e.g., starting physical resource block (startingPRB), second hop physical resource block (secondHopPRB)), maximum code rate (maxCodeRate), and OCC parameters. The related parameters exclude time domain resource parameters, such as starting symbol index (startingSymbolIndex) and the number of symbols (nrofSymbols). The time domain resource parameters are configured by other configurations, and are not configured by the first configuration or the second configuration.

It is stipulated by the communication protocol that no network device is required for configuration, and there is no additional DCI overhead. Taking the uplink channel resource as a PUCCH resource as an example, the advantage of agreeing to use the first configuration is to ensure that the PUCCH resource falls within the valid UL resource, and the advantage of agreeing to use the second configuration is to avoid fragmentation of the uplink resource and reduce link interference.

For example, a slot in a period of time includes only SBFD symbols, and the communication protocol stipulates that the first configuration is used. For another example, a slot in another period of time includes only non-SBFD symbols, and the communication protocol stipulates that the second configuration is used. For another example, if the communication protocol stipulates the window parameter of at least one time window and the correspondence relationship between each time window and the first configuration or the second configuration, the terminal device may determine the first configuration or the second configuration used in the current time window according to the correspondence relationship. The window parameter of the time window includes at least one of: start position, end position, length, cycle start point, and cycle length.

In some embodiments, UE is provided with the first configuration and the second configuration for each of {PUCCH resource set, PUCCH resources except the startingSymbolIndex and nrofSymbols}, respectively, for use with PUCCH (SR, CSI, HARQ-ACK) occupying a first symbol type and a second symbol type, respectively, where the first symbol type is SBFD symbol type and the second symbol type is non-SBFD symbol type.

In some embodiments, UE is provided with the first configuration and the second configuration for each of {PUCCH resource set, PUCCH resource}, respectively, for use with PUCCH (SR, CSI, HARQ-ACK) occupying a first symbol type and a second symbol type, respectively, where the first symbol type is an SBFD symbol and the second symbol type is a non-SBFD symbol. UE expects the corresponding PUCCH resources in the first configuration and the second configuration to occupy the same symbols.

In some embodiments, the terminal device is configured with a second configuration parameter and an offset value, the second configuration parameter corresponds to the second configuration, the offset value is a Resource Block (RB) offset (RB offset), and the RB offset is for adjusting a frequency domain offset of the PUCCH resource. Taking the first configuration corresponding to SBFD symbols and the second configuration corresponding to non-SBFD symbols as an example, the RB offset is a frequency domain offset of a PUCCH resource located in the SBFD symbols with respect to a PUCCH resource located in the non-SBFD symbols.

In some embodiments, the terminal device is configured with a first configuration parameter and an offset value, the first configuration parameter corresponds to the first configuration, and the offset value is a RB offset. Taking the first configuration corresponding to SBFD symbols and the second configuration corresponding to non-SBFD symbols as an example, the RB offset is a frequency domain offset of a PUCCH resource located in the non-SBFD symbols with respect to a PUCCH resource located in the SBFD symbols.

FIG. 16 shows a schematic diagram of a PUCCH resource offset according to an exemplary embodiment of the present disclosure, in which a terminal device is configured with a second configuration parameter (PUCCH configuration 3) and an offset value, the offset value is a RB offset, the first configuration corresponds to SBFD symbols and the second configuration corresponds to non-SBFD symbols, and the frequency domain resource parameter in the PUCCH configuration 3 is added with the offset value to form the PUCCH configuration 4 together with other resource parameters.

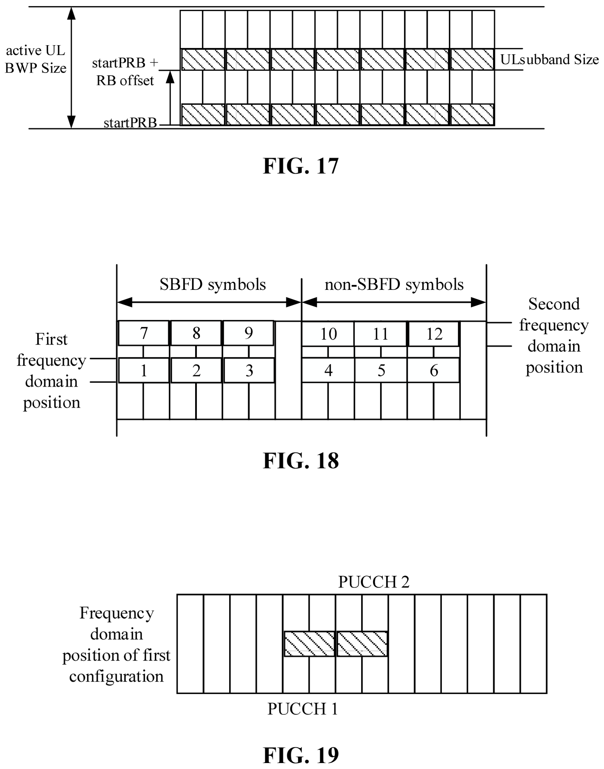

FIG. 17 is a schematic diagram of a PUCCH resource offset according to an exemplary embodiment of the present disclosure. In some embodiments, the start position of the PUCCH resource corresponding to the non-SBFD symbol is configured startingRB, and the start position of the PUCCH resource corresponding to the SBFD symbol is (startingPRB + RB_offset) mod (UL_subband size ∩ active UL BWP size), where the startingPRB is a starting physical resource block, the RB_offset is an RB offset, the UL_subband size is an UL subband size, the active UL BWP size is an active uplink bandwidth part (BWP) size, ∩ is an intersection operation, and mod is a remainder operation. The RB occupied by the PUCCH resource located in the SBFD symbols is 1 RB or n RBs from the start position, and the value of n is the parameter nrofPRBs.

In some embodiments, the RB offset may be one RB offset, or a list of RB offsets, where each RB offset corresponds to one PUCCH resource or one PUCCH resource set.

In some embodiments, the terminal device may receive a set of configuration parameters (PUCCH-Config), and each PUCCH resource set in the set of configuration parameters includes N PUCCH resources, N is twice the maximum number of PUCCH resources that can be configured in the current PUCCH resource set, where the first N/2 PUCCH resources correspond to non-SBFD symbols and the last N/2 PUCCH resources correspond to SBFD symbols, or, the first N/2 PUCCH resources correspond toSBFD symbols and the last N/2 PUCCH resources correspond to non-SBFD symbols. The first N/2 PUCCH resources and the last N/2 PUCCH resources share or do not share time domain configurations.

In some embodiments, the terminal device may receive a set of configuration parameters (PUCCH-Config), and M PUCCH resource sets are included in the set of configuration parameters. The first M/2 PUCCH resource sets correspond to non-SBFD symbols and the last M/2 PUCCH resource sets correspond to SBFD symbols, or, the first M/2 PUCCH resource sets correspond to SBFD symbols and the last M/2 PUCCH resource sets correspond to non-SBFD symbols. The first M/2 PUCCH resource sets and the last M/2 PUCCH resource sets share or do not share time domain configuration.

FIG. 18 is a schematic diagram of configuring PUCCH resources according to an exemplary embodiment of the present disclosure. In one slot, the first to seventh symbols are SBFD symbols, and the eighth to fourteenth symbols are non-SBFD symbols. In some embodiments, the first 7 PUCCH resources in the PUCCH resource set are located at a first frequency domain position, and the last 7 PUCCH resources in the PUCCH resource set are located at a second frequency domain position.

In some embodiments, the separately configured information in the above method may further include at least one of the following in addition to the PUCCH resource: a PUCCH power control configuration parameter (PUCCH-PowerControl), a PUCCH spatial configuration parameter (PUCCH-SpatialRelationInfo), an SR configuration parameter (SchedulingRequestResourceConfig), and the like. The shared configurion information in the above method may further include a time domain offset configuration from PDSCH to HARQ-ACK (dl-DataToUL-ACK).

### Method 5: Determining the target uplink channel resource which is an uplink channel resource used when at least two UCIs are multiplexed.

In some embodiments, the target uplink channel resource is an uplink channel resource used when at least two UCIs are multiplexed, and at least two uplink channel resources corresponding to at least two UCIs prior to multiplexing are in the same time unit, or at least two uplink channel resources overlap.

In some embodiments, related parameters of the first configuration or the second configuration include at least one of: frequency domain resource parameters (e.g., starting physical resource block (startingPRB), second hop physical resource block (secondHopPRB)), maximum code rate (maxCodeRate), OCC parameters, and time domain resource parameters (e.g., starting symbol index (startingSymbolIndex), the number of symbols (nrofSymbols)).

The first configuration or the second configuration may be a PUCCH configuration (PUCCH-Config), a PUCCH resource set (PUCCH-ResourceSet), or a PUCCH resource (PUCCH-resource).

In some embodiments, the related parameters include at least one of: frequency domain resource parameters (e.g., starting physical resource block (startingPRB), second hop physical resource block (secondHopPRB)), maximum code rate (maxCodeRate), and OCC parameters. The related parameters exclude time domain resource parameters, such as starting symbol index (startingSymbolIndex) and the number of symbols (nrofSymbols). The time domain resource parameters are configured by other configurations, and are not configured by the first configuration or the second configuration.

The terminal device is to transmit at least two uplink channel resources (carrying at least two UCIs) in a first slot, the at least two uplink channel resources overlap (partially overlap or fully overlap), or the at least two uplink channel resources are in the same time unit (slot, sub-slot, symbol group, etc.), wherein the first slot is of a mixed symbol slot type, that is, including SBFD symbols and non-SBFD symbols. The terminal device multiplexes at least two UCIs in the target uplink channel resource for transmission, and the manners for determining the target uplink channel resources include at least one of the following.

**Manner 1:** determining the target uplink channel resource from the uplink channel resources configured by the first configuration when at least two uplink channel resources all correspond to the first configuration; and determining the target uplink channel resource from the uplink channel resources configured by the first configuration when at least two uplink channel resources all correspond to the second configuration.

As an example in which the uplink channel resource is a PUCCH resource, FIG. 19 shows a schematic diagram of determining a PUCCH resource according to an exemplary embodiment of the present disclosure. Exemplarily, the first configuration indicates PUCCH resource set 1 and PUCCH resource set 2, each PUCCH resource in the PUCCH resource set 1 occupies 2 symbols, and each PUCCH resource in the PUCCH resource set 2 occupies 4 symbols (not shown in the figure). Assuming that both PUCCH1 and PUCCH2 belong to the PUCCH resource set 1, if the payload formed after multiplexing at least two UCIs corresponds to the PUCCH resource set 2, the target PUCCH resource is a PUCCH resource selected from the PUCCH resource set 2.

**Manner 2:** when at least two uplink channel resources correspond to the first configuration and the second configuration, determining the target uplink channel resource from the uplink channel resources configured by the first configuration; or,when at least two uplink channel resources correspond to the first configuration and the second configuration, the target uplink channel resource is determined from the uplink channel resources configured by the second configuration.

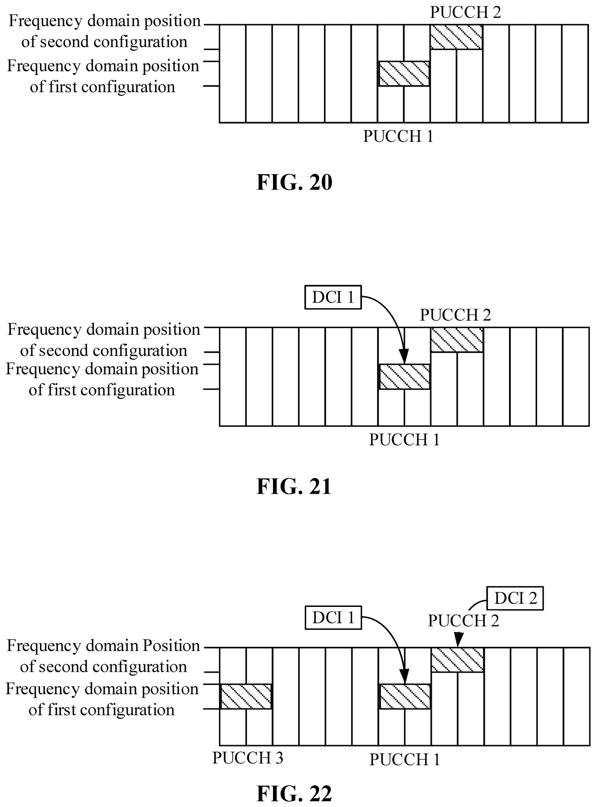

Taking the uplink channel resource as a PUCCH resource as an example, FIG. 20 shows a schematic diagram of determining a PUCCH resource according to an exemplary embodiment of the present disclosure. Exemplarily, the first configuration indicates PUCCH resource set 1 and PUCCH resource set 2, each PUCCH resource in the PUCCH resource set 1 occupies 2 symbols, and each PUCCH resource in the PUCCH resource set 2 occupies 4 symbols (not shown in the figure). The second configuration indicates PUCCH resource set 3 and PUCCH resource set 4, each PUCCH resource in the PUCCH resource set 3 occupies 2 symbols, and each PUCCH resource in the PUCCH resource set 4 occupies 4 symbols (not shown).

It is assumed that PUCCH1 belongs to PUCCH resource set 1 and corresponds to the first configuration, and PUCCH2 belongs to the PUCCH resource set 3 and corresponds to the second configuration. In a case where the target PUCCH resource after multiplexing always adopts the second configuration, if the payload formed after multiplexing at least two UCIs corresponds to the PUCCH resource set 2 or 4, then the target PUCCH resource is a PUCCH resource selected from the PUCCH resource set 4.

If at least two PUCCH resources correspond to the first configuration and the second configuration, and the target PUCCH resource corresponds to the first configuration, taking the first configuration corresponding to SBFD symbols as an example, an intermediate subband of the SBFD symbols may be configured as an UL subband to ensure that the target PUCCH resource is within a valid UL resource. Alternatively, if at least two PUCCH resources correspond to the first configuration and the second configuration, and the target PUCCH resource corresponds to the second configuration, taking the second configuration corresponding to non-SBFD symbols as an example, uplink resource fragmentation can be avoided and link interference can be reduced.

**Manner 3:** when at least two uplink channel resources correspond to the first configuration and the second configuration, and the at least two uplink channel resources include a first uplink channel resource which is dynamically scheduled, determining the target uplink channel resource according to at least one of the following:
a time domain resource type corresponding to the first uplink channel resource; a configuration corresponding to the first uplink channel resource; and DCI corresponding to the first uplink channel resource.

### Case 1: The target uplink channel resource is determined according to the time domain resource type corresponding to the first uplink channel resource.

In some embodiments, when the at least two uplink channel resources correspond to the first configuration and the second configuration, the at least two uplink channel resources include the first uplink channel resource which is dynamically scheduled, and the first uplink channel resource is located in the first type of time domain resources, the target uplink channel resource is determined from the uplink channel resources configured by the first configuration;
when the at least two uplink channel resources correspond to the first configuration and the second configuration, the at least two uplink channel resources include the first uplink channel resource which is dynamically scheduled, and the first uplink channel resource is located in the second type of time domain resources, the target uplink channel resource is determined from the uplink channel resources configured by the second configuration.

For example, when the uplink channel resource is a PUCCH resource and the time domain resource is a symbol, in a case where the first PUCCH resource is located in SBFD symbols, the target PUCCH resource is determined from among the PUCCH resources configured by the first configuration; in a case where the first PUCCH resource is located in non-SBFD symbols, the target PUCCH resource is determined from among the PUCCH resources configured by the second configuration.

FIG. 21 is a schematic diagram of determining a PUCCH resource according to an exemplary embodiment of the present disclosure. It is assumed that at least two PUCCH resources are PUCCH 1 and PUCCH 2, in a case where PUCCH 1 corresponds to the first configuration and PUCCH 2 corresponds to the second configuration, the first PUCCH resource dynamically scheduled by DCI is PUCCH 1; and when PUCCH 1 is located in SBFD symbols, the target PUCCH resource is determined from among the PUCCH resources configured by the first configuration. For example, a PUCCH resource set in the first configuration is determined based on payloads formed after multiplexing at least two UCIs, and the target PUCCH resource is determined from the PUCCH resource set.

### Case 2: The target uplink channel resource is determined according to the configuration corresponding to the first uplink channel resource.

In some embodiments, in a case where at least two uplink channel resources correspond to the first configuration and the second configuration, the at least two uplink channel resources include a first uplink channel resource which is dynamically scheduled, and the first uplink channel resource corresponds to the first configuration, the target uplink channel resource is determined from the uplink channel resources configured by the first configuration;
when at least two uplink channel resources correspond to the first configuration and the second configuration, the at least two uplink channel resources include the first uplink channel resource which is dynamically scheduled, and the first uplink channel resource corresponds to the second configuration, the target uplink channel resource is determined from the uplink channel resources configured by the second configuration.

Continuing with reference to FIG. 21, assuming that at least two PUCCH resources are PUCCH 1 and PUCCH 2, when PUCCH 1 corresponds to the first configuration and PUCCH 2 corresponds to the second configuration, the first PUCCH resource dynamically scheduled by DCI is PUCCH 1; and when PUCCH 1 corresponds to the first configuration, the target PUCCH resource is determined from among the PUCCH resources configured by the first configuration. For example, a PUCCH resource set in the first configuration is determined based on payloads formed after multiplexing at least two UCIs, and the target PUCCH resource is determined from the PUCCH resource set.

### Case 3: The target uplink channel resource is determined according to the DCI corresponding to the first uplink channel resource.

In some embodiments, when at least two uplink channel resources correspond to the first configuration and the second configuration, the at least two uplink channel resources include a first uplink channel resource which is dynamically scheduled, and second DCI indicates the first configuration, the target uplink channel resource is determined from the uplink channel resources configured by the first configuration; and/or,

when the at least two uplink channel resources correspond to the first configuration and the second configuration, the at least two uplink channel resources include the first uplink channel resource which is dynamically scheduled, and the second DCI indicates the second configuration, the target uplink channel resource is determined from the uplink channel resources configured by the second configuration.

When the first uplink channel resource which is dynamically scheduled exists among the at least two uplink channel resources, the target uplink channel resource may be determined according to a time domain resource type corresponding to the first uplink channel resource, a configuration corresponding to the first uplink channel resource, or DCI corresponding to the first uplink channel resource, which is more flexible and adapts to requirements in different scenarios.

In some embodiments, a second indication field in the second DCI is for indicating the first configuration or the second configuration; or a DCI format in the second DCI is for indicating the first configuration or the second configuration; or an RNTI for scrambling the second DCI is for indicating the first configuration or the second configuration; or, a resource location or resource index carrying the second DCI is for indicating the first configuration or the second configuration.

Exemplarily, the second indication field indicates the first configuration or the second configuration by one bit, for example, when the bit value is 0, it is used to indicate the first configuration, and when the bit value is 1, it is used to indicate the second configuration.

When the DCI format of the second DCI is Format A, it is used to indicate the first configuration; and when the DCI format of the second DCI is format B, it is used to indicate the second configuration. When the RNTI is a first RNTI, it is used to indicate the first configuration; and when the RNTI is a second RNTI, it is used to indicate the second configuration. In a case where the resource index is a CCE index, when the CCE index number is 1, it is used to indicate the first configuration; and when the CCE index number is 2, it is used to indicate the second configuration.

Through the above-described different indication manners, the first configuration or the second configuration can be indicated accurately in different situations.

If there are a plurality of dynamically scheduled first uplink channel resources, configuration information corresponding to the target uplink channel resource may be determined according to an indication of the last DCI among the plurality of DCIs corresponding to the plurality of dynamically scheduled first uplink channel resources, or according to configuration information corresponding to the uplink channel resource indicated by the last DCI.

That is, when the at least two uplink channel resources correspond to the first configuration and the second configuration, there are at least two first uplink channel resources dynamically scheduled by at least two second DCIs among the at least two uplink channel resources, and the last DCI indicates the first configuration, the target uplink channel resource is determined from the uplink channel resources configured by the first configuration;
when the at least two uplink channel resources correspond to the first configuration and the second configuration, there are at least two first uplink channel resources dynamically scheduled by the at least two second DCIs among the at least two uplink channel resources, and the last DCI indicates the second configuration, the target uplink channel resource may be determined from the uplink channel resources configured by the second configuration.

The at least two second DCIs correspond to at least two first uplink channel resources one-to-one, and the last DCI is the last one among the at least two second DCIs.

Taking the uplink channel resource as a PUCCH resource as an example, FIG. 22 shows a schematic diagram of determining a PUCCH resource according to an exemplary embodiment of the present disclosure, in which at least two PUCCH resources are PUCCH 1 and PUCCH 2, and in a case where PUCCH 1 corresponds to the first configuration and PUCCH 2 corresponds to the second configuration, DCI 1 indicates PUCCH 1, DCI 2 indicates PUCCH 2, and the second DCI is the last DCI, namely DCI 2. When the DCI 2 indicates the first configuration and the value of the PRI indication field is 00, a target PUCCH resource set is determined from among the plurality of PUCCH resource sets indicated by the first configuration based on payloads formed after multiplexing at least two UCIs, and PUCCH 3 (target PUCCH resource) is the first PUCCH resource in the target PUCCH resource set. The plurality of PUCCH resource sets correspond to different payloads or PUCCH formats.

In some embodiments, the terminal device does not expect at least two uplink channel resources to correspond different configurations; or, the terminal device expects at least two uplink channel resources to correspond to the same configuration; or, the terminal device expects at least two uplink channel resources to correspond to the first configuration; or, the terminal device expects at least two uplink channel resources to correspond to the second configuration.

In some embodiments, the terminal device does not expect to configure or indicate the target uplink channel resource by the network device, and the target uplink channel resource is in a slot including both the first type of time domain resources and the second type of time domain resources.

In some embodiments, the configuration corresponding to the at least two uplink channel resources includes the first configuration and/or the second configuration.

In some embodiments, as an example in which the uplink channel resource is a PUCCH resource, in a case where configurations corresponding to at least two PUCCH resources are different and UCI corresponding to at least two PUCCH resources are not multiplexed, two HARQ-ACK codebooks are constructed, HARQ-ACK codebook 1 corresponds to the first configuration, and HARQ-ACK codebook 2 corresponds to the second configuration.

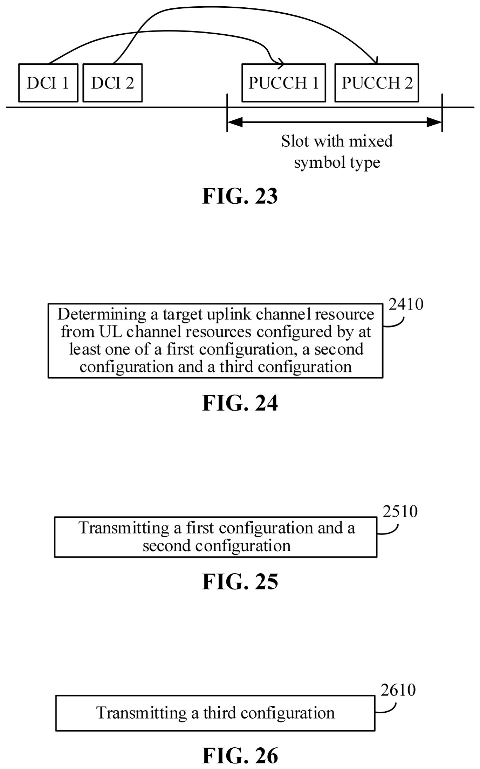

FIG. 23 is a schematic diagram of transmission of a HARQ-ACK codebook according to an exemplary embodiment of the present disclosure. DCI 1 schedules PUCCH 1 to transmit HARQ-ACK codebook 1, and DCI 2 schedules PUCCH 2 to transmit HARQ-ACK codebook 2, where PUCCH 1 corresponds to a first PUCCH configuration and PUCCH 2 corresponds to a second PUCCH configuration. In this case, without multiplexing the two codebooks, the HARQ-ACK codebook 1 is continuously transmitted by the PUCCH 1, and the HARQ-ACK codebook 2 is transmitted by the PUCCH 2.

In some embodiments, the method of determining an uplink channel resource may further include: receiving the first configuration and the second configuration.

In some embodiments, a first configuration parameter and a second configuration parameter are received, the first configuration parameter corresponding to the first configuration and the second configuration parameter corresponding to the second configuration; or a first configuration parameter and an offset value are received, where the first configuration parameter corresponds to the first configuration, and a configuration parameter obtained by offsetting the first configuration parameter based on the offset value corresponds to the second configuration; or a set of configuration parameters is received, the set of configuration parameters including a first configuration parameter and a second configuration parameter, the first configuration parameter corresponding to the first configuration, and the second configuration parameter corresponding to the second configuration.

The separate configuration in the above method includes separately configuring the first configuration parameter and the second configuration parameter; also includes configuring the first configuration parameter, wherein the configuration parameter corresponding to the second configuration is obtained by offsetting the first configuration parameter based on an offset value; also includes configuring a set of configuration parameters, wherein the set of parameters includes two parts, the first part of the parameters corresponding to the first configuration parameters and the second part of the parameters corresponding to the second configuration parameters.

In some embodiments, the offset value is a Resource Block (RB) offset (RB offset), or an RB offset list (RB offset list). The RB offset is for adjusting a frequency domain offset of a PUCCH resource. Taking the first configuration corresponding to SBFD symbols and the second configuration corresponding to non-SBFD symbols as an example, the RB offset is a frequency domain offset of a PUCCH resource located in the SBFD symbols with respect to a PUCCH resource located in the non-SBFD symbols, or the RB offset is a frequency domain offset of a PUCCH resource located in the non-SBFD symbols with respect to a PUCCH resource located in the SBFD symbols.

In summary, in the method according to the embodiment, the target uplink channel resource is determined from uplink channel resources configured by the first configuration or the second configuration; the first configuration and the second configuration are used to configure related parameters of the uplink channel resources, the first configuration corresponds to a first type of time domain resources, and the second configuration corresponds to a second type of time domain resources, so that for different types of time domain resources, the terminal device can determine the uplink channel resource to be used by adopting different configurations.

FIG. 24 illustrates a flowchart of a method of determining an uplink channel resource according to an exemplary embodiment of the present disclosure, the method being implemented by a terminal device, and the method including:
**Step 2410:** determining a target uplink channel resource from uplink channel resources configured by at least one of a first configuration, a second configuration and a third configuration.

The third configuration is used to configure related parameters of uplink channel resources in a time unit having a first type of time domain resources and a second type of time domain resources, the first configuration is used to configure related parameters of uplink channel resources in a time unit having (only) the first type of time domain resources, and the second configuration is used to configure related parameters of uplink channel resources in a time unit having (only) the second type of time domain resources.

In some embodiments, the third configuration in the method is applicable to a time unit including the first type of time domain resources and the second type of time domain resources.

In some embodiments, one of the first configuration, the second configuration, and the third configuration may be determined according to the time unit in which the target uplink channel resource is located. From among the uplink channel resources indicated by the determined configuration, the target uplink channel resource may be determined.

According to the time unit where the target uplink channel resource is located, the target uplink channel resource is determined, and the implementation thereof is simple.

When the time unit in which the target uplink channel resource is located is the first type of time domain resource, the target uplink channel resource is determined from the uplink channel resources configured by the first configuration.

When the time unit in which the target uplink channel resource is located is the second type of time domain resource, the target uplink channel resource is determined from the uplink channel resources configured by the second configuration.

When the time unit in which the target uplink channel resource is located includes the first type time domain resource and the second type of time domain resource, the target uplink channel resource is determined from the uplink channel resources configured by the third configuration.

In an example, the first configuration, the second configuration, and the third configuration correspond to a first slot type, a second slot type, and a third slot type, respectively; the first slot type is a slot type including only SBFD symbols, the second slot type is a slot type including only non-SBFD symbols, and the third slot type is a slot type including both SBFD symbols and non-SBFD symbols.

In some embodiments, the uplink channel resources used for at least one type of signal among an SR, a CSI report and an SPS HARQ-ACK corresponding to the first configuration are the uplink channel resources configured by the first configuration;
uplink channel resources used for at least one type of signal among an SR, a CSI report and an SPS HARQ-ACK corresponding to the second configuration are the uplink channel resources configured by the second configuration;
uplink channel resources used for at least one type of signal among an SR, a CSI report and an SPS HARQ-ACK corresponding to the third configuration are the uplink channel resources configured in the third configuration.

In some embodiments, the method may further include: receiving the first configuration and the third configuration; or receiving the second configuration and the third configuration; or receiving the first configuration, the second configuration, and the third configuration.

Specific implementation details of receiving configurations refer to the embodiment of FIG. 6, and will not be repeated herein.

In summary, in the method according to the present embodiment, the target uplink channel resource is determined from the uplink channel resources configured by at least one of the first configuration, the second configuration and the third configuration; the third configuration is used to configure related parameters of uplink channel resources in a time unit having a first type of time domain resources and a second type of time domain resources, the first configuration is used to configure related parameters of uplink channel resources in a time unit having (only) the first type of time domain resources, and the second configuration is used to configure related parameters of uplink channel resources in a time unit having (only) the second type of time domain resources, so that for different types of time domain resources, the terminal device can determine the uplink channel resource to be used by adopting different configurations.

FIG. 25 illustrates a flowchart of a method of transmitting a resource configuration according to an exemplary embodiment of the present disclosure, the method being implemented by a network device, and the method including:
**Step 2510:** Transmitting a first configuration and a second configuration.

The first configuration and the second configuration are used to configure related parameters of uplink channel resources, the first configuration corresponds to a first type of time domain resources, and the second configuration corresponds to a second type of time domain resources.

In some embodiments, a first configuration parameter and a second configuration parameter are transmitted, the first configuration parameter corresponding to the first configuration, and the second configuration parameter corresponding to the second configuration; or a first configuration parameter and an offset value are transmitted, wherein the first configuration parameter corresponds to the first configuration, and a configuration parameter obtained by offsetting the first configuration parameter based on the offset value corresponds to the second configuration; or a set of configuration parameters are transmitted, the set of configuration parameters including a first configuration parameter and a second configuration parameter, the first configuration parameter corresponding to the first configuration, and the second configuration parameter corresponding to the second configuration.

The separate configuration in the above method includes separately configuring the first configuration parameter and the second configuration parameter; also includes configuring the first configuration parameter, wherein the configuration parameter corresponding to the second configuration is obtained by offsetting the first configuration parameter based on an offset value; and also includes configuring a set of configuration parameters, wherein the set of parameters includes two parts, wherein the first part of the parameters corresponds to the first configuration parameter, and the second part of the parameters corresponds to the second configuration parameter.

In some embodiments, the offset value is a Resource Block (RB) offset, and the RB offset is used to adjust a frequency domain resource of a PUCCH resource. In an example in which the first configuration corresponds to SBFD symbols and the second configuration corresponds to non-SBFD symbols, the uplink channel resource is a PUCCH resource, the RB offset is a frequency domain offset of a PUCCH resource located in the SBFD symbols with respect to a PUCCH resource located in the SBFD symbols.

In some embodiments, the uplink channel resource includes at least one of: a PUCCH resource, a Physical Uplink Shared Channel (PUSCH) resource, a Physical Random Access CHannel (PRACH) resource, and the like. The embodiments of the present disclosure are not limited to this, and generally use a PUCCH resource as an example.

In some embodiments, the time domain resource includes at least one of: a symbol, a symbol group, a slot, a sub-slot, a frame, and a sub-frame. In the embodiments of the present disclosure, the specific types of the time domain resources are not limited, and generally, the first configuration corresponds to the first type of symbols, and the second configuration corresponds to the second type of symbols. For example, the first configuration corresponds to SBFD symbols, and the second configuration corresponds to non-SBFD symbols. The SBFD symbol is a symbol including at least one of an UL subband, a DL subband, and a guard band; and the non-SBFD symbol is a symbol not including the above subbands.

In some embodiments, the method is applicable to a time unit including the first type of time domain resources and the second type of time domain resources.

In some embodiments, the first configuration is applicable to a slot in which all symbols are SBFD symbols, and also applicable to a slot in which some symbols are SBFD symbols. The second configuration is applicable to a slot in which all symbols are non-SBFD symbols, and also to a slot in which some symbols are non-SBFD symbols.

Taking the uplink channel resource as a PUCCH resource as an example, FIG. 7 shows a schematic diagram of a PUCCH resource according to an exemplary embodiment of the present disclosure. Taking a PUCCH resource in a slot as an example, seven PUCCH resources are configured at a frequency domain position of the first configuration, and each PUCCH resource occupies two symbols; seven PUCCH resources are configured at a frequency domain position of the second configuration, and each PUCCH resource occupies two symbols. The first configuration and the second configuration share the same time domain resource parameters, and the first configuration and the second configuration may be applicable to a slot having different types of symbols. For example, when a slot includes only SBFD symbols, the target PUCCH resource is determined from among the seven PUCCH resources configured by the first configuration and located in the middle position; when the slot includes only non-SBFD symbols, the target PUCCH resource is determined from among the seven PUCCH resources configured by the second configuration and located at an upper position; when the slot includes SBFD symbols and non-SBFD symbols, for example, the SBFD symbols occupy 8 symbols and the non-SBFD symbols occupy 6 symbols, the target PUCCH resource (one of the first 4 shaded blocks in the figure) is determined using the first configuration from the SBFD symbols; the target PUCCH resource (one of the last 3 shaded blocks in the figure) is determined using the second configuration from the non-SBFD symbols.

In some embodiments, the first configuration and the second configuration share time domain resource parameters. As illustrated in FIG. 8, the first configuration (PUCCH configuration 1) includes at least one of the following: frequency domain resource parameter 1, maximum code rate 1, OCC parameter 1, etc.; the second configuration (PUCCH configuration 2) includes at least one of the following: frequency domain resource parameter 2, maximum code rate 2, OCC parameter 2, and the like. In the embodiments of the present disclosure, as an example, the first configuration and the second configuration share time domain parameters as an example. The frequency domain resource parameter 1 and the frequency domain resource parameter 2 are generally different, the maximum code rate 1 and the maximum code rate 2 may be the same or different, and the OCC parameter 1 and the OCC parameter 2 may be the same or different. The shared time domain resource parameters may be additionally configured by a network device or specified by the communication protocol.

In some embodiments, the first configuration and the second configuration do not share time domain resource parameters. As illustrated in FIG. 9, there are 7 PUCCH resources in the frequency domain position of the first configuration, and each PUCCH resource occupies 2 symbols; and there are 7 PUCCH resources in the frequency domain position of the second configuation, and each PUCCH resource occupies one symbol. As shown in FIG. 10, the first configuration (PUCCH configuration 1) includes at least one of the following: frequency domain resource parameter 1, time domain resource parameter 1, maximum code rate 1, OCC parameter 1, and the like; and the second configuration (PUCCH configuration 2) includes at least one of frequency domain resource parameter 2, time domain resource parameter 2, maximum code rate 2, OCC parameter 2, and the like. Here, the time domain resource parameter 1 and the time domain resource parameter 2 are different. The first configuration or the second configuration may be a PUCCH configuration (PUCCH-Config), a PUCCH resource set (PUCCH-ResourceSet), or a PUCCH resource (PUCCH-resource).

In some embodiments, the target uplink channel resource is a resource for transmitting Uplink Control Information (UCI). In some embodiments, the target uplink channel resource is a resource for feeding back a HARQ-ACK or a HARQ-ACK codebook. In some embodiments, the target uplink channel resource is a resource for multiplexing at least two UCIs.

In some embodiments, the related parameters include at least one of: frequency domain resource parameters (e.g., starting physical resource block (startingPRB), second hop physical resource block (secondHopPRB)), maximum code rate (maxCodeRate), Orthogonal Cover Code (OCC) parameters, and time domain resource parameters (e.g., starting symbol index (startingSymbolIndex), the number of symbols (nrofSymbols)).

In some embodiments, in the first configuration and the second configuration, the associated uplink channel resources correspond to the same time domain resource configuration. In this case, the time domain resource parameters are not included in the related parameters determined for the target uplink channel resource according to the first configuration or the second configuration.

In some embodiments, the terminal device expects that in the first configuration and the second configuration, the associated uplink channel resources correspond to the same time domain resource configuration; and/or the terminal device does not expect that in the first configuration and the second configuration, the associated uplink channel resources correspond to different time domain resource configurations. That is, the time domain resource parameters are carried in the first configuration and the second configuration, and are identical in the both configurations.

The network device will try to comply with the expectations of the terminal device for configuration, but it may not comply with 100% expectations of the terminal device for configuration. In some situations, the network device may transmit configuration information in a manner unexpected by the terminal device. In this case, how the terminal device processes the unexpected configuration information is not limited herein; for example, it may be independently implemented by the terminal device.

In some embodiments, the time domain resource configurations corresponding to the associated uplink channel resources do not need to be configured separately, so that the time domain resource is the same regardless of which configuration is used by the terminal device to determine the uplink channel resource.

In some embodiments, the time domain resource parameters shared by the first configuration and the second configuration are additionally configured by the network device, or specificed by a communication protocol. In this case, the time domain resource parameters are not included in the first configuration and the second configuration.

In some embodiments, the associated uplink channel resources correspond to the same uplink channel resource ID; or, the associated uplink channel resources correspond to two uplink channel resource IDs having a pre-agreed correspondence relationship.

In some embodiments, as an example in which the uplink channel resource is a PUCCH resource, the first PUCCH resource set is configured by the first configuration, and the second PUCCH resource set is configured by the second configuration. The first PUCCH resource set and the second PUCCH resource set are from different configurations, but there are associated PUCCH resources in the two PUCCH resource sets.

In some embodiments, uplink channel resources with the same uplink channel resource ID are associated, and the uplink channel resources are described as PUCCH resources. As shown in part (a) of Figure 13, for example, for seven PUCCH resources with PUCCH resource IDs 1, 2, 3, 4, 5, 6 and 7 in the first PUCCH resource set and for seven PUCCH resources with PUCCH resource IDs 1, 2, 3, 4, 5, 6 and 7 in the second PUCCH resource set, both the PUCCH resources corresponding to the PUCCH resource ID 1 are associated PUCCH resources, and both the PUCCH resources corresponding to the PUCCH resource ID 2 are associated PUCCH resources, and so on.

Alternatively, uplink channel resources which correspond to two uplink channel resource IDs with a pre-agreed correspondence relationship are associated, and the uplink channel resources are described as PUCCH resources. As shown in part (b) of Figure 13, for example, for 7 PUCCH resources with PUCCH resource IDs 1, 2, 3, 4, 5, 6 and 7 in the first PUCCH resource set and 7 PUCCH resources with PUCCH resource IDs 8, 9, 10, 11, 12, 13 and 14 in the second PUCCH resource set, it is agreed in advance that the PUCCH resource with PUCCH resource ID 1 is associated with the PUCCH resource with PUCCH resource ID 8, the PUCCH resource with PUCCH resource ID 2 is associated with the PUCCH resource with PUCCH resource ID 9, the PUCCH resource with PUCCH resource ID 3 is associated with the PUCCH resource with PUCCH resource ID 10, the PUCCH resource with PUCCH resource ID 4 is associated with the PUCCH resource with PUCCH resource ID 11, the PUCCH resource with PUCCH resource ID 5 is associated with the PUCCH resource with PUCCH resource ID 12, the PUCCH resource with PUCCH resource ID 6 is associated with the PUCCH resource with PUCCH resource ID of 13, and the PUCCH resource with PUCCH resource ID of 7 is associated with the PUCCH resource with PUCCH resource ID 14.

In some embodiments, a candidate PUCCH resource (which is further selected according to the first configuration or the second configuration) of the target PUCCH resource is indicated by a PUCCH Resource Indicator (PRI). For example, when the PRI value is 000, it indicates that the target PUCCH resource a PUCCH resource with PUCCH resource ID 1 or a PUCCH resource with PUCCH resource ID 8; when the PRI value is 001, it indicates that the target PUCCH resource is a PUCCH resource with PUCCH resource ID 2 or a PUCCH resource with PUCCH resource ID 9; when the PRI value is 010, it indicates that the target PUCCH resource is a PUCCH resource with PUCCH resource ID 3 or a PUCCH resource with PUCCH resource ID 10; when the PRI value is 011, it indicates that the target PUCCH resource is a PUCCH resource with PUCCH resource ID 4 or a PUCCH resource with PUCCH resource ID 11; when the PRI value is 100, it indicates that the target PUCCH resource is a PUCCH resource with PUCCH resource ID 5 or a PUCCH resource with PUCCH resource ID 12; when the PRI value is 101, it indicates that the target PUCCH resource is a PUCCH resource with PUCCH resource ID 6 or a PUCCH resource with PUCCH resource ID 13; and when the PRI value is 110, it indicates that the target PUCCH resource is a PUCCH resource with PUCCH resource ID 7 or a PUCCH resource with PUCCH resource ID 14.

The associated uplink channel resources may correspond to the same uplink channel resource ID, or may correspond to two uplink channel resource IDs having a pre-agreed correspondence relationship, which can adapt to the association requirements of uplink channel resources in different situations.

In some embodiments, the related parameters include at least one of: frequency domain resource parameters (e.g., starting physical resource block (startingPRB), second hop physical resource block (secondHopPRB)), maximum code rate (maxCodeRate), and Orthogonal Cover Code (OCC) parameters. The related parameters exclude time domain resource parameters, such as starting symbol index (startingSymbolIndex) and the number of symbols (nrofSymbols). The time domain resource parameters are configured by other configurations, and are not configured by the first configuration or the second configuration.

When the related parameters exclude time domain resource parameters, the time domain resource parameters may be configured through other configurations, which is more flexible.

In some embodiments, the PUCCH resources used for at least one type of signal among a Scheduling Request (SR), a Channel-State Information (CSI) report, and a Semi-Persistent Scheduling Hybrid Automatic Repeat reQuest ACKnowledgment (SPS HARQ-ACK) corresponding to the first configuration are the PUCCH resources configured by the first configuration; and the PUCCH resources used for at least one type of signal among a SR, a CSI report and a SPS HARQ-ACK corresponding to the second configuration are the PUCCH resources configured by the second configuration.

In some embodiments, the related parameters of the SR, CSI report, and SPS HARQ-ACK are configured in respective corresponding configurations (the first configuration or the second configuration), for example, in respective corresponding PUCCH configurations (PUCCH-Config).

In some embodiments, the network device may generate first DCI after determining the target uplink channel resource to be used by the terminal device.

In some embodiments, the network device may transmit first DCI, and the first DCI is used to indicate the first configuration or the second configuration, and to indicate the target uplink channel resource to be used by the terminal device.

In some embodiments, the manner in which the first DCI indicates the first configuration or the second configuration includes explicit indication and implicit indication.

### Explicit indication:

In some embodiments, the first DCI includes a first indication field for indicating the first configuration or the second configuration.

In some embodiments, the first indication field is a newly added indication field or is part of bits of a known indication field, based on a DCI format known before the filing date.

In some embodiments, the first indication field is an indication field newly added in addition to an uplink channel resource indication field, or the first indication field is part of bits of the uplink channel resource indication field.

When the first indication field is an indication field newly added in addition to the uplink channel resource indication field, the first configuration or the second configuration may be more flexibly indicated; when the first indication field is part of bits of the uplink channel resource indication field, such as the highest bit or the lowest bit of a PRI indication field, no additional DCI overhead is added.

In some embodiments, the first indication field is part of bits of the uplink channel resource indication field, including: the first indication field is the highest bit or the lowest bit of the PRI indication field.

The highest bit or lowest bit of the PRI indication field is used to indicate the first configuration or the second configuration, and the remaining bits in the PRI indication field are used to indicate the PUCCH resources in the first configuration or the second configuration. FIG. 14 is a schematic diagram of a PRI indication field according to an exemplary embodiment of the present disclosure, in which when the value of the PRI indication field is 011, the highest bit value of 0 is used to indicate the first configuration, and the remaining bit value of 11 is used to indicate the fourth PUCCH resource in the first configuration.

In some embodiments, when the time domain resource includes a sub-time domain resource type, the sub-time domain resource type is used to indicate the first configuration or the second configuration; and when the time domain resource includes at least two sub-time domain resource types, the first DCI includes the first indication field for indicating the first configuration or the second configuration.

Exemplarily, when one slot includes only one symbol type, the first configuration or the second configuration is determined by the symbol type, and all bits of the first indication field (PRI indication field) are used to indicate PUCCH resources; when one slot includes at least two symbol types, some bits in the first indication field are used to indicate the first configuration or the second configuration, and the remaining bits are used to indicate the target PUCCH resource. As shown in FIG. 7, when only SBFD symbols are included in a slot, the first configuration is determined by this symbol type; when only non-SBFD symbols are included in a slot, the second configuration is determined by this symbol type; and when SBFD symbols and non-SBFD symbols are included in a slot, the highest bit in the first indication field is used to indicate the first configuration or the second configuration, and the remaining bit is used to indicate the target PUCCH resource.

### Implicit indication:

In some embodiments, the DCI format of the first DCI is used to indicate the first configuration or the second configuration; or, the DCI format of the first DCI is associated with the first configuration or the second configuration; or a Radio Network Temporary Identifier sequence (RNTI) for scrambling the first DCI is used to indicate the first configuration or the second configuration; or, the RNTI for scrambling the first DCI is associated with the first configuration or the second configuration; or a resource location or resource index of a downlink control resource carrying the first DCI is used to indicate the first configuration or the second configuration; or, a resource location or resource index of a downlink control resource carrying the first DCI is associated with the first configuration or the second configuration.

Exemplarily, when the DCI format of the first DCI is Format A, it is used to indicate the first configuration; when the DCI format of the first DCI is Format B, it is used to indicate the second configuration. When the RNTI is a first RNTI, it is used to indicate the first configuration; when the RNTI is the second RNTI, it is used to indicate the second configuration.

For example, in a case where the resource index is a Control Channel Element (CCE) index, when the CCE index number is 1, it is used to indicate the first configuration; and when the CCE index number is 2, it is used to indicate the second configuration. In an implementation, the CCE index number may refer to the lowest CCE index number where the PDCCH is located or the highest CCE index number where the PDCCH is located.

By indicating the first configuration or the second configuration in different ways, the requirements in different scenarios can be met, and additional DCI overhead is not needed.

In some embodiments, the network device may transmit higher layer signaling to the terminal device, and the higher layer signaling is used to indicate the first configuration or the second configuration.

In some embodiments, the first configuration or the second configuration is used in a slot including at least two types of time domain resources based on the configuration of the higher layer signaling. Here, the higher layer refers to the protocol layer above the physical layer, such as System Information Block (SIB), Radio Resource Control (RRC), and Media Access Control (MAC).

Configuring higher layer signaling by the network device may support diversified configuration modes. Such confiuration may be implemented according to actual requirements, and does not require additional DCI overhead. Taking the uplink channel resource as a PUCCH resource as an example, the advantage of agreeing to use the first configuration is to ensure that the PUCCH resource falls within a valid UL resource, and the advantage of agreeing to use the second configuration is to avoid fragmentation of the uplink resource and reduce link interference.

For example, a slot in a period of time includes only SBFD symbols, and the network device instructs the terminal device through higher layer signaling to use the first configuration. For another example, a slot in another period of time includes only non-SBFD symbols, and the network device instructs the terminal device through higher layer signaling to use the second configuration. For another example, the higher layer signaling carries the window parameter of at least one time window and the correspondence relationship between each time window and the first configuration or the second configuration, and the terminal device may determine the first configuration or the second configuration used in the current time window according to the correspondence relationship. The window parameter of the time window includes at least one of: start position, end position, length, cycle start point, and cycle length.

FIG. 15 shows a schematic diagram of a higher layer signaling indication according to an exemplary embodiment of the present disclosure. The higher layer signaling carries window parameters of the first time window and the second time window, and the first time window corresponds to the first configuration, and the second time window corresponds to the second configuration. The start position of the first time window is the start position of the first symbol, and the length of the first time window is 8 symbols. The start position of the second time window is the start position of the 9th symbol, and the length of the second time window is 6 symbols. Taking the SBFD symbols occupying 8 symbols and the non-SBFD symbols occupying 6 symbols as an example, the target PUCCH resource (one of the first 4 shaded blocks in the figure) is determined using the first configuration from the SBFD symbols; and the target PUCCH resource (one of the last 3 shaded blocks in the figure) is determined using the second configuration from the non-SBFD symbols.

In some embodiments, the first configuration or the second configuration is used for the terminal device to determine a target uplink channel resource. The target uplink channel resource is an uplink channel resource used when at least two UCIs of the terminal device are multiplexed, and at least two uplink channel resources corresponding to the at least two UCIs prior to multiplexing are in the same time unit, or at least two uplink channel resources overlap.

In some embodiments, the target uplink channel resource to be used by the terminal device is determined, and the target uplink channel resource is an uplink channel resource used when at least two UCIs of the terminal device are multiplexed.

In some embodiments, after the target uplink channel resource to be used by the terminal device is determined, the multiplexed at least two UCIs are received on the target uplink channel resource.

In some embodiments, the target uplink channel resource is an uplink channel resource used when at least two UCIs of the terminal device are multiplexed, and at least two uplink channel resources corresponding to the at least two UCIs prior to multiplexing are in the same time unit, or at least two uplink channel resources overlap.

Taking the uplink channel resource as a PUCCH resource as an example, when the terminal device is to transmit at least two PUCCH resources (carrying at least two UCIs) in a first slot, the at least two PUCCH resources overlap (partially overlap or fully overlap), or the at least two PUCCH resources are in the same time unit (slot, sub-slot, symbol group, etc.), wherein the first slot is of a mixed symbol slot type, that is, including SBFD symbols and non-SBFD symbols, the terminal device multiplexes at least two UCIs in the target PUCCH resource for transmission.

In some embodiments, in a case where the at least two uplink channel resources include a first uplink channel resource which is dynamically scheduled, the network device may determine the target uplink channel resource for multiplexing at least two UCIs for the terminal device based on a multiplexing resource determination manner of the related art. The method may further include:
transmitting second DCI which is for indicating the first configuration or the second configuration corresponding to the target uplink channel resource and for indicating the first uplink channel resource.

**Case 1:** The time domain resource type corresponding to the first uplink channel resource indicated by the second DCI is the same as the time domain resource type corresponding to the target uplink channel resource. That is, when the target uplink channel resource corresponds to a SBFD symbol, the first uplink channel resource also corresponds to a SBFD symbol; and when the target uplink channel resource corresponds to a non-SBFD symbol, the first uplink channel resource also corresponds to a non-SBFD symbol.

**Case 2:** The configuration corresponding to the first uplink channel resource indicated by the second DCI is the same as the configuration corresponding to the target uplink channel resource. That is, when the target uplink channel resource corresponds to the first configuration, the first uplink channel resource also corresponds to the first configuration; when the target uplink channel resource corresponds to the second configuration, the first uplink channel resource also corresponds to the second configuration.

**Case 3:** a second indication field in the second DCI is for indicating the first configuration or the second configuration; or a DCI format in the second DCI is for indicating the first configuration or the second configuration; or an RNTI for scrambling the second DCI is for indicating the first configuration or the second configuration; or, a resource location or resource index carrying the second DCI is for indicating the first configuration or the second configuration.

Exemplarily, the second indication field indicates the first configuration or the second configuration by one bit. For example, when the bit value is 0, the first configuration is indicated, and when the bit value is 1, the second configuration is indicated. When the DCI format of the second DCI is Format A, it is used to indicate the first configuration; and when the DCI format of the second DCI is Format B, it is used to indicate the second configuration. When the RNTI is a first RNTI, it is used to indicate the first configuration; and when the RNTI is a second RNTI, it is used to indicate the second configuration. When the resource index is a CCE index, when the CCE index number is 1, it is used to indicate the first configuration; and when the CCE index number is 2, it is used to indicate the second configuration.

Through the above-described different indication manners, the first configuration or the second configuration can be accurately indicated in different situations.

In some embodiments, in a case where at least two first uplink channel resources are dynamically scheduled by at least two second DCIs, the network device may transmit last DCI, and the last DCI is used to indicate the first configuration or the second configuration corresponding to the target uplink channel resource, the last DCI being the last one among the at least two second DCIs.

In some embodiments, the method may further include: determining, from the uplink channel resources configured by the first configuration or the second configuration, a target uplink channel resource to be used by the terminal device.

In some embodiments, in a case where the first configuration is used according to provisions of a communication protocol, the target uplink channel resource to be used by the terminal device is determined from the uplink channel resources configured by the first configuration; and when the second configuration is used according to the provisions of the communication protocol, the target uplink channel resource to be used by the terminal device is determined from the uplink channel resources configured by the second configuration.

It is stipulated by the communication protocol that the network device is not required for making configuration, and there is no additional DCI overhead. Taking the uplink channel resource as a PUCCH resource as an example, the advantage of agreeing to use the first configuration is to ensure that the PUCCH resource falls within a valid UL resource, and the advantage of agreeing to use the second configuration is to avoid fragmentation of the uplink resource and reduce link interference.

For example, a slot in a period of time includes only SBFD symbols, and the communication protocol stipulates that the first configuration is used; for another example, a slot in another period of time includes only non-SBFD symbols, and the communication protocol stipulates that the second configuration is used. For another example, if the communication protocol stipulates the window parameter of at least one time window and the correspondence relationship between each time window and the first configuration or the second configuration, the terminal device determines the first configuration or the second configuration used in the current time window according to the correspondence relationship. The window parameter of the time window includes at least one of: start position, end position, length, cycle start point, and cycle length.

In some embodiments, when at least two uplink channel resources all correspond to the first configuration, the target uplink channel resource to be used by the terminal device is determined from the uplink channel resources configured by the first configuration. In a case where at least two uplink channel resources all correspond to the second configuration, the target uplink channel resource to be used by the terminal device is determined from the uplink channel resources configured by the second configuration.

Taking the uplink channel resource as a PUCCH resource as an example, FIG. 19 shows a schematic diagram of determining a PUCCH resource according to an exemplary embodiment of the present disclosure, in which at least two PUCCH resources include PUCCH 1 and PUCCH 2, and in a case where both PUCCH 1 and PUCCH 2 correspond to the first configuration, the target PUCCH resource to be used by the terminal device is determined from among the PUCCH resources configured by the first configuration.

When at least two PUCCH resources all correspond to the first configuration, the target PUCCH resource corresponds to the first configuration; when at least two PUCCH resources all correspond to the second configuration, the target PUCCH resource corresponds to the second configuration.

In some embodiments, in a case where at least two uplink channel resources correspond to the first configuration and the second configuration, the target uplink channel resource to be used by the terminal device is determined from the uplink channel resources configured by the first configuration; or, in a case where at least two uplink channel resources correspond to the first configuration and the second configuration, the target uplink channel resource to be used by the terminal device is determined from the uplink channel resources configured by the second configuration.

Taking the uplink channel resource as a PUCCH resource as an example, FIG. 20 shows a schematic diagram of determining a PUCCH resource according to an exemplary embodiment of the present disclosure, in which at least two PUCCH resources include PUCCH 1 and PUCCH 2, and when the PUCCH 1 and the PUCCH 2 correspond to the first configuration and the second configuration, the target PUCCH resource to be used by the terminal device is determined from the PUCCH resources configured by the first configuration.

When at least two PUCCH resources correspond to the first configuration and the second configuration, and the target PUCCH resource corresponds to the first configuration, taking the first configuration corresponding to SBFD symbols as an example, an intermediate subband of the SBFD symbols may be configured as an UL subband to ensure that the target PUCCH resource is within a valid UL resource. Alternatively, when at least two PUCCH resources correspond to the first configuration and the second configuration, and the target PUCCH resource corresponds to the second configuration, taking the second configuration corresponding to non-SBFD symbols as an example, uplink resource fragmentation can be avoided and link interference can be reduced.

In some embodiments, UE is provided with the first configuration and the second configuration for each of {PUCCH resource set, PUCCH resources except the startingSymbolIndex and nrofSymbols}, respectively, for use with PUCCH (SR, CSI, HARQ-ACK) occupying a first symbol type and a second symbol type, respectively, where the first symbol type is SBFD symbol type and the second symbol type is non-SBFD symbol type.

In some embodiments, UE is provided with the first configuration and the second configuration for each of {PUCCH resource set, PUCCH resource}, respectively, for use with PUCCH (SR, CSI, HARQ-ACK) occupying a first symbol type and a second symbol type, respectively, where the first symbol type is an SBFD symbol and the second symbol type is a non-SBFD symbol. UE expects the corresponding PUCCH resources in the first configuration and the second configuration to occupy the same symbols.

In some embodiments, the terminal device is configured with a second configuration parameter and an offset value, the second configuration parameter corresponds to the second configuration, and the offset value is a Resource Block (RB) offset (RB offset), and the RB offset is for adjusting a frequency domain offset of the PUCCH resource. Taking the first configuration corresponding to SBFD symbols and the second configuration corresponding to non-SBFD symbols as an example, the RB offset is a frequency domain offset of a PUCCH resource located in the SBFD symbols with respect to a PUCCH resource located in the non-SBFD symbols.

In some embodiments, the terminal device is configured with a first configuration parameter and an offset value, the first configuration parameter corresponds to the first configuration, and the offset value is a RB offset. Taking the first configuration corresponding to SBFD symbols and the second configuration corresponding to non-SBFD symbols as an example, the RB offset is a frequency domain offset of a PUCCH resource located in the non-SBFD symbols with respect to a PUCCH resource located in the SBFD symbols.

FIG. 16 shows a schematic diagram of a PUCCH resource offset according to an exemplary embodiment of the present disclosure, in which a terminal device is configured with a second configuration parameter (PUCCH configuration 3) and an offset value, the offset value is a RB offset, the first configuration corresponds to SBFD symbols, the second configuration corresponds to non-SBFD symbols, and the frequency domain resource parameter in the PUCCH configuration 3 is added with the offset value to form the PUCCH configuration 4 together with other resource parameters.

FIG. 17 is a schematic diagram of a PUCCH resource offset according to an exemplary embodiment of the present disclosure. In some embodiments, the start position of the PUCCH resource corresponding to the non-SBFD symbols is configured startingRB, and the start position of the PUCCH resource corresponding to the SBFD symbols is (startingPRB + RB_offset) mod (UL_subband size ∩ active UL BWP size), where the startingPRB is a starting physical resource block, the RB_offset is an RB offset, the UL_subband size is an UL subband size, the active UL BWP size is an active uplink BWP size, ∩ is an intersection operation, and mod is a remainder operation. The RB occupied by the PUCCH resource located in the SBFD symbols is 1 RB or n RBs from the start position, and the value of n is the parameter nrofPRBs.

In some embodiments, the RB offset may be one RB offset or a list of RB offsets, where each RB offset corresponds to one PUCCH resource or one PUCCH resource set.

In some embodiments, the terminal device may be configured with a set of configuration parameters (PUCCH-Config), and each PUCCH resource set in the set of configuration parameters includes N PUCCH resources, N is twice the maximum number of PUCCH resources that can be configured in the current PUCCH resource set, where the first N/2 PUCCH resources correspond to non-SBFD symbols and the last N/2 PUCCH resources correspond to SBFD symbols, or, the first N/2 PUCCH resources correspond toSBFD symbols and the last N/2 PUCCH resources correspond to non-SBFD symbols. The first N/2 PUCCH resources and the last N/2 PUCCH resources share or do not share time domain configurations.

In some embodiments, the terminal device may be configured with a set of configuration parameters (PUCCH-Config), and M PUCCH resource sets are included in the set of configuration parameters, where the first M/2 PUCCH resource sets correspond to non-SBFD symbols and the last M/2 PUCCH resource sets correspond to SBFD symbols, or the first M/2 PUCCH resource sets correspond to SBFD symbols and the last M/2 PUCCH resource sets correspond to non-SBFD symbols. The first M/2 PUCCH resource sets and the last M/2 PUCCH resource sets share or do not share time domain configurations.

FIG. 18 is a schematic diagram of configuring PUCCH resources according to an exemplary embodiment of the present disclosure. In one slot, the first to seventh symbols are SBFD symbols, and the eighth to fourteenth symbols are non-SBFD symbols. In some embodiments, the first 7 PUCCH resources in the PUCCH resource set are located at a first frequency domain position, and the last 7 PUCCH resources in the PUCCH resource set are located at a second frequency domain position

In some embodiments, the separately configured information in the above method may further include at least one of the following in addition to the PUCCH resource: a PUCCH power control configuration parameter (PUCCH-PowerControl), a PUCCH spatial configuration parameter (PUCCH-SpatialRelationInfo), an SR configuration parameter (SchedulingRequestResourceConfig), and the like. The shared configurion information in the above method may further include a time domain offset configuration from PDSCH to HARQ-ACK (dl-DataToUL-ACK).

In some embodiments, after determining the target uplink channel resource to be used by the terminal device, UCI, such as a HARQ-ACK codebook, transmitted by the terminal device may be received on the target uplink channel resource.

In some embodiments, the terminal device does not expect at least two uplink channel resources to correspond different configurations; or, the terminal device expects at least two uplink channel resources to correspond to the same configuration; or, the terminal device expects at least two uplink channel resources to correspond to the first configuration; or, the terminal device expects at least two uplink channel resources to correspond to the second configuration.

In some embodiments, the terminal device does not expect to configure or indicate the target uplink channel resource by the network device, and the target uplink channel resource is in a slot including both the first type of time domain resources and the second type of time domain resources.

The network device will try to comply with the expectations of the terminal device for configuration, but it may not comply with 100% expectations of the terminal device for configuration. In some situations, the network device may transmit configuration information in a manner unexpected by the terminal device. In this case, how the terminal device processes the unexpected configuration information is not limited herein; for example, it may be independently implemented by the terminal device.

In some embodiments, the configurations corresponding to the at least two uplink channel resources may include the first configuration and/or the second configuration.

In some embodiments, in a case where configurations corresponding to at least two uplink channel resources are different and UCIs corresponding to the at least two uplink channel resources are not multiplexed, the terminal device may construct two HARQ-ACK codebooks, HARQ-ACK codebook 1 corresponding to the first configuration, and HARQ-ACK codebook 2 corresponding to the second configuration.

In summary, in the method provided by the present embodiment, the first configuration and the second configuration are transmitted, the first configuration and the second configuration are used to configure related parameters of uplink channel resources, the first configuration corresponds to a first type of time domain resources, and the second configuration corresponds to a second type of time domain resources, so that the terminal device can determine the uplink channel resource to be used by adopting different configurations for different types of time domain resources.

FIG. 26 illustrates a flowchart of a method of transmitting a resource configuration according to an exemplary embodiment of the present disclosure, the method being implemented by a network device, and the method including:
**Step 2610:** transmitting a third configuration.

The third configuration is used to configure related parameters of uplink channel resources in a time unit having a first type of time domain resources and a second type of time domain resources.

Specific implementation details of the configuration transmission refer to the embodiment of FIG. 25, and will not be described herein.

In some embodiments, the uplink channel resources used for at least one type of signal among a SR, a CSI report and a SPS HARQ-ACK corresponding to the third configuration are the uplink channel resources configured by the third configuration.

In some embodiments, the related parameters of the SR, the CSI report, and the SPS HARQ-ACK are configured in respective corresponding configurations (third configuration), for example, in respective corresponding PUCCH configurations (PUCCH-Config).

In some embodiments, the method may further include: transmitting a first configuration and/or a second configuration. The first configuration is used to configure the related parameters of the uplink channel resources in the time unit having (only) the first type of time domain resources, and the second configuration is used to configure the related parameters of the uplink channel resources in the time unit having (only) the second type of time domain resources.

In some embodiments, the uplink channel resources used for at least one type of signal among a SR, a CSI report and a SPS HARQ-ACK corresponding to the first configuration are the uplink channel resources configured by the first configuration. The uplink channel resources used for at least one type of signal among a SR, a CSI report and a SPS HARQ-ACK corresponding to the second configuration are the uplink channel resources configured by the second configuration.

In some embodiments, the uplink channel resources used for at least one type of signal among the SR, CSI report and SPS HARQ-ACK corresponding to the first configuration are the uplink channel resources configured by the first configuration. The uplink channel resources used for at least one type of signal among the SR, the CSI report, and the SPS HARQ-ACK corresponding to the second configuration are the uplink channel resources configured by the second configuration.

In some embodiments, the method may further include: determining, from the uplink channel resources configured by at least one of the first configuration, the second configuration and the third configuration, a target uplink channel resource to be used by the terminal device; wherein the first configuration corresponds to a first type of time domain resources, and the second configuration corresponds to a second type of time domain resources.

In some embodiments, the first configuration, the second configuration, and the third configuration correspond to a first slot type, a second slot type, and a third slot type, respectively. As an example, the first slot type is a slot type including only SBFD symbols, the second slot type is a slot type including only non-SBFD symbols, and the third slot type is a slot type including both SBFD symbols and non-SBFD symbols.

In summary, in the method provided in the present embodiment, the third configuration is transmitted. The third configuration is used to configure related parameters of the uplink channel resources in the time unit having the first type of time domain resources and the second type of time domain resources, so that the terminal device can determine the uplink channel resource to be used by adopting the third configuration for the mixed type of time domain resources.

Among the above-described embodiments, the embodiment corresponding to FIG. 6, the embodiment corresponding to FIG. 24, the embodiment corresponding to FIG. 25, and the embodiment corresponding to FIG. 26 may be implemented alone or in combination, and the present disclosure is not limited thereto.

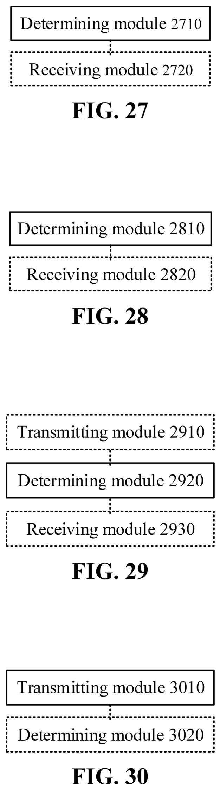

FIG. 27 shows a block diagram of an apparatus of determining an uplink channel resource according to an exemplary embodiment of the present disclosure, and the apparatus may be implemented as a terminal device by software or hardware or a combination of both, or may be implemented as a part of the terminal device. The apparatus includes:
a determining module 2710, configured to determine a target uplink channel resource from uplink channel resources configured by a first configuration or a second configuration.

The first configuration and the second configuration are used to configure related parameters of the uplink channel resources, the first configuration corresponds to a first type of time domain resources, and the second configuration corresponds to a second type of time domain resources.

In a possible design of the present embodiment, the uplink channel resource includes at least one of: a PUCCH resource, a Physical Uplink Shared Channel (PUSCH) resource, a Physical Random Access CHannel (PRACH) resource, and the like. This is not limited in the embodiments of the present disclosure. The PUCCH resources in the embodiments of the present disclosure are all provided by way of example only, and may be generalized to uplink channel resources.

In a possible design of the present embodiment, the time domain resource includes at least one of: a symbol, a symbol group, a slot, a sub-slot, a frame, and a sub-frame. In the embodiments of the present disclosure, the specific type of the time domain resources is not limited, and generally, the first configuration corresponds to the first type of symbols, and the second configuration corresponds to the second type of symbols. For example, the first configuration corresponds to SBFD symbols, and the second configuration corresponds to non-SBFD symbols. The SBFD symbol is a symbol including at least one of an UL subband, a DL subband, and a guard band; and the non-SBFD symbol is a symbol not including the above subbands.

In a possible design of the present embodiment, the first configuration is applicable to a slot in which all symbols are SBFD symbols, and also to a slot in which some symbols are SBFD symbols. The second configuration is applicable to a slot in which all symbols are non-SBFD symbols, and also to a slot in which some symbols are non-SBFD symbols.

In a possible design of the present embodiment, the first configuration and the second configuration share time domain resource parameters.

In a possible design of the present embodiment, the first configuration and the second configuration do not share time domain resource parameters.

In a possible design of the present embodiment, the target uplink channel resource is a resource for transmitting Uplink Control Information (UCI). In a possible design of the present embodiment, the target uplink channel resource is a resource for feeding back a HARQ-ACK or a HARQ-ACK codebook. In a possible design of the present embodiment, the target uplink channel resource is a resource for multiplexing at least two UCIs.

In a possible design of the present embodiment, the determining module 2710 is configured to determine the target uplink channel resource by at least one of the following methods.

### Method 1: Determining a configuration (first configuration or second configuration) corresponding to the target uplink channel resource according to the time domain resource occupied by the target uplink channel resource.

For example, when the target uplink channel resource is a resource for feeding back a HARQ-ACK or a HARQ-ACK codebook, the resource index and/or the time domain resource of the target uplink channel resource are/is indicated by DCI, for example, by the PRI field of the DCI. After the time domain resource occupied by the target uplink channel resource is determined based on the DCI, the first configuration or the second configuration is selected and used according to the time domain resource occupied by the target uplink channel resource to determine other configuration parameters of the target uplink channel resource other than the time domain resource parameters.

In a possible design of the present embodiment, the determining module 2710 is configured to determine the target uplink channel resource from the uplink channel resources configured by the first configuration when the time domain resource occupied by the target uplink channel resource is the first type of time domain resource; and determine the target uplink channel resource from the uplink channel resources configured by the second configuration when the time domain resource occupied by the target uplink channel resource is the second type of time domain resource.

The target uplink channel resource is determined from the first configuration or the second configuration based on the time domain resource occupied by the target uplink channel resource. This method is simple for implementation, by which the calculation amount and the power consumption of the device of determining the uplink channel resource can be reduced, and the efficiency of determining the target uplink channel resource can be improved.

In a possible design of the present embodiment, the related parameters of the target uplink channel resource determined based on the time domain resource occupied by the target uplink channel resource are determined according to the first configuration or the second configuration.

For example, if the target PUCCH resource occupies an SBFD symbol, all or part of the related parameters of the target PUCCH resource are determined according to the first configuration; if the target PUCCH resource occupies a non-SBFD symbol, all or part of the related parameters of the target PUCCH resource are determined according to the second configuration.

In a possible design of the present embodiment, the related parameters include at least one of: frequency domain resource parameters (e.g., starting physical resource block (startingPRB), second hop physical resource block (secondHopPRB)), maximum code rate (maxCodeRate), Orthogonal Cover Code (OCC) parameters, and time domain resource parameters (e.g., starting symbol index (startingSymbolIndex), the number of symbols (nrofSymbols)).

In a possible design of the present embodiment, in the first configuration and the second configuration, associated uplink channel resources correspond to a same time domain resource configuration. In this case, the time domain resource parameters are not included in the related parameters determined according to the first configuration or the second configuration for the target uplink channel resource.

In a possible design of the present embodiment, the apparatus of determining an uplink channel resource expects that associated uplink channel resources correspond to a same time domain resource configuration in the first configuration and the second configuration; and/or the apparatus of determining an uplink channel resource does not expect that the associated uplink channel resources correspond to different time domain resource configurations in the first configuration and the second configuration. That is, the time domain resource parameters are carried in the first configuration and the second configuration, and are identical in both the configurations.

In a possible design of the present embodiment, the time domain resource configurations corresponding to the associated uplink channel resource do not need to be separately configured, so that the corresponding time domain resources are the same regardless of which configuration is used by the apparatus of determining an uplink channel resource. In some embodiments, the time domain resource parameters shared by the first configuration and the second configuration are additionally configured by the network device, or specified in a communication protocol. In this case, the time domain resource parameters are not included in the first configuration and the second configuration.

In a possible design of the present embodiment, the associated uplink channel resources correspond to the same uplink channel resource ID; or, the associated uplink channel resources correspond to two uplink channel resource IDs having a pre-agreed correspondence relationship.

In a possible design of the present embodiment, as an example in which the uplink channel resources are PUCCH resources, the first PUCCH resource set is configured by the first configuration, and the second PUCCH resource set is configured by the second configuration. The first PUCCH resource set and the second PUCCH resource set are from different configurations, but there are associated PUCCH resources in the two PUCCH resource sets.

In a possible design of the present embodiment, uplink channel resources corresponding to the same uplink channel resource IDentification (ID) are associated; or,
uplink channel resources corresponding to two uplink channel resource IDs having a pre-agreed correspondence relationship are associated.

The associated uplink channel resources may correspond to the same uplink channel resource ID, or may correspond to two uplink channel resource IDs having a pre-agreed correspondence relationship, which can adapt to the association requirements of uplink channel resources in different situations.

In a possible design of the present embodiment, the related parameters include at least one of: frequency domain resource parameters (e.g., starting physical resource block (startingPRB), second hop physical resource block (secondHopPRB)), maximum code rate (maxCodeRate), and Orthogonal Cover Code (OCC) parameters. The related parameters exclude time domain resource parameters, such as starting symbol index (startingSymbolIndex) and the number of symbols (nrofSymbols). The time domain resource parameters are configured by other configurations, and are not configured by the first configuration or the second configuration.

When the related parameters exclude time domain resource parameters, the time domain resource parameters may be configured through other configurations, which is more flexible.

In a possible design of the present embodiment, the PUCCH resources used for at least one type of signal among a Scheduling Request (SR), a Channel-State Information (CSI) report, and a Semi-Persistent Scheduling Hybrid Automatic Repeat reQuest ACKnowledgment (SPS HARQ-ACK) corresponding to the first configuration are the PUCCH resources configured by the first configuration; the PUCCH resources used for at least one type of signal among a SR, a CSI report and a SPS HARQ-ACK signal corresponding to the second configuration are the PUCCH resources configured by the second configuration.

In a possible design of the present embodiment, the related parameters of the SR, CSI report, SPS HARQ-ACK are configured in respective corresponding configurations (first configuration or second configuration), for example in respective corresponding PUCCH configurations (PUCCH-Config).

### Method 2: Determining the target uplink channel resource according to an indication of first DCI.

In a possible design of the present embodiment, the determining module 2710 is configured to determine the target uplink channel resource from the uplink channel resources configured by the first configuration when the first DCI indicates the first configuration; and determine the target uplink channel resource from the uplink channel resources configured by the second configuration when the first DCI indicates the second configuration. The first DCI is used to indicate the target uplink channel resource. For example, the first DCI is further used to indicate a PRI corresponding to the target PUCCH resource.

According to the indication of the first DCI, the target uplink channel resource is determined, and the flexibility and accuracy of indicating the target uplink channel resource can be improved.

In a possible design of the present embodiment, the related parameters of the first configuration or the second configuration include at least one of: frequency domain resource parameters (e.g., starting physical resource block (startingPRB), second hop physical resource block (secondHopPRB)), maximum code rate (maxCodeRate), OCC parameters, and time domain resource parameters (e.g., starting symbol index (startingSymbolIndex), the number of symbols (nrofSymbols)).

The first configuration or the second configuration may be a PUCCH configuration (PUCCH-Config), a PUCCH resource set (PUCCH-ResourceSet), or a PUCCH resource (PUCCH-resource).

In some embodiments, the related parameters include at least one of: frequency domain resource parameters (e.g., starting physical resource block (startingPRB), second hop physical resource block (secondHopPRB)), maximum code rate (maxCodeRate), and OCC parameters. The related parameters exclude time domain resource parameters, such as starting symbol index (startingSymbolIndex) and the number of symbols (nrofSymbols). The time domain resource parameters are configured by other configurations, and are not configured by the first configuration or the second configuration.

In a possible design of the present embodiment, the manner in which the first DCI indicates the first configuration or the second configuration includes explicit indication and implicit indication.

### Explicit indication:

In a possible design of the present embodiment, the first DCI includes a first indication field for indicating the first configuration or the second configuration.

In some embodiments, the first indication field is a newly added indication field or is part of bits of a known indication field, based on a DCI format known before the filing date.

In a possible design of the present embodiment, the first indication field is an indication field newly added in addition to an uplink channel resource indication field, or the first indication field is part of bits of the uplink channel resource indication field.

When the first indication field is an indication field newly added in addition to the uplink channel resource indication field, the first configuration or the second configuration may be more flexibly indicated. When the first indication field is part of bits of the uplink channel resource indication field, such as the highest bit or the lowest bit of the PRI indication field, no additional DCI overhead is added.

In a possible design of the present embodiment, the first indication field is part of bits of the uplink channel resource indication field, including that: the first indication field is the highest bit or the lowest bit of a PRI indication field.

The highest bit or lowest bit of the PRI indication field is used to indicate the first configuration or the second configuration, and the remaining bits in the PRI indication field are used to indicate a PUCCH resource in the first configuration or the second configuration.

In a possible design of the present embodiment, when the time domain resource includes a sub-time domain resource type, the sub-time domain resource type is used to indicate the first configuration or the second configuration; and when the time domain resource includes at least two sub-time domain resource types, the first DCI includes the first indication field for indicating the first configuration or the second configuration.

Exemplarily, when one slot includes only one symbol type, the first configuration or the second configuration is determined by the symbol type, and all bits of the first indication field (PRI indication field) are used to indicate PUCCH resources; when one slot includes at least two symbol types, some bits in the first indication field are used to indicate the first configuration or the second configuration, and the remaining bits are used to indicate the target PUCCH resource. As shown in FIG. 7, when only SBFD symbols are included in a slot, the first configuration is determined by the symbol type; when only non-SBFD symbols are included in the slot, the second configuration is determined by the symbol type; when SBFD symbols and non-SBFD symbols are included in the slot, the highest bit in the first indication field is used to indicate the first configuration or the second configuration, and the remaining bit is used to indicate the target PUCCH resource.

### Implicit indication:

In a possible design of the present embodiment, the DCI format of the first DCI is used to indicate the first configuration or the second configuration; or, the DCI format of the first DCI is associated with the first configuration or the second configuration; or a Radio Network Temporary Identifier sequence (RNTI) for scrambling the first DCI is used to indicate the first configuration or the second configuration; or, the RNTI for scrambling the first DCI is associated with the first configuration or the second configuration; or a resource location or resource index of a downlink control resource carrying the first DCI is for indicating the first configuration or the second configuration; or, a resource location or resource index of a downlink control resource carrying the first DCI is associated with the first configuration or the second configuration.

Exemplarily, when the DCI format of the first DCI is Format A, it is used to indicate the first configuration; and when the DCI format of the first DCI is Format B, it is used to indicate the second configuration. When the RNTI is a first RNTI, it is used to indicate the first configuration; and when the RNTI is a second RNTI, it is used to indicate the second configuration.

For example, in a case where the resource index is a Control Channel Element (CCE) index, when the CCE index number is 1, it is used to indicate the first configuration; and when the CCE index number is 2, it is used to indicate the second configuration. In an implementation, the CCE index number may refer to the lowest CCE index number in which the PDCCH is located or the highest CCE index number in which the PDCCH is located.

By indicating the first configuration or the second configuration in different ways, the requirements in different scenarios can be met, and additional DCI overhead is not required.

### Method 3: Determining the target uplink channel resource according to an indication of higher layer signaling.

In a possible design of the present embodiment, the determining module 2710 is configured to determine the target uplink channel resource from the uplink channel resources configured by the first configuration when the higher layer signaling indicates the first configuration; and determine the target uplink channel resource from the uplink channel resources configured by the second configuration when the higher layer signaling indicates the second configuration.

In a possible design of the present embodiment, the first configuration or the second configuration is used in a time unit including at least two types of time domain resources based on a higher layer signaling configuration. The time unit including at least two types of time domain resources may be a slot including at least two types of symbols, and is called a mixed type slot for short.

Here, the higher layer refers to the protocol layer above the physical layer, such as System Information Block (SIB), Radio Resource Control (RRC), and Media Access Control (MAC).

In a possible design of the present embodiment, the related parameters of the first configuration or the second configuration include at least one of: frequency domain resource parameters (e.g., starting physical resource block (startingPRB), second hop physical resource block (secondHopPRB)), maximum code rate (maxCodeRate), OCC parameters, and time domain resource parameters (e.g., starting symbol index (startingSymbolIndex), the number of symbols (nrofSymbols)).

The first configuration or the second configuration may be a PUCCH configuration (PUCCH-Config), a PUCCH resource set (PUCCH-ResourceSet), or a PUCCH resource (PUCCH-resource).

In some embodiments, the related parameters include at least one of: frequency domain resource parameters (e.g., starting physical resource block (startingPRB), second hop physical resource block (secondHopPRB)), maximum code rate (maxCodeRate), and OCC parameters. The related parameters exclude time domain resource parameters, such as starting symbol index (startingSymbolIndex) and the number of symbols (nrofSymbols). The time domain resource parameters are configured by other configurations, and are not configured by the first configuration or the second configuration.

Configuring higher layer signaling by a network device can support diversified configuration modes. Such confiuration may be implemented according to actual requirements, and does not require additional DCI overhead. Taking the uplink channel resource as a PUCCH resource as an example, the advantage of agreeing to use the first configuration is to ensure that the PUCCH resource falls within a valid UL resource, and the advantage of agreeing to use the second configuration is to avoid fragmentation of the uplink resource and reduce link interference. For example, a slot in a period of time includes only SBFD symbols, and the network device instructs the terminal device through the higher layer signaling to use the first configuration. For another example, a slot in another period of time includes only non-SBFD symbols, and the network device instructs the terminal device through the higher layer signaling to use the second configuration. For another example, the higher layer signaling carries the window parameter of at least one time window and the correspondence relationship between each time window and the first configuration or the second configuration, and the terminal device may determine the first configuration or the second configuration used in the current time window according to the correspondence relationship. The window parameter of the time window includes at least one of: start position, end position, length, cycle start point, and cycle length.

### Method 4: Determining the target uplink channel resource according to the provisions of a communication protocol.

In a possible design of the present embodiment, the determining module 2710 is configured to determine the target uplink channel resource from the uplink channel resources configured by the first configuration in a case where the first configuration is used according to provisions of a communication protocol; and determine the target uplink channel resource from the uplink channel resources configured by the second configuration in a case where the second configuration is used according to the provisions of the communication protocol.

In a possible design of the present embodiment, the first configuration or the second configuration is used in a time unit including at least two types of time domain resources according to the provisions of the communication protocol. The time unit including at least two types of time domain resources may be a slot including at least two types of symbols, referred to as a mixed type slot for short.

In a possible design of the present embodiment, related parameters of the first configuration or the second configuration include at least one of: frequency domain resource parameters (e.g., starting physical resource block (startingPRB), second hop physical resource block (secondHopPRB)), maximum code rate (maxCodeRate), OCC parameters, and time domain resource parameters (e.g., starting symbol index (startingSymbolIndex), the number of symbols (nrofSymbols)).

The first configuration or the second configuration may be a PUCCH configuration (PUCCH-Config), a PUCCH resource set (PUCCH-ResourceSet), or a PUCCH resource (PUCCH-resource).

In some embodiments, the related parameters include at least one of: frequency domain resource parameters (e.g., starting physical resource block (startingPRB), second hop physical resource block (secondHopPRB)), maximum code rate (maxCodeRate), and OCC parameters. The related parameters exclude time domain resource parameters, such as starting symbol index (startingSymbolIndex) and the number of symbols (nrofSymbols). The time domain resource parameters are configured by other configurations, and are not configured by the first configuration or the second configuration.

It is stipulated by the communication protocol that no network device is required for configuration, and there is no additional DCI overhead. Taking the uplink channel resource as a PUCCH resource as an example, the advantage of agreeing to use the first configuration is to ensure that the PUCCH resource falls within the valid UL resource, and the advantage of agreeing to use the second configuration is to avoid fragmentation of the uplink resource and reduce link interference.

For example, a slot in a period of time includes only SBFD symbols, and the communication protocol stipulates that the first configuration is used. For another example, a slot in another period of time includes only non-SBFD symbols, and the communication protocol stipulates that the second configuration is used. For another example, if the communication protocol stipulates the window parameter of at least one time window and the correspondence relationship between each time window and the first configuration or the second configuration, the apparatus of determining an uplink channel resource may determine the first configuration or the second configuration used in the current time window according to the correspondence relationship. The window parameter of the time window includes at least one of: start position, end position, length, cycle start point, and cycle length.

In a possible design of the present embodiment, UE is provided with the first configuration and the second configuration for each of {PUCCH resource set, PUCCH resources except the startingSymbolIndex and nrofSymbols}, respectively, for use with PUCCH (SR, CSI, HARQ-ACK) occupying a first symbol type and a second symbol type, respectively, where the first symbol type is SBFD symbol type and the second symbol type is non-SBFD symbol type.

In a possible design of the present embodiment, UE is provided with the first configuration and the second configuration for each of {PUCCH resource set, PUCCH resource}, respectively, for use with PUCCH (SR, CSI, HARQ-ACK) occupying a first symbol type and a second symbol type, respectively, where the first symbol type is an SBFD symbol and the second symbol type is a non-SBFD symbol. UE expects the corresponding PUCCH resources in the first configuration and the second configuration to occupy the same symbols.

In a possible design of the present embodiment, the apparatus of determining an uplink channel resource is configured with a second configuration parameter and an offset value, the second configuration parameter corresponds to the second configuration, the offset value is an RB offset, and the RB offset is for adjusting a frequency domain offset of the PUCCH resource. Taking the first configuration corresponding to SBFD symbols and the second configuration corresponding to non-SBFD symbols as an example, the RB offset is a frequency domain offset of a PUCCH resource located in the SBFD symbols with respect to a PUCCH resource located in the non-SBFD symbols.

In a possible design of the present embodiment, the apparatus of determining an uplink channel resource is configured with a first configuration parameter and an offset value, the first configuration parameter corresponds to the first configuration, and the offset value is a RB offset. Taking the first configuration corresponding to SBFD symbols and the second configuration corresponding to non-SBFD symbols as an example, the RB offset is a frequency domain offset of a PUCCH resource located in the non-SBFD symbols with respect to a PUCCH resource located in the SBFD symbols.

FIG. 16 shows a schematic diagram of a PUCCH resource offset according to an exemplary embodiment of the present disclosure, in which the apparatus of determining an uplink channel resource is configured with a second configuration parameter (PUCCH configuration 3) and an offset value, the offset value is a RB offset, the first configuration corresponds to SBFD symbols and the second configuration corresponds to non-SBFD symbols, and the frequency domain resource parameter in the PUCCH configuration 3 is added with the offset value to form the PUCCH configuration 4 together with other resource parameters.

FIG. 17 is a schematic diagram of a PUCCH resource offset according to an exemplary embodiment of the present disclosure. In a possible design of the present embodiment, the start position of the PUCCH resource corresponding to the non-SBFD symbol is configured startingRB, and the start position of the PUCCH resource corresponding to the SBFD symbol is (startingPRB + RB_offset) mod (UL_subband size ∩ active UL BWP size), where startingPRB is a starting physical resource block, RB_offset is an RB offset, UL_subband size is an UL subband size, active UL BWP size is an active uplink BWP size, ∩ is an intersection operation, and mod is a remainder operation. The RB occupied by the PUCCH resource located in the SBFD symbols is 1 RB or n RBs from the start position, and the value of n is the parameter nrofPRBs.

In a possible design of the present embodiment, the RB offset may be one RB offset, or a list of RB offsets, wherein each RB offset corresponds to one PUCCH resource or one PUCCH resource set.

In a possible design of the present embodiment, the apparatus of determining an uplink channel resource is configured to receive a set of configuration parameters (PUCCH-Config), and each PUCCH resource set in the set of configuration parameters includes N PUCCH resources, N is twice the maximum number of PUCCH resources that can be configured in the current PUCCH resource set, where the first N/2 PUCCH resources correspond to non-SBFD symbols and the last N/2 PUCCH resources correspond to SBFD symbols, or, the first N/2 PUCCH resources correspond toSBFD symbols and the last N/2 PUCCH resources correspond to non-SBFD symbols. The first N/2 PUCCH resources and the last N/2 PUCCH resources share or do not share time domain configurations.

In a possible design of the present embodiment, the apparatus of determining an uplink channel resource is configured to receive a set of configuration parameters (PUCCH-Config), and M PUCCH resource sets are included in the set of configuration parameters. The first M/2 PUCCH resource sets correspond to non-SBFD symbols and the last M/2 PUCCH resource sets correspond to SBFD symbols, or, the first M/2 PUCCH resource sets correspond to SBFD symbols and the last M/2 PUCCH resource sets correspond to non-SBFD symbols. The first M/2 PUCCH resource sets and the last M/2 PUCCH resource sets share or do not share time domain configuration.

In a possible design of the present embodiment, the separately configured information in the above method may further include at least one of the following in addition to the PUCCH resource: a PUCCH power control configuration parameter (PUCCH-PowerControl), a PUCCH spatial configuration parameter (PUCCH-SpatialRelationInfo), an SR configuration parameter (SchedulingRequestResourceConfig), and the like. The shared configurion information in the above method may further include a time domain offset configuration from PDSCH to HARQ-ACK (dl-DataToUL-ACK).

### Method 5: Determining the target uplink channel resource which is an uplink channel resource used when at least two UCIs are multiplexed.

In a possible design of the present embodiment, the target uplink channel resource is an uplink channel resource used when at least two UCIs are multiplexed, and at least two uplink channel resources corresponding to at least two UCIs prior to multiplexing are in the same time unit, or at least two uplink channel resources overlap.

The apparatus of determining an uplink channel resource is to transmit at least two uplink channel resources (carrying at least two UCIs) in a first slot. The at least two uplink channel resources overlap (partially overlap or fully overlap), or the at least two uplink channel resources are in the same time unit (slot, sub-slot, symbol group, etc.). The first slot is of a mixed symbol slot type, that is, including SBFD symbols and non-SBFD symbols, then the apparatus of determining an uplink channel resource may multiplex the at least two UCIs in the target uplink channel resource for transmission.

In a possible design of the present embodiment, related parameters of the first configuration or the second configuration include at least one of: frequency domain resource parameters (e.g., starting physical resource block (startingPRB), second hop physical resource block (secondHopPRB)), maximum code rate (maxCodeRate), OCC parameters, and time domain resource parameters (e.g., starting symbol index (startingSymbolIndex), the number of symbols (nrofSymbols)).

The first configuration or the second configuration may be a PUCCH configuration (PUCCH-Config), a PUCCH resource set (PUCCH-ResourceSet), or a PUCCH resource (PUCCH-resource).

In some embodiments, the related parameters include at least one of: frequency domain resource parameters (e.g., starting physical resource block (startingPRB), second hop physical resource block (secondHopPRB)), maximum code rate (maxCodeRate), and OCC parameters. The related parameters exclude time domain resource parameters, such as starting symbol index (startingSymbolIndex) and number of symbols (nrofSymbols). The time domain resource parameters are configured by other configurations, and are not configured by the first configuration or the second configuration.

In a possible design of the present embodiment, the determining module 2710 is configured to determine the target uplink channel resource by at least one of the following manners.

**Manner** 1: The determining module 2710 is configured to determine the target uplink channel resource from the uplink channel resources configured by the first configuration when at least two uplink channel resources correspond to the first configuration; and determine the target uplink channel resource from the uplink channel resources configured by the second configuration when at least two uplink channel resources all correspond to the second configuration.

As an example in which the uplink channel resource is a PUCCH resource, FIG. 19 shows a schematic diagram of determining a PUCCH resource according to an exemplary embodiment of the present disclosure. Exemplarily, the first configuration indicates PUCCH resource set 1 and PUCCH resource set 2, each PUCCH resource in the PUCCH resource set 1 occupies 2 symbols, and each PUCCH resource in the PUCCH resource set 2 occupies 4 symbols (not shown in the figure). Assuming that both PUCCH1 and PUCCH2 belong to the PUCCH resource set 1, if payloads formed after multiplexing at least two UCIs correspond to the PUCCH resource set 2, the target PUCCH resource is a PUCCH resource selected from the PUCCH resource set 2.

**Manner 2:** The determining module 2710 is configured to determine the target uplink channel resource from the uplink channel resources configured by the first configuration when at least two uplink channel resources correspond to the first configuration and the second configuration; or, determine the target uplink channel resource from the uplink channel resources configured by the second configuration when at least two uplink channel resources correspond to the first configuration and the second configuration.

Taking the uplink channel resource as a PUCCH resource as an example, FIG. 20 shows a schematic diagram of determining a PUCCH resource according to an exemplary embodiment of the present disclosure. Exemplarily, the first configuration indicates PUCCH resource set 1 and PUCCH resource set 2, each PUCCH resource in the PUCCH resource set 1 occupies 2 symbols, and each PUCCH resource in the PUCCH resource set 2 occupies 4 symbols (not shown in the figure). The second configuration indicates PUCCH resource set 3, each PUCCH resource in the PUCCH resource set 3 occupies 2 symbols, and each PUCCH resource in the PUCCH resource set 4 occupies 4 symbols (not shown).

It is assumed that PUCCH1 belongs to PUCCH resource set 1 and corresponds to the first configuration, and PUCCH2 belongs to the PUCCH resource set 3 and corresponds to the second configuration. In a case where the target PUCCH resource after multiplexing always adopts the second configuration, if the payload formed after multiplexing at least two UCIs corresponds to the PUCCH resource set 2 or 4, then the target PUCCH resource is a PUCCH resource selected from the PUCCH resource set 4.

If at least two PUCCH resources correspond to the first configuration and the second configuration, and the target PUCCH resource corresponds to the first configuration, taking the first configuration corresponding to SBFD symbols as an example, an intermediate subband of the SBFD symbols may be configured as an UL subband to ensure that the target PUCCH resource is within a valid UL resource. Alternatively, if at least two PUCCH resources correspond to the first configuration and the second configuration, and the target PUCCH resource corresponds to the second configuration, taking the second configuration corresponding to non-SBFD symbols as an example, uplink resource fragmentation can be avoided and link interference can be reduced.

**Manner 3:** The determining module 2710 is configured to, when the at least two uplink channel resources correspond to the first configuration and the second configuration, and the at least two uplink channel resources comprise the first uplink channel resource which is dynamically scheduled, determine the target uplink channel resource according to at least one of the following:
a time domain resource type corresponding to the first uplink channel resource; a configuration corresponding to the first uplink channel resource; and DCI corresponding to the first uplink channel resource.

### Case 1: The target uplink channel resource is determined according to the time domain resource type corresponding to the first uplink channel resource.

In a possible design of the present embodiment, the determining module 2710 is configured to determine the target uplink channel resource from the uplink channel resources configured by the first configuration when at least two uplink channel resources correspond to the first configuration and the second configuration, the at least two uplink channel resources include the first uplink channel resource which is dynamically scheduled, and the first uplink channel resource is located in the first type of time domain resources;
determine the target uplink channel resource is determined from the uplink channel resources configured by the second configuration when the at least two uplink channel resources correspond to the first configuration and the second configuration, the at least two uplink channel resources include the first uplink channel resource which is dynamically scheduled, and the first uplink channel resource is located in the second type of time domain resources.

For example, when the uplink channel resource is a PUCCH resource and the time domain resource is a symbol, in a case where the first PUCCH resource is located in SBFD symbols, a target PUCCH resource is determined from the PUCCH resources configured by the first configuration; when the first PUCCH resource is located in non-SBFD symbols, the target PUCCH resource is determined from the PUCCH resources configured by the second configuration.

FIG. 21 is a schematic diagram of determining a PUCCH resource according to an exemplary embodiment of the present disclosure. It is assumed that at least two PUCCH resources are PUCCH 1 and PUCCH 2, in a case where PUCCH 1 corresponds to the first configuration and PUCCH 2 corresponds to the second configuration, the first PUCCH resource dynamically scheduled by DCI is PUCCH 1; and when PUCCH 1 is located in SBFD symbols, the target PUCCH resource is determined from among the PUCCH resources configured by the first configuration. For example, a PUCCH resource set in the first configuration is determined based on payloads formed after multiplexing at least two UCIs, and the target PUCCH resource is determined from the PUCCH resource set.

### Case 2: The target uplink channel resource is determined according to the configuration corresponding to the first uplink channel resource.

In a possible design of the present embodiment, the determining module 2710 is configured to: determine the target uplink channel resource from the uplink channel resources configured by the first configuration when at least two uplink channel resources correspond to the first configuration and the second configuration, the at least two uplink channel resources comprise a first uplink channel resource which is dynamically scheduled, and the first uplink channel resource corresponds to the first configuration;
determine the target uplink channel resource from the uplink channel resources configured by the second configuration when at least two uplink channel resources correspond to the first configuration and the second configuration, the at least two uplink channel resources comprise a first uplink channel resource which is dynamically scheduled, and the first uplink channel resource corresponds to the second configuration.

Continuing with reference to FIG. 21, assuming that at least two PUCCH resources are PUCCH 1 and PUCCH 2, when PUCCH 1 corresponds to the first configuration and PUCCH 2 corresponds to the second configuration, the first PUCCH resource dynamically scheduled by DCI is PUCCH 1, and when PUCCH 1 corresponds to the first configuration, the target PUCCH resource is determined among the PUCCH resources configured by the first configuration. For example, a PUCCH resource set in the first configuration is determined based on payloads formed after multiplexing at least two UCIs, and the target PUCCH resource is determined from the PUCCH resource set.

### Case 3: The target uplink channel resource is determined according to the DCI corresponding to the first uplink channel resource.

In a possible design of the present embodiment, the determining module 2710 is configured to: determine the target uplink channel resource from the uplink channel resources configured by the first configuration when at least two uplink channel resources correspond to the first configuration and the second configuration, the at least two uplink channel resources comprise a first uplink channel resource which is dynamically scheduled, and the second DCI indicates the first configuration; and/or,
determine the target uplink channel resource from the uplink channel resources configured by the second configuration when the at least two uplink channel resources correspond to the first configuration and the second configuration, the at least two uplink channel resources comprise the first uplink channel resource which is dynamically scheduled, and the second DCI indicates the second configuration.

When the first uplink channel resource which is dynamically scheduled exists among at least two uplink channel resources, the target uplink channel resource is determined according to a time domain resource type corresponding to the first uplink channel resource, a configuration corresponding to the first uplink channel resource, or DCI corresponding to the first uplink channel resource, which is more flexible and adapts to requirements in different scenarios.

In a possible design of the present embodiment, a second indication field in the second DCI is used to indicate the first configuration or the second configuration; or a DCI format in the second DCI is for indicating the first configuration or the second configuration; or an RNTI for scrambling the second DCI is for indicating the first configuration or the second configuration; or, a resource location or resource index carrying the second DCI is for indicating the first configuration or the second configuration.

Exemplarily, the second indication field indicates the first configuration or the second configuration by one bit, for example, when the bit value is 0, it is used to indicate the first configuration, and when the bit value is 1, it is used to indicate the second configuration. When the DCI format of the second DCI is Format A, it is used to indicate the first configuration; when the DCI format of the second DCI is format B, it is used to indicate the second configuration. When the RNTI is a first RNTI, it is used to indicate the first configuration; when the RNTI is a second RNTI, it is used to indicate the second configuration. In a case where the resource index is a CCE index, when the CCE index number is 1, it is used to indicate the first configuration; when the CCE index number is 2, it is used to indicate the second configuration.

Through the above-described different indication manners, the first configuration or the second configuration can be indicated accurately in different situations.

If there are a plurality of dynamically scheduled first uplink channel resources, configuration information corresponding to the target uplink channel resource may be determined according to an indication of the last DCI among the plurality of DCIs corresponding to the plurality of dynamically scheduled first uplink channel resources, or according to configuration information corresponding to the uplink channel resource indicated by the last DCI.

In a possible design of the present embodiment, the determining module 2710 is configured to: determine the target uplink channel resource from the uplink channel resources configured by the first configuration when at least two uplink channel resources correspond to the first configuration and the second configuration, at least two first uplink channel resources dynamically scheduled by at least two second DCIs exist among the at least two uplink channel resources, and the last DCI indicates the first configuration;
determine the target uplink channel resource from the uplink channel resources configured by the second configuration when the at least two uplink channel resources correspond to the first configuration and the second configuration, there are at least two first uplink channel resources dynamically scheduled by the at least two second DCIs among the at least two uplink channel resources, and the last DCI indicates the second configuration.

The at least two second DCIs correspond to at least two first uplink channel resources one-to-one, and the last DCI is the last one among the at least two second DCIs.

Taking the uplink channel resource as a PUCCH resource as an example, FIG. 22 shows a schematic diagram of determining a PUCCH resource according to an exemplary embodiment of the present disclosure, in which at least two PUCCH resources are PUCCH 1 and PUCCH 2, and in a case where PUCCH 1 corresponds to the first configuration and PUCCH 2 corresponds to the second configuration, DCI 1 indicates PUCCH 1, DCI 2 indicates PUCCH 2, and the second DCI is the last DCI, namely DCI 2. When the DCI 2 indicates the first configuration and the value of the PRI indication field is 00, one target PUCCH resource set is determined from among the plurality of PUCCH resource sets indicated by the first configuration based on payloads formed after multiplexing at least two UCIs, and PUCCH 3 (target PUCCH resource) is the first PUCCH resource in the target PUCCH resource set. The plurality of PUCCH resource sets correspond to different payloads or PUCCH formats.

In a possible design of the present embodiment, the apparatus of determining an uplink channel resource does not expect at least two uplink channel resources to correspond different configurations; or, the apparatus of determining an uplink channel resource expects at least two uplink channel resources to correspond to the same configuration; or, the apparatus of determining an uplink channel resource expects at least two uplink channel resources to correspond to the first configuration; or, the apparatus of determining an uplink channel resource expects at least two uplink channel resources to correspond to the second configuration.

In a possible design of the present embodiment, the apparatus of determining an uplink channel resource does not expect to configure or indicate the target uplink channel resource by the network device, and the target uplink channel resource is in a slot including both the first type time domain resources and the second type of time domain resources.

In a possible design of the present embodiment, configurations corresponding to at least two uplink channel resources include the first configuration and/or the second configuration.

In a possible design of the present embodiment, in an example that the uplink channel resource is a PUCCH resource, in a case where configurations corresponding to at least two PUCCH resources are different and UCI corresponding to at least two PUCCH resources are not multiplexed, two HARQ-ACK codebooks are constructed, and the HARQ-ACK codebook 1 corresponds to the first configuration, and the HARQ-ACK codebook 2 corresponds to the second configuration.

In a possible design of the present embodiment, the receiving module 2720 is configured to receive the first configuration and the second configuration.

In a possible design of the present embodiment, the receiving module 2720 is configured to: receive a first configuration parameter and a second configuration parameter, the first configuration parameter corresponding to the first configuration, and the second configuration parameter corresponding to the second configuration; or receive a first configuration parameter and an offset value, where the first configuration parameter corresponds to the first configuration, and a configuration parameter obtained by offsetting the first configuration parameter based on the offset value corresponds to the second configuration; or receive a set of configuration parameters, the set of configuration parameters including a first configuration parameter and a second configuration parameter, the first configuration parameter corresponding to the first configuration, and the second configuration parameter corresponding to the second configuration.

The separate configuration in the above method includes separately configuring the first configuration parameter and the second configuration parameter; also includes configuring a first configuration parameter, wherein the configuration parameter corresponding to the second configuration is obtained by offsetting the first configuration parameter based on an offset value; and also includes configuring a set of configuration parameters, wherein the set of parameters includes two parts, wherein the first part of the parameters corresponds to the first configuration parameter, and the second part of the parameters corresponds to the second configuration parameter.

In a possible design of the present embodiment, the offset value is a Resource Block (RB) offset (RB offset) or an RB offset list (RB offset list). The RB offset is for adjusting a frequency domain offset of a PUCCH resource. Taking the first configuration corresponding to SBFD symbols and the second configuration corresponding to non-SBFD symbols as an example, the RB offset is a frequency domain offset of a PUCCH resource located in the SBFD symbols with respect to a PUCCH resource located in the non-SBFD symbol, or the RB offset is a frequency domain offset of a PUCCH resource located in the non-SBFD symbol with respect to a PUCCH resource located in the SBFD symbols.

In this embodiment, one determining module 2710 and one receiving module 2720 are taken as an example, and the number of the determining modules 2710 and the receiving modules 2720 is not limited. The function of the determining module 2710 can be described with reference to the contents of step 610 in the embodiment of FIG. 6. The description of the function of the receiving module 2720 may refer to the contents of step 610 in the embodiment of FIG. 6.

FIG. 28 shows a block diagram of an apparatus of determining an uplink channel resource according to an exemplary embodiment of the present disclosure, and the apparatus may be implemented as a terminal device by software or hardware or a combination of both, or may be implemented as a part of the terminal device, and the apparatus includes:

The determining module 2810 is configured to determine a target uplink channel resource from uplink channel resources configured by at least one of a first configuration, a second configuration, and a third configuration.

The third configuration is used to configure related parameters of uplink channel resources in a time unit having a first type of time domain resources and a second type of time domain resources, the first configuration is used to configure related parameters of uplink channel resources in a time unit having (only) the first type of time domain resources, and the second configuration is used to configure related parameters of uplink channel resources in a time unit having (only) the second type of time domain resources.

In a possible design of the present embodiment, the determining module 2810 is configured to determine the target uplink channel resource according to the time domain resource in which the target uplink channel resource is located.

The target uplink channel resource is determined according to the time domain resource where the target uplink channel resource is located. The implementation is simple.

When the time domain resource in which the target uplink channel resource is located is a first type of time domain resource, the target uplink channel resource is determined from the uplink channel resources configured by the first configuration; when the time domain resource in which the target uplink channel resource is located is a second type of time domain resource, the target uplink channel resource is determined from the uplink channel resources configured by the second configuration; when the time domain resource in which the target uplink channel resource is located includes the first type of time domain resource and the second type of time domain resource, the target uplink channel resource is determined from the uplink channel resources configured by the third configuration.

For example, the first configuration, the second configuration, and the third configuration correspond to a first slot type, a second slot type, and a third slot type, respectively. The first slot type is a slot type including only SBFD symbols, the second slot type is a slot type including only non-SBFD symbols, and the third slot type is a slot type including both SBFD symbols and non-SBFD symbols.

In a possible design of the present embodiment, the uplink channel resources used for at least one type of signal among an SR, a CSI report and an SPS HARQ-ACK corresponding to the first configuration are the uplink channel resources configured by the first configuration; uplink channel resources used for at least one type of signal among an SR, a CSI report and an SPS HARQ-ACK corresponding to the second configuration are the uplink channel resources configured by the second configuration; and uplink channel resources used for at least one type of signal among an SR, a CSI report and an SPS HARQ-ACK corresponding to the third configuration are the uplink channel resources configured in the third configuration.

In a possible design of the present embodiment, the receiving module 2820 is configured to receive the first configuration and the third configuration; or receive the second configuration and the third configuration; or receive the first configuration, the second configuration, and the third configuration.

In some embodiments, the receiving module 2820 is further configured to receive at least one of first DCI, second DCI, and higher layer signaling.

In this embodiment, one determining module 2810 and one receiving module 2820 are exemplified, and the number of determining modules 2810 and receiving modules 2820 is not limited. The description of the function of the determining module 2810 may refer to the contents of step 2410 in the embodiment of FIG. 24. The description of the function of the receiving module 2820 may refer to the contents of step 2410 in the embodiment of FIG. 24.

FIG. 29 shows a block diagram of an apparatus of transmitting a resource configuration according to an exemplary embodiment of the present disclosure, the apparatus may be implemented as a network device by software or hardware or a combination of both, or may be implemented as a part of the network device. The apparatus includes:
a transmitting module 2910, configured to transmit first configuration and second configuration; wherein the first configuration and the second configuration are used to configure related parameters of uplink channel resources, the first configuration corresponds to a first type of time domain resources, and the second configuration corresponds to a second type of time domain resources.

In a possible design of the present embodiment, the transmitting module 2910 is configured to: transmit a first configuration parameter and a second configuration parameter, the first configuration parameter corresponding to the first configuration, and the second configuration parameter corresponding to the second configuration; or transmit a first configuration parameter and an offset value, the first configuration parameter corresponding to the first configuration, and a configuration parameter obtained by offsetting the first configuration parameter based on the offset value corresponding to the second configuration; or transmit a set of configuration parameters, the set of configuration parameters including a first configuration parameter and a second configuration parameter, the first configuration parameter corresponding to the first configuration, and the second configuration parameter corresponding to the second configuration.

The separate configuration in the above method includes separately configuring the first configuration parameter and the second configuration parameter; also includes configuring a first configuration parameter, wherein the configuration parameter corresponding to the second configuration is obtained by offsetting the first configuration parameter based on an offset value; and also includes configuring a set of configuration parameters, wherein the set of parameters includes two parts, wherein the first part of the parameters corresponds to the first configuration parameters and the second part of the parameters corresponds to the second configuration parameters.

In a possible design of this embodiment, the offset value is a Resource Block (RB) offset, and the RB offset is used to adjust a frequency domain resource of a PUCH resource. Take the first configuration corresponding to SBFD symbols and the second configuration corresponding to non-SBFD symbols as an example, and take the uplink channel resource as a PUCH resource as an example. The RB offset is the frequency domain offset of a PUCCH resource located in the SBFD symbols relative to a PUCCH resource located in the non-SBFD symbols, or the RB offset is the frequency domain offset of a PUCCH resource located in the non-SBFD symbols relative to a PUCCH resource located in the SBFD symbols.

In a possible design of the present embodiment, the uplink channel resource includes at least one of: a PUCCH resource, a Physical Uplink Shared CHannel (PUSCH) resource, a Physical Random Access Channel (PRACH) resource, and the like. This is not limited in the embodiments of the present disclosure, and generally a PUCCH resource is used as an example.

In a possible design of the present embodiment, the time domain resource includes at least one of: a symbol, a symbol group, a slot, a sub-slot, a frame, and a sub-frame. In the embodiments of the present disclosure, the specific type of the time domain resource is not limited, and generally, the first configuration corresponds to the first type of symbols, and the second configuration corresponds to the second type of symbols. For example, the first configuration corresponds to SBFD symbols, and the second configuration corresponds to non-SBFD symbols. The SBFD symbol is a symbol including at least one of an UL subband, a DL subband, and a guard band; and the non-SBFD symbol is a symbol not including the above subbands.

In a possible design of the present embodiment, the first configuration is applicable to a slot in which all symbols are SBFD symbols, and also to a slot in which some symbols are SBFD symbols. The second configuration is applicable to a slot in which all symbols are non-SBFD symbols, and also to a slot in which some symbols are non-SBFD symbols.

In a possible design of the present embodiment, the first configuration and the second configuration share time domain resource parameters.

In a possible design of the present embodiment, the first configuration and the second configuration do not share time domain resource parameters.

In a possible design of the present embodiment, the target uplink channel resource is a resource for transmitting Uplink Control Information (UCI). In a possible design of the present embodiment, the target uplink channel resource is a resource for feeding back a HARQ-ACK or a HARQ-ACK codebook. In a possible design of the present embodiment, the target uplink channel resource is a resource for multiplexing at least two UCIs.

In a possible design of the present embodiment, the related parameters include at least one of: frequency domain resource parameters (e.g., starting physical resource block (startingPRB), second hop physical resource block (secondHopPRB)), maximum code rate (maxCodeRate), Orthogonal Cover Code (OCC) parameters, and time domain resource parameters (e.g., starting symbol index (startingSymbolIndex), the number of symbols (nrofSymbols)).

In a possible design of the present embodiment, in the first configuration and the second configuration, associated uplink channel resources correspond to a same time domain resource configuration. In this case, the time domain resource parameters are not included in the related parameter determined according to the first configuration or the second configuration for the target uplink channel resource.

In a possible design of the present embodiment, the terminal device expects that in the first configuration and the second configuration, associated uplink channel resources correspond to a same time domain resource configuration; and/or the terminal device does not expect that in the first configuration and the second configuration, the associated uplink channel resources correspond to different time domain resource configurations. That is, the time domain resource parameters are carried in the first configuration and the second configuration, and are identical in both the configurations.

The apparatus of transmitting a resource configuration will try to comply with the expectations of the terminal device for configuration, but it may not comply with 100% expectations of the terminal device for configuration. In some cases, the apparatus of transmitting a resource configuration may transmit configuration information in an unexpected manner of the terminal device. In this case, how the terminal device processes the unexpected configuration information is not limited herein; for example, it may be independently implemented by the terminal device.

In a possible design of the present embodiment, the time domain resource configurations corresponding to the associated uplink channel resources do not need to be separately configured, so that the time domain resources are the same regardless of which configuration is used by the terminal device to determine the uplink channel resource.

In a possible design of the present embodiment, the time domain resource parameters shared by the first configuration and the second configuration are additionally configured by the apparatus of transmitting a resource configuration, or are specified by a communication protocol. In this case, the time domain resource parameters are not included in the first configuration and the second configuration.

In a possible design of the present embodiment, the associated uplink channel resources correspond to the same uplink channel resource ID; or, the associated uplink channel resources correspond to two uplink channel resource IDs having a pre-agreed correspondence relationship.

In a possible design of the present embodiment, as an example in which the uplink channel resource is a PUCCH resource, the first PUCCH resource set is configured by the first configuration, and the second PUCCH resource set is configured by the second configuration. The first PUCCH resource set and the second PUCCH resource set are from different configurations, but there are associated PUCCH resources in the two PUCCH resource sets.

In a possible design of the present embodiment, uplink channel resources corresponding to the same uplink channel resource ID are associated; or, the uplink channel resources corresponding to two uplink channel resource IDs having a pre-agreed correspondence relationship are associated with each other.

The associated uplink channel resources may correspond to the same uplink channel resource ID, or may correspond to two uplink channel resource IDs having a pre-agreed correspondence relationship, which can adapt to the association requirements of uplink channel resources in different situations.

In a possible design of the present embodiment, the related parameters include at least one of: frequency domain resource parameters (e.g., starting physical resource block (startingPRB), second hop physical resource block (secondHopPRB)), maximum code rate (maxCodeRate), and Orthogonal Cover Code (OCC) parameters. The related parameters exclude time domain resource parameters, such as starting symbol index (startingSymbolIndex) and number of symbols (nrofSymbols). The time domain resource parameters are configured by other configurations, and are not configured by the first configuration or the second configuration.

When the related parameters exclude time domain resource parameters, the time domain resource parameters may be configured through other configurations, which is more flexible.

In a possible design of the present embodiment, the PUCCH resources used for at least one type of signal among a Scheduling Request (SR), a Channel-State Information (CSI) report, and a Semi-Persistent Scheduling Hybrid Automatic Repeat reQuest ACKnowledgment (SPS HARQ-ACK) corresponding to the first configuration are the PUCCH resources configured by the first configuration; the PUCCH resources used for at least one type of signal among a SR, a CSI report and a SPS HARQ-ACK corresponding to the second configuration are the PUCCH resources configured by the second configuration.

In a possible design of the present embodiment, the related parameters of the SR, CSI report, SPS HARQ-ACK are configured in respective corresponding configurations (the first configuration or second configuration), for example in respective corresponding PUCCH configurations (PUCCH-Config).

In a possible design of the present embodiment, the transmitting module 2910 is configured to transmit first DCI, the first DCI being configured to indicate the first configuration or the second configuration, and to indicate a target uplink channel resource to be used by the terminal device.

In a possible design of the present embodiment, the manner in which the first DCI indicates the first configuration or the second configuration includes explicit indication and implicit indication.

**Explicit indication:** In a possible design of the present embodiment, the first DCI includes a first indication field for indicating the first configuration or the second configuration.

In some embodiments, the first indication field is a newly added indication field, or is part of bits of a known indication field, based on a DCI format known before the filing date.

In a possible design of the present embodiment, the first indication field is an indication field newly added in addition to an uplink channel resource indication field, or the first indication field is part of bits of the uplink channel resource indication field.

When the first indication field is the indication field newly added in addition to the uplink channel resource indication field, the first configuration or the second configuration may be more flexibly indicated; when the first indication field is part of bits of the uplink channel resource indication field, such as the highest bit or the lowest bit of the PRI indication field, no additional DCI overhead is added.

In a possible design of the present embodiment, the first indication field is part of bits of the uplink channel resource indication field, including that: the first indication field is the highest bit or the lowest bit of the PRI indication field.

The highest bit or lowest bit of the PRI indication field is used to indicate the first configuration or the second configuration, and the remaining bits in the PRI indication field are used to indicate the PUCCH resource in the first configuration or the second configuration.

In a possible design of the present embodiment, when the time domain resource includes a sub-time domain resource type, the sub-time domain resource type is used to indicate the first configuration or the second configuration; when the time domain resource includes at least two sub-time domain resource types, the first DCI includes the first indication field for indicating the first configuration or the second configuration.

Exemplarily, when one slot includes only one symbol type, the first configuration or the second configuration is determined by the symbol type, and all bits of the first indication field (PRI indication field) are used to indicate PUCCH resources; when one slot includes at least two symbol types, some bits in the first indication field are used to indicate the first configuration or the second configuration, and the remaining bits are used to indicate the target PUCCH resource. As shown in FIG. 7, when only SBFD symbols are included in a slot, the first configuration is determined by the symbol type; when only non-SBFD symbols are included in the slot, the second configuration is determined by the symbol type; when the slot includes SBFD symbols and non-SBFD symbols, the highest bit in the first indication field is used to indicate the first configuration or the second configuration, and the remaining bit is used to indicate the target PUCCH resource.

**Implicit indication:** In a possible design of the present embodiment, the DCI format of the first DCI is used to indicate the first configuration or the second configuration; or, the DCI format of the first DCI is associated with the first configuration or the second configuration; or a Radio Network Temporary Identifier sequence (RNTI) for scrambling the first DCI is used to indicate the first configuration or the second configuration; or, the RNTI for scrambling the first DCI is associated with the first configuration or the second configuration; or a resource location or resource index of a downlink control resource carrying the first DCI is for indicating the first configuration or the second configuration; or, a resource location or resource index of a downlink control resource carrying the first DCI is associated with the first configuration or the second configuration.

Exemplarily, when the DCI format of the first DCI is Format A, is used to indicate the first configuration; when the DCI format of the first DCI is format B, it is used to indicate the second configuration. When the RNTI is a first RNTI, is used to indicate the first configuration; when the RNTI is a second RNTI, it is used to indicate the second configuration.

For example, in a case where the resource index is a Control Channel Element (CCE) index, when the CCE index number is 1, it is used to indicate the first configuration; when the CCE index number is 2, it is used to indicate the second configuration. In an implementation, the CCE index number may refer to the lowest CCE index number in which the PDCCH is located or the highest CCE index number in which the PDCCH is located.

By indicating the first configuration or the second configuration in different ways, the requirements in different scenarios can be met, and additional DCI overhead is not required.

In a possible design of the present embodiment, the transmitting module 2910 is configured to transmit higher layer signaling to the terminal device, and the higher layer signaling is configured to indicate the first configuration or the second configuration.

In a possible design of the present embodiment, the first configuration or the second configuration is used in a slot including at least two types of time domain resources based on the configuration of higher layer signaling. Here, the higher layer refers to the protocol layer above the physical layer, such as System Information Block (SIB), Radio Resource Control (RRC), and Media Access Control (MAC).

Configuring the higher layer signaling by the apparatus of transmitting a resource configuration can support diversified configuration methods. Such confiuration may be implemented according to actual requirements, and does not require additional DCI overhead. Taking the uplink channel resource as a PUCCH resource as an example, the advantage of agreeing to use the first configuration is to ensure that the PUCCH resource falls within a valid UL resource, and the advantage of agreeing to use the second configuration is to avoid fragmentation of the uplink resource and reduce link interference.

For example, a slot within a period of time includes only SBFD symbols, and the apparatus of transmitting a resource configuration instructs the terminal device through higher layer signaling to use the first configuration. For another example, the slot in another period of time includes only non-SBFD symbols, and the apparatus of transmitting a resource configuration instructs the terminal device through higher layer signaling to use the second configuration. For another example, the higher layer signaling carries the window parameter of at least one time window and the correspondence relationship between each time window and the first configuration or the second configuration, and the terminal device determines the first configuration or the second configuration used in the current time window according to the correspondence relationship. The window parameter of the time window includes at least one of: start position, end position, length, cycle start point, and cycle length.

In a possible design of the present embodiment, the first configuration or the second configuration is used for the terminal device to determine the target uplink channel resource to be used. The target uplink channel resource is an uplink channel resource used when at least two UCIs of the terminal device are multiplexed, and at least two uplink channel resources corresponding to the at least two UCIs prior to multiplexing are in the same time unit, or at least two uplink channel resources overlap.

In a possible design of the present embodiment, the determining module 2920 is configured to determine a target uplink channel resource to be used by the terminal device, wherein the target uplink channel resource is an uplink channel resource used when at least two UCIs of the terminal device are multiplexed.

In a possible design of the present embodiment, after the target uplink channel resource to be used by the terminal device is determined, the receiving module 2930 is configured to receive at least two multiplexed UCIs on the target uplink channel resource.

In a possible design of the present embodiment, the target uplink channel resource is an uplink channel resource used when at least two UCIs of the terminal device are multiplexed, and at least two uplink channel resources corresponding to the at least two UCIs prior to multiplexing are in the same time unit, or at least two uplink channel resources overlap.

Taking the uplink channel resource as a PUCCH resource as an example, when the terminal device is to transmit at least two PUCCH resources (carrying at least two UCIs) in a first slot, at least two PUCCH resources overlap (partially overlap or fully overlap), or at least two PUCCH resources are in the same time unit (slot, sub-slot, symbol group, etc.); the first slot is of a mixed symbol slot type, that is, including SBFD symbols and non-SBFD symbols, the terminal device multiplexes at least two UCIs in the target PUCCH resource for transmission.

In a possible design of the present embodiment, in a case where the first uplink channel resource which is dynamically scheduled is included among the at least two uplink channel resources, the apparatus of transmitting a resource configuration determines a target uplink channel resource for multiplexing at least two UCIs for the terminal device based on a multiplexing resource determination manner of the related art. The transmitting module 2910 is further configured to transmit second DCI, and the second DCI is configured to indicate the first configuration or the second configuration corresponding to the target uplink channel resource, and is configured to indicate the first uplink channel resource.

**Case 1:** The time domain resource type corresponding to the first uplink channel resource indicated by the second DCI is the same as the time domain resource type corresponding to the target uplink channel resource. That is, when the target uplink channel resource corresponds to a SBFD symbol, the first uplink channel resource also corresponds to a SBFD symbol; and when the target uplink channel resource corresponds to a non-SBFD symbol, the first uplink channel resource also corresponds to a non-SBFD symbol.

**Case 2:** The configuration corresponding to the first uplink channel resource indicated by the second DCI is the same as the configuration corresponding to the target uplink channel resource. That is, when the target uplink channel resource corresponds to the first configuration, the first uplink channel resource also corresponds to the first configuration; when the target uplink channel resource corresponds to the second configuration, the first uplink channel resource also corresponds to the second configuration.

**Case 3:** a second indication field in the second DCI is for indicating the first configuration or the second configuration; or a DCI format in the second DCI is for indicating the first configuration or the second configuration; or an RNTI for scrambling the second DCI is for indicating the first configuration or the second configuration; or, a resource location or resource index carrying the second DCI is for indicating the first configuration or the second configuration.

Exemplarily, the second indication field indicates the first configuration or the second configuration by one bit. For example, when the bit value is 0, the first configuration is indicated, and when the bit value is 1, the second configuration is indicated. When the DCI format of the second DCI is Format A, it is used to indicate the first configuration; and when the DCI format of the second DCI is Format B, it is used to indicate the second configuration. When the RNTI is a first RNTI, it is used to indicate the first configuration; and when the RNTI is a second RNTI, it is used to indicate the second configuration. When the resource index is a CCE index, when the CCE index number is 1, it is used to indicate the first configuration; and when the CCE index number is 2, it is used to indicate the second configuration.

Through the above-described different indication manners, the first configuration or the second configuration can be accurately indicated in different situations.

In a possible design of the present embodiment, in a case where at least two first uplink channel resources are dynamically scheduled by at least two second DCIs, the transmitting module 2910 is configured to transmit last DCI, and the last DCI is configured to indicate the first configuration or the second configuration corresponding to the target uplink channel resource, wherein the last DCI is the last one among the at least two second DCIs.

In a possible design of the present embodiment, the determining module 2920 is configured to determine, from the uplink channel resources configured by the first configuration or the second configuration, a target uplink channel resource to be used by the terminal device.

In a possible design of the present embodiment, the determining module 2920 is configured to: in a case where the first configuration is used according to provisions of a communication protocol, determine, a target uplink channel resource to be used by the terminal device from the uplink channel resources configured by the first configuration; in a case where the second configuration is used according to the provisions of the communication protocol, determine a target uplink channel resource to be used by the terminal device from the uplink channel resources configured by the second configuration.

It is stipulated by the communication protocol that the apparatus of transmitting a resource configuration is not required for making configuration, and there is no additional DCI overhead. Taking the uplink channel resource as a PUCCH resource as an example, the advantage of agreeing to use the first configuration is to ensure that the PUCCH resource falls within a valid UL resource, and the advantage of agreeing to use the second configuration is to avoid fragmentation of the uplink resource and reduce link interference.

For example, a slot in a period of time includes only SBFD symbols, and the communication protocol stipulates that the first configuration is used; for another example, a slot in another period of time includes only non-SBFD symbols, and the communication protocol stipulates that the second configuration is used. For another example, if the communication protocol stipulates the window parameter of at least one time window and the correspondence relationship between each time window and the first configuration or the second configuration, the terminal device determines the first configuration or the second configuration used in the current time window according to the correspondence relationship. The window parameter of the time window includes at least one of: start position, end position, length, cycle start point, and cycle length.

In a possible design of the present embodiment, the determining module 2920 is configured to: in a case where at least two uplink channel resources all correspond to the first configuration, determinea target uplink channel resource to be used by the terminal device from the uplink channel resources configured by the first configuration; in a case where at least two uplink channel resources all correspond to the second configuration, determine a target uplink channel resource to be used by the terminal device from the uplink channel resources configured by the second configuration.

Taking the uplink channel resource as a PUCCH resource as an example, FIG. 19 shows a schematic diagram of determining a PUCCH resource according to an exemplary embodiment of the present disclosure, in which at least two PUCCH resources include PUCCH 1 and PUCCH 2, and in a case where both PUCCH 1 and PUCCH 2 correspond to the first configuration, a target PUCCH resource to be used by the terminal device is determined from the PUCCH resources configured by the first configuration.

When at least two PUCCH resources all correspond to the first configuration, the target PUCCH resource corresponds to the first configuration; when at least two PUCCH resources all correspond to the second configuration, the target PUCCH resource corresponds to the second configuration.

In a possible design of the present embodiment, the determining module 2920 is configured to: in a case where at least two uplink channel resources correspond to the first configuration and the second configuration, determine a target uplink channel resource to be used by the terminal device from the uplink channel resources configured by the first configuration; or, in a case where at least two uplink channel resources correspond to the first configuration and the second configuration, determine a target uplink channel resource to be used by the terminal device from the uplink channel resources configured by the second configuration.

Taking the uplink channel resource as a PUCCH resource as an example, FIG. 20 shows a schematic diagram of determining a PUCCH resource according to an exemplary embodiment of the present disclosure, in which at least two PUCCH resources include PUCCH 1 and PUCCH 2, and when the PUCCH 1 and the PUCCH 2 correspond to the first configuration and the second configuration, a target PUCCH resource to be used by the terminal device is determined from the PUCCH resources configured by the first configuration.

If at least two PUCCH resources correspond to the first configuration and the second configuration, and the target PUCCH resource corresponds to the first configuration, taking the first configuration corresponding to SBFD symbols as an example, an intermediate subband of the SBFD symbols may be configured as an UL subband to ensure that the target PUCCH resource is within a valid UL resource. Alternatively, if at least two PUCCH resources correspond to the first configuration and the second configuration, and the target PUCCH resource corresponds to the second configuration, taking the second configuration corresponding to non-SBFD symbols as an example, uplink resource fragmentation can be avoided and link interference can be reduced.

In a possible design of the present embodiment, UE is provided with the first configuration and the second configuration for each of {PUCCH resource set, PUCCH resources except the startingSymbolIndex and nrofSymbols}, respectively, for use with PUCCH (SR, CSI, HARQ-ACK) occupying a first symbol type and a second symbol type, respectively, where the first symbol type is SBFD symbol type and the second symbol type is non-SBFD symbol type.

In a possible design of the present embodiment, UE is provided with the first configuration and the second configuration for each of {PUCCH resource set, PUCCH resource}, respectively, for use with PUCCH (SR, CSI, HARQ-ACK) occupying a first symbol type and a second symbol type, respectively, where the first symbol type is an SBFD symbol and the second symbol type is a non-SBFD symbol. UE expects the corresponding PUCCH resources in the first configuration and the second configuration to occupy the same symbols.

In a possible design of the present embodiment, the terminal device is configured with a second configuration parameter and an offset value, the second configuration parameter corresponds to the second configuration, and the offset value is an RB offset, and the RB offset is for adjusting a frequency domain offset of the PUCCH resource. Taking the first configuration corresponding to SBFD symbols and the second configuration corresponding to non-SBFD symbols as an example, the RB offset is a frequency domain offset of a PUCCH resource located in the SBFD symbols with respect to a PUCCH resource located in the non-SBFD symbols.

In a possible design of the present embodiment, the terminal device is configured with a first configuration parameter and an offset value, the first configuration parameter corresponds to the first configuration, and the offset value is a RB offset. Taking the first configuration corresponding to SBFD symbols and the second configuration corresponding to non-SBFD symbols as an example, the RB offset is a frequency domain offset of a PUCCH resource located in the non-SBFD symbols with respect to a PUCCH resource located in the SBFD symbols.

FIG. 16 shows a schematic diagram of a PUCCH resource offset according to an exemplary embodiment of the present disclosure, in which a terminal device is configured with a second configuration parameter (PUCCH configuration 3) and an offset value, the offset value is a RB offset, the first configuration corresponds to SBFD symbols, the second configuration corresponds to non-SBFD symbols, and the frequency domain resource parameter in the PUCCH configuration 3 is added with the offset value to form the PUCCH configuration 4 together with other resource parameters.

FIG. 17 is a schematic diagram of a PUCCH resource offset according to an exemplary embodiment of the present disclosure. In a possible design of the present embodiment, the start position of the PUCCH resource corresponding to the non-SBFD symbols is configured startingRB, and the start position of the PUCCH resource corresponding to the SBFD symbols is (startingPRB + RB_offset) mod (UL_subband size ∩ active UL BWP size), where the startingPRB is a starting physical resource block, the RB_offset is an RB offset, the UL_subband size is an UL subband size, the active UL BWP size is an active uplink bandwidth part (BWP) size, ∩ is an intersection operation, and mod is a remainder operation. The RB occupied by the PUCCH resource located in the SBFD symbols is 1 RB or n RBs from the start position, and the value of n is the parameter nrofPRBs.

In a possible design of the present embodiment, the RB offset may be one RB offset or a list of RB offsets, where each RB offset corresponds to one PUCCH resource or one PUCCH resource set.

In a possible design of the present embodiment, a set of configuration parameters (PUCCH-Config) may be configured for the terminal device, and each PUCCH resource set in the set of configuration parameters includes N PUCCH resources, N is twice the maximum number of PUCCH resources that can be configured in the current PUCCH resource set, where the first N/2 PUCCH resources correspond to non-SBFD symbols, and the last N/2 PUCCH resources correspond to SBFD symbols, or, the first N/2 PUCCH resources correspond toSBFD symbols and the last N/2 PUCCH resources correspond to non-SBFD symbols. The first N/2 PUCCH resources and the last N/2 PUCCH resources share or do not share time domain configurations.

In a possible design of the present embodiment, a set of configuration parameters (PUCCH-Config) may be configured for the terminal device, and M PUCCH resource sets are included in the set of configuration parameters, where the first M/2 PUCCH resource sets correspond to non-SBFD symbols and the last M/2 PUCCH resource sets correspond to SBFD symbols, or the first M/2 PUCCH resource sets correspond to SBFD symbols and the last M/2 PUCCH resource sets correspond to non-SBFD symbols. The first M/2 PUCCH resource sets and the last M/2 PUCCH resource sets share or do not share time domain configurations.

FIG. 18 is a schematic diagram of configuring PUCCH resources according to an exemplary embodiment of the present disclosure. In one slot, the first to seventh symbols are SBFD symbols, and the eighth to fourteenth symbols are non-SBFD symbols. In a possible design of the present embodiment, the first 7 PUCCH resources in the PUCCH resource set are located at a first frequency domain position, and the last 7 PUCCH resources in the PUCCH resource set are located at a second frequency domain position.

In a possible design of the present embodiment, the information separately configured in the above method may further include at least one of the following in addition to the PUCCH resource: a PUCCH power control configuration parameter (PUCCH-PowerControl), a PUCCH spatial configuration parameter (PUCCH-SpatialRelationInfo), an SR configuration parameter (SchedulingRequestResourceConfig), and the like. The shared configurion information in the above method may further include a time domain offset configuration from PDSCH to HARQ-ACK (dl-DataToUL-ACK).

In a possible design of the present embodiment, the receiving module 2930 is configured to determine the target uplink channel resource to be used by the terminal device, and then receive, on the target uplink channel resource, UCI transmitted by the terminal device, such as a HARQ-ACK codebook.

In a possible design of the present embodiment, the terminal device does not expect at least two uplink channel resources to correspond different configurations; or, the terminal device expects at least two uplink channel resources to correspond to the same configuration; or, the terminal device expects at least two uplink channel resources to correspond to the first configuration; or, the terminal device expects at least two uplink channel resources to correspond to the second configuration.

In a possible design of the present embodiment, the terminal device does not expect the target uplink channel resource to be configured or indicated by the apparatus of transmitting a resource configuration, and the target uplink channel resource is in a slot including both the first type time domain resources and the second type of time domain resources.

The apparatus of transmitting a resource configuration will try to comply with the expectations of the terminal device for configuration, but it may not comply with 100% expectations of the terminal device for configuration. In some situations, the apparatus of transmitting a resource configuration may transmit configuration information in a manner unexpected by the terminal device. In this case, how the terminal device processes the unexpected configuration information is not limited herein; for example, it may be independently implemented by the terminal device.

In a possible design of the present embodiment, configurations corresponding to at least two uplink channel resources may include the first configuration and/or the second configuration.

In a possible design of the present embodiment, in a case where configurations corresponding to at least two uplink channel resources are different and UCIs corresponding to the at least two uplink channel resources are not multiplexed, the terminal device may construct two HARQ-ACK codebooks, HARQ-ACK codebook 1 corresponding to the first configuration, and HARQ-ACK codebook 2 corresponding to the second configuration.

In this embodiment, one transmitting module 2910, one determining module 2920, and one receiving module 2930 are taken as an example. The quantity of the transmitting module 2910, the determining module 2920, and the receiving module 2930 is not limited. The description of the function of the transmitting module 2910 may refer to the contents of step 2510 in the embodiment of FIG. 25. The description of the function of the determining module 2920 may refer to the contents of step 2510 in the embodiment of FIG. 25. The description of the function of the receiving module 2930 may refer to the contents of step 2510 in the embodiment of FIG. 25.

FIG. 30 shows a block diagram of an apparatus of transmitting a resource configuration according to an exemplary embodiment of the present disclosure. The apparatus may be implemented as a network device by software or hardware or a combination of both, or may be implemented as a part of the network device. The apparatus includes:
a transmitting module 3010, configured to transmit a third configuration, the third configuration being used to configure related parameters of uplink channel resources in a time unit having a first type time domain resources and a second type of time domain resources.

In a possible design of the present embodiment, the uplink channel resources used for at least one type of signal among a SR, a CSI report and a SPS HARQ-ACK corresponding to the third configuration are the uplink channel resources configured by the third configuration.

In a possible design of the present embodiment, the related parameters of the SR, the CSI report, and the SPS HARQ-ACK are configured in respective corresponding configurations (third configuration), for example in respective corresponding PUCCH configurations (PUCCH-Config).

In a possible design of the present embodiment, the transmitting module 3010 is further configured to transmit a first configuration and/or a second configuration.

The first configuration is used to configure the related parameters of the uplink channel resources in the time unit having (only) the first type of time domain resources, and the second configuration is used to configure the related parameters of the uplink channel resources in the time unit having (only) the second type of time domain resources.

In a possible design of the present embodiment, the uplink channel resources used for at least one type of signal among a SR, a CSI report and a SPS HARQ-ACK corresponding to the first configuration are the uplink channel resources configured by the first configuration. The uplink channel resources used for at least one type of signal among a SR, a CSI report and a SPS HARQ-ACK corresponding to the second configuration are the uplink channel resources configured by the second configuration.

In a possible design of the present embodiment, the related parameters of the SR, CSI report, SPS HARQ-ACK are configured in respective corresponding configurations (first configuration or second configuration), for example in respective corresponding PUCCH configurations (PUCCH-Config).

In a possible design of the present embodiment, the determining module 3020 is configured to determine a target uplink channel resource to be used by the terminal device from the uplink channel resources configured by at least one of the first configuration, the second configuration and the third configuration. The first configuration corresponds to a first type of time domain resources, and the second configuration corresponds to a second type of time domain resources.

In a possible design of the present embodiment, as an example, the first configuration, the second configuration, and the third configuration correspond to a first slot type, a second slot type, and a third slot type, respectively, the first slot type is a slot type including only SBFD symbols, the second slot type is a slot type including only non-SBFD symbols, and the third slot type is a slot type including both SBFD symbols and non-SBFD symbols.

In this embodiment, one transmitting module 3010 and one determining module 3020 are taken as an example. The quantity of the transmitting module 3010 and the determining module 3020 is not limited. The description of the function of the transmitting module 3010 may refer to the contents of step 2610 in the embodiment of FIG. 26. The description of the function of the determining module 3020 may refer to the contents of step 2610 in the embodiment of FIG. 26.

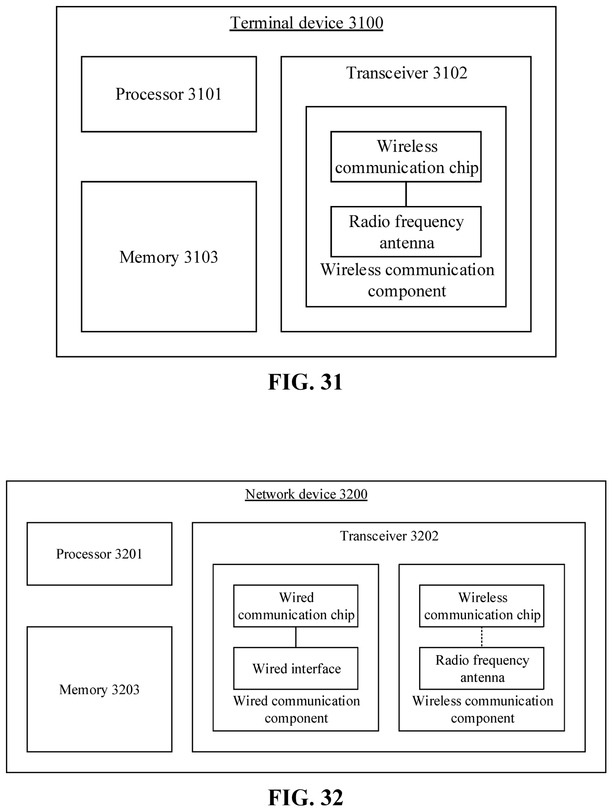

FIG. 31 is a schematic structural diagram of a terminal device according to an exemplary embodiment of the present disclosure. The terminal device 3100 may be used to perform the method steps performed by the terminal device in the above-described embodiments. The terminal device 3100 may include a processor 3101, a transceiver 3102, and a memory 3103. The processor 3101 may be configured to control transmission and/or reception. The transceiver 3102 may be configured to implement the transmission and/or reception functions, such as for implementing the functions of at least one of the receiving module 2720 and the receiving module2820 described above.

The processor 3101 includes one or more than one processing core, and may perform various functional application and information processing by running software programs and modules, such as implementing functions of at least one of the determining module 2710 and the determining module 2810 described above.

The transceiver 3102 may include a receiver and a transmitter. For example, the receiver and the transmitter may be implemented as the same wireless communication component, and the wireless communication component may include a wireless communication chip and a radio frequency antenna.

The memory 3103 may be connected to the processor 3101 and the transceiver 3102.

The memory 3103 may be configured to store a computer program executable by a processor, and the processor 3101 may be configured to execute the computer program to implement various steps in the above-described method embodiments.

Further, the memory 3103 may be implemented by any type of volatile or non-volatile storage device, including, but not limited to, magnetic or optical disk, electrically erasable programmable read-only memory, erasable programmable read-only memory, static ready-to-access memory, read-only memory, magnetic memory, flash memory, programmable read-only memory, or a combination thereof.

In some embodiments, the processor 3101 is configured to determine a target uplink channel resource from uplink channel resources configured by a first configuration or a second configuration. The first configuration and the second configuration are used to configure related parameters of the uplink channel resources, the first configuration corresponds to a first type of time domain resources, and the second configuration corresponds to a second type of time domain resources.

In some embodiments, the processor 3101 is configured to determine a target uplink channel resource from uplink channel resources configured by at least one of a first configuration, a second configuration, and a third configuration. The third configuration is used to configure related parameters of uplink channel resources in a time unit having a first type of time domain resources and a second type of time domain resources, the first configuration is used to configure related parameters of uplink channel resources in a time unit having (only) the first type of time domain resources, and the second configuration is used to configure related parameters of uplink channel resources in a time unit having (only) the second type of time domain resources.

The details not described in this embodiment may refer to the above-described embodiments, and will not be repeated here.

FIG. 32 is a schematic structural diagram of a network device according to an exemplary embodiment of the present disclosure. The network device 3200 may be configured to perform the method steps performed by the network device in the embodiments described above. The network device 3200 may include a processor 3201, a transceiver 3202, and a memory 3203. The processor 3201 may be configured to control transmission and/or reception. The transceiver 3202 may be configured to implement transmission and/or reception functions, such as for implementing the functions of at least one of the transmitting module 2910, the receiving module 2930, and the transmitting module 3010 described above.

The processor 3201 includes one or more than one processing core, and may perform various functional application and information processing by running software programs and modules, such as implementing functions of at least one of the determining module 2920 and the determining module 3020 described above.

The transceiver 3202 may include a receiver and a transmitter. For example, the transceiver 3202 may include a wired communication component, which may include a wired communication chip and a wired interface (such as an optical fiber interface). Optionally, the transceiver 3202 may further include a wireless communication component, and the wireless communication component may include a wireless communication chip and a radio frequency antenna.

The memory 3203 may be connected to the processor 3201 and the transceiver 3202.

The memory 3203 may be configured to store a computer program executable by a processor, and the processor 3201 is configured to execute the computer program to implement various steps performed by the network device in the method embodiments described above.

Further, the memory 3203 may be implemented by any type of volatile or non-volatile storage device, including, but not limited to, magnetic or optical disk, electrically erasable programmable read-only memory, erasable programmable read-only memory, static ready-to-access memory, read-only memory, magnetic memory, flash memory, programmable read-only memory, or a combination thereof.

In some embodiments, the processor 3201 is configured to determine, from the uplink channel resources configured by the first configuration or the second configuration, a target uplink channel resource to be used by the terminal device. The first configuration and the second configuration are used to configure related parameters of the uplink channel resources, the first configuration corresponds to a first type of time domain resources, and the second configuration corresponds to a second type of time domain resources.

In some embodiments, the processor 3201 is configured to determine, from the uplink channel resources configured by at least one of the first configuration, the second configuration and the third configuration, a target uplink channel resource to be used by the terminal device. The third configuration is used to configure related parameters of uplink channel resources in a time unit having a first type of time domain resources and a second type of time domain resources, the first configuration is used to configure related parameters of uplink channel resources in a time unit having (only) the first type of time domain resources, and the second configuration is used to configure related parameters of uplink channel resources in a time unit having (only) the second type of time domain resources.

The details not described in this embodiment may refer to the above-described embodiments, and will not be repeated here.

The embodiments of the present disclosure further provide a computer-readable storage medium. The storage medium has stored a computer program, and the computer program is executable by a processor to implement the method of determining an uplink channel resource on the terminal device side or the method of transmitting a resource configuration on the network device side. In some embodiments, the computer-readable storage medium may include a Read-Only Memory (ROM), a Random-Access Memory (RAM), a Solid State Drive (SSD), an optical disc, or the like. The random access memory may include a Resistance Random Access Memory (ReRAM) and a Dynamic Random Access Memory (DRAM).

The embodiments of the present disclosure further provide a chip. The chip includes a programmable logic circuit and/or program instructions, and is configured for implementing the method of determining an uplink channel resource on the terminal device side or the method of transmitting a resource configuration on the network device side when the chip is running.

The embodiments of the present disclosure further provide a computer program product. The computer program product includes a computer program stored in a computer-readable storage medium, and a processor may read and execute the computer program from the computer-readable storage medium to implement the method of determining an uplink channel resource on the terminal device side or the method of transmitting a resource configuration on the network device side.

It should be understood that the "indication" mentioned in the embodiments of the present disclosure may be a direct indication, an indirect indication, or an associated relationship. For example, A indicates B, which may mean that A directly indicates B, for example, B can be acquired by A; or, which may mean that A indicates B indirectly, for example, A indicates C, and B can be obtained through C; or which may mean that there is an association relationship between A and B.

In the description of the embodiments of the present disclosure, the term "correspond" may represent that there is a direct correspondence or indirect correspondence relationship between the two, or may represent that there is a correlation relationship between the two, or may represent a relationship between indicating and being indicated, configuring and being configured, or the like.

In some embodiments of the present disclosure, "predefined" may be realized by storing corresponding codes, tables in advance in devices (e.g., including terminal devices and network devices), or by other methods available to indicate relevant information, and the present disclosure does not limit the specific implementation manners thereof. For example, "predefined" may refer to what is defined in a protocol.

In some embodiments of the present disclosure, the "protocol" may refer to a standard protocol in the field of communication, and may include, for example, an LTE protocol, an NR protocol, and related protocols applied in future communication systems, and the present disclosure is not limited thereto.

Reference herein to "a plurality" refers to two or more than two. The term "and/or" describes an association relationship between associated objects, which means that there may be three relationships, for example, A and/or B means that there are three situations: A exists alone, both A and B exist, and B exists alone. The character "/" generally indicates that the associated objects before and after are in an "or" relationship.

The term "greater than or equal to" may mean greater than or equal to, or greater than; and "less than or equal to" may mean less than or equal to, or less than.

In addition, the step numbering described herein only illustrates a possible sequence of execution between steps by way of example. In some other embodiments, the above-mentioned steps may also be executed out of the sequence of numbering, for example, two steps with different numbers are executed simultaneously, or two steps with different numbers are executed in the reverse order as shown in the drawings, which is not limited in the embodiments of the present disclosure.

Those skilled in the art should understand that in one or more examples as described above, the functions described in the embodiments of the present disclosure may be implemented by hardware, software, firmware, or any combination thereof. When implemented using software, these functions may be stored in a computer readable medium or transmitted as one or more instructions or codes on a computer readable medium. Computer-readable media include computer storage media and communication media. The communication media includes any medium that facilitates transfer of a computer program from one place to another. The storage medium may be any available medium accessible by a general-purpose or special-purpose computer.

The above are only exemplary embodiments of the present disclosure, and are not intended to limit the present disclosure. Any modification, equivalent substitution, improvement, etc. made within the spirit and principles of the present disclosure should be included within the scope of protection of the present disclosure.

## Claims

1. A method of determining an uplink channel resource, implemented by a terminal device, comprising:
determining a target uplink channel resource from uplink channel resources configured by a first configuration or a second configuration,
wherein the first configuration and the second configuration are used to configure related parameters of the uplink channel resources, the first configuration corresponds to a first type of time domain resources, and the second configuration corresponds to a second type of time domain resources.

2. The method of claim 1, wherein determining the target uplink channel resource from the uplink channel resources configured by the first configuration or the second configuration comprises:
in a case where a time domain resource occupied by the target uplink channel resource is the first type of time domain resource, determining the target uplink channel resource from the uplink channel resources configured by the first configuration; and/or,
in a case where the time domain resource occupied by the target uplink channel resource is the second type of time domain resource, determining the target uplink channel resource from the uplink channel resources configured by the second configuration.

3. The method of claim 1 or 2, wherein in the first configuration and the second configuration, associated uplink channel resources correspond to a same time domain resource configuration.

4. The method of claim 1 or 2, wherein
the terminal device expects that associated uplink channel resources correspond to a same time domain resource configuration in the first configuration and the second configuration; and/or
the terminal device does not expect that the associated uplink channel resources correspond to different time domain resource configurations in the first configuration and the second configuration.

5. The method of claim 3 or 4, wherein the associated uplink channel resources correspond to a same uplink channel resource identification (ID); or, the associated uplink channel resources correspond to two uplink channel resource IDs having a pre-agreed correspondence relationship.

6. The method of claim 1 or 2, wherein the related parameters do not comprise a time domain resource parameter.

7. The method of claim 1, wherein determining the target uplink channel resource from the uplink channel resources configured by the first configuration or the second configuration comprises at least one of:
in a case where the first configuration is indicated by first DCI, determining the target uplink channel resource from the uplink channel resources configured by the first configuration; and
in a case where the second configuration is indicated by the first DCI, determining the target uplink channel resource from the uplink channel resources configured by the second configuration,
wherein the first DCI is used to indicate the target uplink channel resource.

8. The method of claim 7, wherein the first DCI comprises a first indication field for indicating the first configuration or the second configuration.

9. The method of claim 8, wherein the first indication field is an indication field added in addition to an uplink channel resource indication field, or the first indication field is part of bits of the uplink channel resource indication field.

10. The method of claim 9, wherein the first indication field is part of bits of the uplink channel resource indication field, comprising:
the first indication field is a highest bit or a lowest bit of a physical uplink control channel (PUCCH) resource indicator (PRI) indication field.

11. The method of claim 7, wherein
a DCI format of the first DCI is used to indicate the first configuration or the second configuration; or the DCI format of the first DCI is associated with the first configuration or the second configuration; or a radio network temporary ID sequence (RNTI) for scrambling the first DCI is used to indicate the first configuration or the second configuration; or the RNTI for scrambling the first DCI is associated with the first configuration or the second configuration; or a resource location or resource index of a downlink control resource carrying the first DCI is used to indicate the first configuration or the second configuration; or the resource location or resource index of the downlink control resource carrying the first DCI is associated with the first configuration or the second configuration.

12. The method of claim 1, wherein determining the target uplink channel resource from the uplink channel resources configured by the first configuration or the second configuration comprises:
in a case where the first configuration is indicated by higher layer signaling, determining the target uplink channel resource from the uplink channel resources configured by the first configuration; and/or,
in a case where the second configuration is indicated by the higher layer signaling, determining the target uplink channel resource from the uplink channel resources configured by the second configuration.

13. The method of claim 1, wherein determining the target uplink channel resource from the uplink channel resources configured by the first configuration or the second configuration comprises:
determining the target uplink channel resource from the uplink channel resources configured by the first configuration in a case where the first configuration is used according to provisions of a communication protocol; and/or
determining the target uplink channel resource from uplink channel resources configured by the second configuration in a case where the second configuration is used according to the provisions of the communication protocol.

14. The method of claim 1, wherein the target uplink channel resource is an uplink channel resource used when at least two uplink control information (UCIs) are multiplexed, and at least two uplink channel resources corresponding to the at least two UCIs prior to multiplexing are in a same time unit, or the at least two uplink channel resources overlap.

15. The method of claim 14, wherein determining the target uplink channel resource from the uplink channel resources configured by the first configuration or the second configuration comprises at least one of:
in a case where all the at least two uplink channel resources correspond to the first configuration, determining the target uplink channel resource from the uplink channel resources configured by the first configuration; and
in a case where all the at least two uplink channel resources correspond to the second configuration, determining the target uplink channel resource from the uplink channel resources configured by the second configuration.

16. The method of claim 14 or 15, wherein determining the target uplink channel resource from the uplink channel resources configured by the first configuration or the second configuration comprises at least one of:
in a case where the at least two uplink channel resources correspond to the first configuration and the second configuration, determining the target uplink channel resource from the uplink channel resources configured by the first configuration; or,
in a case where the at least two uplink channel resources correspond to the first configuration and the second configuration, determining the target uplink channel resource from the uplink channel resources configured by the second configuration.

17. The method of claim 14 or 15, wherein determining the target uplink channel resource from the uplink channel resources configured by the first configuration or the second configuration comprises:
when the at least two uplink channel resources correspond to the first configuration and the second configuration, and the at least two uplink channel resources comprise a first uplink channel resource which is dynamically scheduled, determining the target uplink channel resource according to at least one of followings:
a time domain resource type corresponding to the first uplink channel resource; a configuration corresponding to the first uplink channel resource; and second DCI corresponding to the first uplink channel resource.

18. The method of claim 17, wherein when the at least two uplink channel resources correspond to the first configuration and the second configuration, and the at least two uplink channel resources comprise the first uplink channel resource which is dynamically scheduled, determining the target uplink channel resource according to the time domain resource type corresponding to the first uplink channel resource comprises:
when the at least two uplink channel resources correspond to the first configuration and the second configuration, the at least two uplink channel resources comprise the first uplink channel resource which is dynamically scheduled, and the first uplink channel resource is located in the first type of time domain resources, determining the target uplink channel resource from the uplink channel resources configured by the first configuration; and/or
when the at least two uplink channel resources correspond to the first configuration and the second configuration, the at least two uplink channel resources comprise the first uplink channel resource which is dynamically scheduled, and the first uplink channel resource is located in the second type of time domain resources, determining the target uplink channel resource from the uplink channel resources configured by the second configuration.

19. The method of claim 17, wherein when the at least two uplink channel resources correspond to the first configuration and the second configuration, and the at least two uplink channel resources comprise the first uplink channel resource which is dynamically scheduled, determining the target uplink channel resource according to the configuration corresponding to the first uplink channel resource comprises:
when the at least two uplink channel resources correspond to the first configuration and the second configuration, the at least two uplink channel resources comprise the first uplink channel resource which is dynamically scheduled, and the first uplink channel resource corresponds to the first configuration, determining the target uplink channel resource from the uplink channel resources configured by the first configuration; and/or
when the at least two uplink channel resources correspond to the first configuration and the second configuration, the at least two uplink channel resources comprise the first uplink channel resource which is dynamically scheduled, and the first uplink channel resource corresponds to the second configuration, determining the target uplink channel resource from the uplink channel resources configured by the second configuration.

20. The method of claim 17, wherein when the at least two uplink channel resources correspond to the first configuration and the second configuration, and the at least two uplink channel resources comprise the first uplink channel resource which is dynamically scheduled, determining the target uplink channel resource according to the second DCI corresponding to the first uplink channel resource comprises:
when the at least two uplink channel resources correspond to the first configuration and the second configuration, the at least two uplink channel resources comprise the first uplink channel resource which is dynamically scheduled, and the second DCI indicates the first configuration, determining the target uplink channel resource from the uplink channel resources configured by the first configuration; and/or
when the at least two uplink channel resources correspond to the first configuration and the second configuration, the at least two uplink channel resources comprise the first uplink channel resource which is dynamically scheduled, and the second DCI indicates the second configuration, determining the target uplink channel resource from the uplink channel resources configured by the second configuration.

21. The method of claim 20, wherein
a second indication field in the second DCI is for indicating the first configuration or the second configuration; or a DCI format in the second DCI is for indicating the first configuration or the second configuration; or an RNTI for scrambling the second DCI is for indicating the first configuration or the second configuration; or a resource location or resource index carrying the second DCI is for indicating the first configuration or the second configuration.

22. The method of claim 20 or 21, wherein
when the at least two uplink channel resources correspond to the first configuration and the second configuration, the at least two uplink channel resources comprise the first uplink channel resource which is dynamically scheduled, and the second DCI indicates the first configuration, determining the target uplink channel resource from the uplink channel resources configured by the first configuration comprises: when the at least two uplink channel resources correspond to the first configuration and the second configuration, there are at least two first uplink channel resources dynamically scheduled by at least two second DCIs among the at least two uplink channel resources, and last DCI indicates the first configuration, determining the target uplink channel resource from the uplink channel resources configured by the first configuration; and/or
when the at least two uplink channel resources correspond to the first configuration and the second configuration, the at least two uplink channel resources comprise the first uplink channel resource which is dynamically scheduled, and the second DCI indicates the second configuration, determining the target uplink channel resource from the uplink channel resources configured by the second configuration comprises: when the at least two uplink channel resources correspond to the first configuration and the second configuration, there are at least two first uplink channel resources dynamically scheduled by at least two second DCIs among the at least two uplink channel resources, and last DCI indicates the second configuration, determining the target uplink channel resource from the uplink channel resources configured by the second configuration,
wherein the at least two second DCIs correspond to the at least two first uplink channel resources one-to-one, and the last DCI is a last one among the at least two second DCIs.

23. The method of claim 14 or 15, wherein
the terminal device does not expect the at least two uplink channel resources to correspond to different configurations; or, the terminal device expects the at least two uplink channel resources to correspond to a same configuration; or the terminal device expects all the at least two uplink channel resources to correspond to the first configuration; or, the terminal device expects all the at least two uplink channel resources to correspond to the second configuration.

24. The method of any one of claims 1 to 23, wherein
uplink channel resources used for at least one type of signal among a scheduling request (SR), a channel-state information (CSI) report and a semi-persistent scheduling hybrid automatic repeat request acknowledgment (SPS HARQ-ACK) corresponding to the first configuration are the uplink channel resources configured by the first configuration; and/or
uplink channel resources used for at least one type of signal among an SR, a CSI report and an SPS HARQ-ACK corresponding to the second configuration are the uplink channel resources configured by the second configuration.

25. The method of any one of claims 1 to 24, further comprising: receiving the first configuration and the second configuration.

26. The method of claim 25, wherein receiving the first configuration and the second configuration comprises:
receiving a first configuration parameter and receiving a second configuration parameter, wherein the first configuration parameter corresponds to the first configuration and the second configuration parameter corresponds to the second configuration; or
receiving the first configuration parameter and an offset value, wherein the first configuration parameter corresponds to the first configuration, a configuration parameter obtained by offsetting the first configuration parameter based on the offset value corresponds to the second configuration; or
receiving a set of configuration parameters, wherein the set of configuration parameters comprises the first configuration parameter and the second configuration parameter, the first configuration parameter corresponds to the first configuration and the second configuration parameter corresponds to the second configuration.

27. The method of any one of claims 1 to 26, wherein the method is applicable to a time unit comprising the first type of time domain resources and the second type of time domain resources.

28. A method of determining an uplink channel resource, implemented by a terminal device, comprising:
determining a target uplink channel resource from uplink channel resources configured by at least one of a first configuration, a second configuration, and a third configuration,
wherein the third configuration is used to configure related parameters of uplink channel resources in a time unit having a first type of time domain resources and a second type of time domain resources, the first configuration is used to configure related parameters of uplink channel resources in a time unit having the first type of time domain resources, and the second configuration is used to configure related parameters of uplink channel resources in a time unit having the second type of time domain resources.

29. The method of claim 28, wherein determining the target uplink channel resource from the uplink channel resources configured by at least one of the first configuration, the second configuration and the third configuration comprises:
when a time unit in which the target uplink channel resource is located is the first type of time domain resources, determining the target uplink channel resource from the uplink channel resources configured by the first configuration; and/or
when a time unit in which the target uplink channel resource is located is the second type of time domain resources, determining the target uplink channel resource from the uplink channel resources configured by the second configuration; and/or
when a time unit in which the target uplink channel resource is located is the third type time unit, determining the target uplink channel resource from the uplink channel resources configured by the third configuration.

30. The method of claim 28 or 29, wherein
uplink channel resources used for at least one type of signal among a scheduling request (SR), a channel-state information (CSI) report and a semi-persistent scheduling hybrid automatic repeat request acknowledgment (SPS HARQ-ACK) corresponding to the first configuration are the uplink channel resources configured by the first configuration; uplink channel resources used for at least one type of signal among an SR, a CSI report and an SPS HARQ-ACK corresponding to the second configuration are the uplink channel resources configured by the second configuration; uplink channel resources used for at least one type of signal among an SR, a CSI report and an SPS HARQ-ACK corresponding to the third configuration are the uplink channel resource configured by the third configuration.

31. The method of any one of claims 28 to 30, further comprising:
receiving the first configuration and the third configuration; or
receiving the second configuration and the third configuration; or
receiving the first configuration, the second configuration, and the third configuration.

32. The method of any one of claims 28 to 31, wherein the method is applicable to a time unit comprising the first type of time domain resources and the second type of time domain resources.

33. A method of transmitting a resource configuration, implemented by a network device, comprising:
transmitting a first configuration and a second configuration,
wherein the first configuration and the second configuration are used to configure related parameters of uplink channel resources, the first configuration corresponds to a first type of time domain resources, and the second configuration corresponds to a second type of time domain resources.

34. The method of claim 33, wherein transmitting the first configuration and the second configuration comprises:
transmitting a first configuration parameter and transmitting a second configuration parameter, wherein the first configuration parameter corresponds to the first configuration and the second configuration parameter corresponds to the second configuration; or
transmitting the first configuration parameter and an offset value, wherein the first configuration parameter corresponds to the first configuration, and a configuration parameter obtained by offsetting the first configuration parameter based on the offset value corresponds to the second configuration; or
transmitting a set of configuration parameters, wherein the set of configuration parameters comprise the first configuration parameter and the second configuration parameter, the first configuration parameter corresponds to the first configuration and the second configuration parameter corresponds to the second configuration.

35. The method of claim 33 or 34, wherein in the first configuration and the second configuration, associated uplink channel resources correspond to a same time domain resource configuration.

36. The method of claim 35, wherein
the associated uplink channel resources correspond to a same uplink channel resource identification (ID); or, the associated uplink channel resources correspond to two uplink channel resource IDs having a pre-agreed correspondence relationship.

37. The method of claim 33, wherein the related parameters do not comprise a time domain resource parameter.

38. The method of claim 33, further comprising:
transmitting first downlink control information (DCI) for indicating the first configuration or the second configuration and indicating a target uplink channel resource to be used by a terminal device.

39. The method of claim 38, wherein the first DCI comprises a first indication field for indicating the first configuration or the second configuration.

40. The method of claim 39, wherein the first indication field is an indication field added in addition to an uplink channel resource indication field, or the first indication field is part of bits of the uplink channel resource indication field.

41. The method of claim 40, wherein the first indication field is part of bits of the uplink channel resource indication field, comprising:
the first indication field is a highest bit or a lowest bit of a physical uplink control channel (PUCCH) resource indicator (PRI) indication field.

42. The method of claim 38, wherein
a DCI format of the first DCI is used to indicate the first configuration or the second configuration; or the DCI format of the first DCI is associated with the first configuration or the second configuration; or a radio network temporary ID sequence (RNTI) for scrambling the first DCI is used to indicate the first configuration or the second configuration; or the RNTI for scrambling the first DCI is associated with the first configuration or the second configuration; or a resource location or resource index of a downlink control resource carrying the first DCI is used to indicate the first configuration or the second configuration; or the resource location or resource index of the downlink control resource carrying the first DCI is associated with the first configuration or the second configuration.

43. The method of claim 33, further comprising:
transmitting higher layer signaling to a terminal device, the higher layer signaling indicating the first configuration or the second configuration.

44. The method of any one of claims 33 to 43, wherein the first configuration or the second configuration is used for a terminal device to determine a target uplink channel resource to be used;
the target uplink channel resource is an uplink channel resource used when at least two uplink control information (UCIs) of the terminal device are multiplexed, and at least two uplink channel resources corresponding to the at least two UCIs prior to multiplexing are in a same time unit, or the at least two uplink channel resources overlap.

45. The method of claim 44, wherein the at least two uplink channel resources comprise a first uplink channel resource which is dynamically scheduled;
the method further comprises:
transmitting second DCI for indicating the first configuration or the second configuration corresponding to the target uplink channel resource and for indicating the first uplink channel resource.

46. The method of claim 45, wherein the second DCI is used to indicate the first configuration or the second configuration corresponding to the target uplink channel resource, comprising:
a time domain resource type corresponding to the first uplink channel resource indicated by the second DCI is the same as a time domain resource type corresponding to the target uplink channel resource, or a configuration corresponding to the first uplink channel resource is the same as a configuration corresponding to the target uplink channel resource.

47. The method of claim 45, wherein
a second indication field in the second DCI is for indicating the first configuration or the second configuration; or a DCI format in the second DCI is for indicating the first configuration or the second configuration; or an RNTI for scrambling the second DCI is for indicating the first configuration or the second configuration; or a resource location or resource index carrying the second DCI is for indicating the first configuration or the second configuration.

48. The method of any one of claims 45 to 47, wherein transmitting the second DCI for indicating the first configuration or the second configuration corresponding to the target uplink channel resource comprises:
in a case where at least two first uplink channel resources are dynamically scheduled by at least two second DCIs, transmitting last DCI for indicating the first configuration or the second configuration, wherein the last DCI is a last one among the at least two second DCIs.

49. The method of any one of claims 33 to 48, further comprising:
determining, from the uplink channel resources configured by the first configuration or the second configuration, a target uplink channel resource to be used by a terminal device.

50. The method of claim 49, wherein determining, from the uplink channel resources configured by the first configuration or the second configuration, the target uplink channel resource to be used by the terminal device comprises:
determining, from the uplink channel resources configured by the first configuration, the target uplink channel resource to be used by the terminal device in a case where the first configuration is used according to provisions of a communication protocol; and/or
determining, from the uplink channel resources configured by the second configuration, the target uplink channel resource to be used by the terminal device in a case where the second configuration is used according to the provisions of the communication protocol.

51. The method of claim 49, wherein determining, from the uplink channel resources configured by the first configuration or the second configuration, the target uplink channel resource to be used by the terminal device comprises at least one of:
in a case where all the at least two uplink channel resources correspond to the first configuration, determining the target uplink channel resource to be used by the terminal device from the uplink channel resources configured by the first configuration; and
in a case where all the at least two uplink channel resources correspond to the second configuration, determining the target uplink channel resource to be used by the terminal device from the uplink channel resources configured by the second configuration.

52. The method of claim 49, wherein determining, from the uplink channel resources configured by the first configuration or the second configuration, the target uplink channel resource to be used by the terminal device comprises at least one of:
in a case where at least two uplink channel resources correspond to the first configuration and the second configuration, determining the target uplink channel resource to be used by the terminal device from the uplink channel resources configured by the first configuration; or,
in a case where the at least two uplink channel resources correspond to the first configuration and the second configuration, determining the target uplink channel resource to be used by the terminal device from the uplink channel resources configured by the second configuration.

53. The method of any one of claims 33 to 52, wherein
a terminal device does not expect at least two uplink channel resources to correspond to different configurations; or, the terminal device expects the at least two uplink channel resources to correspond to a same configuration; or the terminal device expects all the at least two uplink channel resources to correspond to the first configuration; or, the terminal device expects all the at least two uplink channel resources to correspond to the second configuration.

54. The method of any one of claims 33 to 53, wherein
uplink channel resources used for at least one type of signal among a scheduling request (SR), a channel-state information (CSI) report and a semi-persistent scheduling hybrid automatic repeat request acknowledgment (SPS HARQ-ACK) corresponding to the first configuration are the uplink channel resources configured by the first configuration; and/or
uplink channel resources used for at least one type of signal among an SR, a CSI report and an SPS HARQ-ACK corresponding to the second configuration are the uplink channel resources configured by the second configuration.

55. The method of any one of claims 33 to 54, wherein the method is applicable to a time unit comprising the first type of time domain resources and the second type of time domain resources.

56. A method of transmitting a resource configuration, implemented by a network device, comprising:
transmitting a third configuration,
wherein the third configuration is used to configure related parameters of uplink channel resources in a time unit having a first type time domain resources and a second type of time domain resources.

57. The method of claim 57, wherein
uplink channel resources used for at least one type of signal among a scheduling request (SR), a channel-state information (CSI) report and a semi-persistent scheduling hybrid automatic repeat request acknowledgment (SPS HARQ-ACK) corresponding to the third configuration are the uplink channel resource configured by the third configuration.

58. The method of claim 57 or 58, further comprising:
transmitting the first configuration and/or the second configuration,
wherein the first configuration corresponds to the first type of time domain resources, and the second configuration corresponds to the second type of time domain resources.

59. The method of claim 57, wherein
uplink channel resources used for at least one type of signal among an SR, a CSI report and an SPS HARQ-ACK corresponding to a first configuration are uplink channel resources configured by the first configuration; and/or
uplink channel resources used for at least one type of signal among an SR, a CSI report and an SPS HARQ-ACK corresponding to a second configuration are uplink channel resources configured by the second configuration.

60. The method of claim 57, further comprising:
determining, from uplink channel resources configured by at least one of a first configuration, a second configuration and the third configuration, a target uplink channel resource to be used by a terminal device,
wherein the first configuration corresponds to the first type of time domain resources, and the second configuration corresponds to the second type of time domain resources.

61. An apparatus of determining an uplink channel resource, comprising:
a determining module, configured to determine a target uplink channel resource from uplink channel resources configured by a first configuration or a second configuration,
wherein the first configuration and the second configuration are used to configure related parameters of the uplink channel resources, the first configuration corresponds to a first type of time domain resources, and the second configuration corresponds to a second type of time domain resources.

62. An apparatus of determining an uplink channel resource, comprising:
a determining module, configured to determine a target uplink channel resource from uplink channel resources configured by at least one of a first configuration, a second configuration, and a third configuration,
wherein the third configuration is used to configure related parameters of the uplink channel resources in a time unit having a first type of time domain resources and a second type of time domain resources, the first configuration is used to configure related parameters of the uplink channel resources in a time unit having the first type of time domain resources, and the second configuration is used to configure related parameters of the uplink channel resources in a time unit having the second type of time domain resources.

63. An apparatus of transmitting a resource configuration, comprising:
a transmitting module, configured to transmit a first configuration and a second configuration,
wherein the first configuration and the second configuration are used to configure related parameters of uplink channel resources, the first configuration corresponds to a first type of time domain resources, and the second configuration corresponds to a second type of time domain resources.

64. An apparatus of transmitting a resource configuration, comprising:
a transmitting module, configured to transmit a third configuration,
wherein the third configuration is used to configure related parameters of uplink channel resources in a time unit having a first type time domain resources and a second type of time domain resources.

65. A terminal device, comprising: a processor; a transceiver coupled to the processor; and a memory for storing executable instructions of the processor,
wherein the processor is configured to load and execute the executable instructions to implement the method of determining an uplink channel resource according to any one of claims 1 to 27, or the method of determining an uplink channel resource according to any one of claims 28 to 32.

66. A network device, comprising: a processor; a transceiver coupled to the processor; and a memory for storing executable instructions of the processor,
wherein the processor is configured to load and execute the executable instructions to implement the method of transmitting a resource configuration according to any one of claims 33 to 55, or the method of transmitting a resource configuration according to any one of claims 56 to 60.

67. A computer-readable storage medium, having stored thereon at least one program loaded and executed by a processor to implement the method of determining an uplink channel resource according to any one of claims 1 to 27, or the method of determining an uplink channel resource according to any one of claims 28 to 32, or the method of transmitting a resource configuration according to any one of claims 33 to 55, or the method of transmitting a resource configuration according to any one of claims 56 to 60.

68. A chip, comprising programmable logic circuitry and/or program instructions for implementing the method of determining an uplink channel resource according to any one of claims 1 to 27, or the method of determining an uplink channel resource according to any one of claims 28 to 32, or the method of transmitting a resource configuration according to any one of claims 33 to 55, or the method of transmitting a resource configuration according to any one of claims 56 to 60 when the chip is running on a terminal device or a network device.

69. A computer program product, comprising computer instructions stored in a computer-readable storage medium from which the computer instructions are obtained by a processor and executed to implement the method of determining an uplink channel resource according to any one of claims 1 to 27, or the method of determining an uplink channel resource according to any one of claims 28 to 32, or the method of transmitting a resource configuration according to any one of claims 33 to 55, or the method of transmitting a resource configuration according to any one of claims 56 to 60.
